(19) **Europäisches Patentamt**
**European Patent Office**
**Office européen des brevets**

(11) **EP 2 302 439 A1**

(12) **EUROPEAN PATENT APPLICATION**

(43) Date of publication:
**30.03.2011 Bulletin 2011/13**

(51) Int Cl.:
*G02B 26/02* (2006.01)    *G02B 27/54* (2006.01)
*G02B 3/14* (2006.01)    *H04N 5/74* (2006.01)
*H04N 9/31* (2006.01)    *H01J 29/12* (2006.01)

(21) Application number: **10010516.2**

(22) Date of filing: **22.12.2000**

(84) Designated Contracting States:
**AT BE CH CY DE DK ES FI FR GB GR IE IT LI LU MC NL PT SE TR**

(30) Priority: **23.12.1999 GB 9930555**

(62) Document number(s) of the earlier application(s) in accordance with Art. 76 EPC:
**08016546.7 / 2 000 828**
**00985693.1 / 1 244 928**

(27) Previously filed application:
**22.12.2000 EP 08016546**

(71) Applicant: **Longevyty AS**
**3189 Horten (NO)**

(72) Inventor: **Guscho, Yury**
**3189 Horten (NO)**

(74) Representative: **Butler, Michael John**
**Dehns**
**St Bride's House**
**10 Salisbury Square**
**London**
**EC4Y 8JD (GB)**

Remarks:
This application was filed on 24.09.2010 as a divisional application to the application mentioned under INID code 62.

(54) **Optical systems**

(57) An optical system includes an optical element (14) which comprises at least one cell (1) comprising two deformable dielectric layers (4, 5) which meet at an interface, at least one of which (5) is a relief forming gel, a first electrode (6) on one side of the layers and signal electrode (3) on the other side of the layers, and means for supplying a signal to the signal electrode to create a relief to modulate light from the light source. Compensating means are provided so as to control the voltage difference between the first electrode and the signal electrode for a desired signal and provide the modulator with desired output characteristics, the compensating means being dynamic and comprising a feedback system (19) which measures light output intensity for given signals.

FIG. 5

**Description**

This invention relates to optical systems, such as systems used in the projection of video images, the recording of video information on photosensitive carriers, optical processing, the display of video information, and illumination engineering. The invention is particularly concerned with light modulators used in optical systems, including their structures, methods of manufacture, and use.

The invention is more particularly concerned with flexible optical systems using light modulators which rely upon the creation of a surface relief under the action of an electric field. Such modulators have been known for many years, and for example in 1939 F. Fischer disclosed an "electro-optical transformer" using an oil layer and Schlieren optics. More recently, consideration has been given to modulators which rely upon the creation of a relief on a gel of a suitable non-polar dielectric material, such as a siloxane gel. A comprehensive discussion of such systems can be found in the book "Physics of Reliefography" by Professor Yuri Guscho published in Moscow in 1999, ISBN 5-8213-0039-8. Various proposals can be found in United States patents 4,626,920, 4,857,978 and 4,900,136, as well in Russian Federation patents 2031624, 2078478 and 2080641.

A light modulator which has been found to be successful comprises two deformable dielectric layers of different refractive coefficients, at least one of which is a gel. Typically the other layer may be air. Electrodes are provided either side of the layers, and reliefs are generated at the interface between the two layers in response to applied signals.

Polyorganosiloxane gels are particularly preferred for use as the gel layer in such modulators. One suitable gel is prepared by adding tetraethoxysilane, as a cross linking agent, and tin diethyldicaprylate, as a catalyst, to a solution of a $\alpha,\omega$-dihydroxypolydimethylsiloxane of general formula :

$$HO-Si(CH_3)_2O[-SiO(CH_3)_2-]_nSi(CH_3)_2-OH$$

in a polydimethylsiloxane of general formula :

$$(CH_3)_3SiO[-SiO(CH_3)_2-]_nSi(CH_3)_3$$

Such a gel has several advantages. It is transparent, flexible, and has good optical properties. It exhibits good response times in the formation of reliefs. It is stable and can withstand high temperatures.

A method of preparing such a polyorganosiloxane gel is disclosed, for example, in Russian Federation patent application 97108886/04 published in the Bulletin of Inventions No. 12 of 1999.

According to one aspect of an invention disclosed herein, there is provided a light modulator comprising at least one cell which has two deformable dielectric layers which meet at an interface, at least one of which is a relief forming gel, a first electrode on one side of the layers and a signal electrode on the other side of the layers to which signal pulses are to be applied, wherein the following criteria are met:

$$0.01d_1 < d_2 < d_1$$
$$d_2 > \lambda / (20 \mid \eta_1 - \eta_2 \mid)$$
$$\mid \eta_1 - \eta_2 \mid > 0.1$$
$$t_\rho > 0.01 \, \tau_m$$
$$0.1d_1 < L < 10 \, d_1$$

in which $d_2$ is the distance between the signal electrode and the interface between the deformable layers; $d_1$ is the distance between the first electrode and the interface between the deformable layers; $\lambda$ is the wavelength of light with which the modulator is to be used; $\eta_1$ is the refractive coefficient of one of the deformable layers; $\eta_2$ is the refractive coefficient of the other of the deformable layers; $t_\rho$ is the duration of voltage pulses to be applied to the signal electrodes; $\tau_m$ is the time constant of mechanical relaxation of the relief formed at the interface between the layers; and L is the minimum dimension of a single signal electrode in a direction parallel to the layers or, in the case of a plurality of cells, the minimum spatial period between electrodes in adjacent cells.

Viewed from another aspect of this invention there is provided a method of designing a modulator as set out above, in which the values of the parameters $d_1$, $d_2$, $\lambda$, $\eta_1$, $\eta_2$, $t_\rho$, $\tau_m$ and L are determined to satisfy the criteria set out. Viewed from another aspect of this invention there is provided a method of manufacturing a modulator which has been designed by such a method, and viewed from a still further aspect there is provided a modulator manufactured by such a method.

By the use of this invention it is possible to design a modulator which will work effectively under a wide range of conditions and can be used in a wide range of applications.

In the manufacture of a modulator, various problems present themselves in connection with the formation of the gel.

In a system in accordance with Russian Federation patent application 97108886/04 the reaction mixture is agitated with an electromechanical stirrer and poured onto a transparent horizontal substrate coated with a conducting layer with subsequent application of a second substrate over the said layer at a predetermined distance from the first substrate. This is followed by solidification of the reaction mixture and separation of the upper substrate from the surface of the deformable gel layer; the lower substrate is pre-coated with a substance which increases the adhesion of the deformable gel layer to the lower substrate. Portions of the reaction mixture are poured into different points on the lower substrate 10 to 15. minutes before the gel point is reached.

Experiments have established that the disadvantages of conventionally used procedures are as follows:

(i) Low quality of gel layers. According to the available experimental data, about 10-30% of the gel adheres to the upper substrate in the course of separation which not only spoils its surface but also makes it unsuitable for use in reliefographic devices;

(ii) It is difficult to predict, with a sufficiently high degree of precision, the instant when the reaction mixture has to be, because in each concrete case the preparation of a gel from a reaction mixture with the same concentration of components and under identical atmospheric conditions (temperature, humidity, pressure) requires additional experiment;

(iii) The upper substrate should be separated from the gel and the lower substrate only after the crosslinking of the greater part of the polymeric molecules within the reaction mixture has been completed. Otherwise, the deformable gel layer will partially adhere to the upper substrate;

(iv) The known method does not take account of the fact that complete formation of a polymeric net requires a humid atmosphere around the surface of the deformable gel layer; and

(v) The quality of the gel layer strongly depends on the amount of dust present in the air which can contact the gel.

For the preferred polyorganosiloxane gels specified above, the components will be mixed together in appropriate quantities. For example, in one preferred method of preparing the specific gel mentioned, tetraethoxysilane and tin diethyldicaprylate will be added to a 10-30% solution of $\alpha,\omega$-dihydroxypolydimethylsiloxane having a molar mass of $(1-2) \cdot 10^4$ g/mol in polydimethylsiloxane having a molar mass of $(0.6-1) \cdot 10^3$ g/mol, at the 1:0.8-1:1.5 and 1:2-1:5 $\alpha,\omega$-dihydroxypolydimethylsiloxane / tin diethyldicaprylate and $\alpha,\omega$-dihydroxypolydimethylsiloxane / tetraethoxysilane molar ratios. The mixture is agitated until it thickens somewhat, and then it is poured onto a substrate. If the mixture is poured onto the substrate too soon after addition of the catalyst and cross linking agent, it may flow in an undesired fashion. If pouring is left until too close to the gel point, it will be too difficult to pour the mixture.

According to one aspect of an invention disclosed herein, there is provided a method of manufacturing a gel for use in a light modulator in which electrical signals will be used to create a relief on the gel, in which a cross linking agent and, if required, a catalyst are added to a solution of a cross-linkable polysiloxane in a polysiloxane, and after the mixture has thickened it is poured onto a substrate, wherein the viscosity of the mixture is permitted to rise to a value in the range of between four and six times that at the time of adding the cross linking agent, before being poured.

Preferably the viscosity is permitted to rise by approximately five times.

Viewed from another aspect of this invention there is provided a method of manufacturing a gel for use in a light modulator in which electrical signals will be used to create a relief on the gel, in which a cross linking agent and, if required, a catalyst are added to a solution of a cross-linkable polysiloxane in a polysiloxane, and after the mixture has thickened it is poured onto a substrate, wherein the viscosity of the mixture is permitted to rise to a value of at least four times that at the time of adding the cross linking agent, whilst not reaching the gel point, before being poured. Preferably the viscosity is permitted to rise by at least five times.

In one manner of carrying out this invention, the viscosity is measured and pouring carried out when the viscosity is measured to have reached the desired level. Such a method is more accurate than working to a particular time which has been established by previous experiment, so that it is possible to ensure satisfactory results despite any variations in temperature, humidity or other conditions which could affect the time at which the optimum viscosity is reached. However, if conditions can be controlled it may be possible to work to a time which has been ascertained by previous measurement of the time necessary to achieve the desired viscosity under the same conditions.

Thus, viewed from another aspect of this invention there is provided a method of manufacturing a gel for use in a light modulator in which electrical signals will be used to create a relief on the gel, in which a cross linking agent and, if required, a catalyst are added to a solution of a cross-linkable polysiloxane in a polysiloxane under predetermined environmental conditions, the viscosity of the mixture is measured and the time recorded for the viscosity to rise to a value in the range of between four and six times that at the time of adding the cross linking agent, and subsequently the cross linking agent and, if required, catalyst are added to the same solution of a cross-linkable polysiloxane in a polysiloxane in the same concentrations and under substantially the same environmental conditions, and allowed to thicken for the recorded time before being poured onto a substrate.

Preferably, the time recorded is for the viscosity to rise by approximately five times.

Viewed from another aspect of this invention there is provided a method of determining the time for which a gel forming mixture must be left before pouring in the manufacture of a gel for use in a light modulator in which electrical signals will be used to create a relief on the gel, in which a cross linking agent and, if required, a catalyst are added to a solution of a cross-linkable polysiloxane in a polysiloxane under predetermined environmental conditions, the viscosity of the mixture is measured and the time recorded for the viscosity to rise to a predetermined level. The predetermined level may be in the range of four to six, and preferably is approximately five.

In an alternative method, the mixture could be used in a less viscous form and drawn between two substrates under capillary action. Thus, according to one aspect of another invention disclosed herein, there is provided a method of manufacturing a gel for use in a light modulator in which electrical signals will be used to create a relief on the gel, in which a cross linking agent and, if required, a catalyst are added to a solution of a cross-linkable polysiloxane in a polysiloxane, the viscosity of the mixture is permitted to rise to a value not exceeding that at which the mixture can be drawn between two substrates under capillary action. In one possible method, the viscosity is measured and pouring carried out when the viscosity is measured to have reached the desired level.

A second problem concerns the length of time for which the mixture should be left between two substrates, either when it is drawn between them by capillary action or when it is poured onto one substrate and then covered by a second substrate. Usually one of the substrates is removed from the gel and it is important that the gel surface mimics in every detail the surface of the removed substrate. If separation takes place too soon, there will be damage to the surface of the gel. However, it is unnecessarily time-consuming to leave the gel for a significant period, such as several days, such that there could be no doubt that separation could take place.

Viewed from one aspect another invention disclosed herein provides a method of determining the minimum elapsed time for which a gel may left to develop between two substrates before removal of one of the substrates, so as to provide a gel suitable for use in a light modulator in which electrical signals will be used to create a relief on the gel, in which a cross linking agent and, if required, a catalyst are added to a solution of a cross-linkable polysiloxane in a polysiloxane under predetermined environmental conditions, and in predetermined concentrations of the components, measurements are made of the time necessary to create a relief under the application of an electrical signal, and the minimum elapsed time is calculated as the elapsed time at which the relief formation time is three times the formation time when the gel is fully developed.

As a gel develops, for example after being placed on a single substrate, under the application of an applied electrical signal the time taken for a relief to form will gradually decrease. Eventually, the time will remain constant and at this time it is known that the gel has developed fully. In accordance with this particular invention, the minimum period for development during manufacture, when the gel is between two substrates, is calculated as the elapsed time for the relief formation time to be three times the constant relief formation time. By plotting the relief formation time against elapsed time, it is possible to determine this elapsed time.

Viewed from another aspect of this invention there is provided a method of manufacturing a gel for use in a light modulator in which electrical signals will be used to create a relief on the gel, in which a cross linking agent and, if required, a catalyst are added to a solution of a cross-linkable polysiloxane in a polysiloxane, the mixture is placed between two substrates, and a gel is permitted to develop before one of the substrates is removed, wherein removal of the substrate takes place prior to full development of the gel, but no earlier than the elapsed time at which the formation time for a relief under the action of an applied electrical signal is three times the relief formation time when the gel is fully developed.

Thus, in accordance with this aspect of the invention it is not necessary to wait for full development of the gel. Separation of the substrate can be effected at an earlier time whilst still achieving a perfect surface on the gel. It may of course be necessary to take certain precautions, such as ensuring that no torsional forces are applied and that all removal forces are perpendicular to the surface of the gel.

According to one aspect of another invention disclosed, there is provided a method of manufacturing a gel for use in a light modulator in which electrical signals will be used to create a relief on the gel, in which a cross linking agent and, if required, a catalyst are added to a solution of a cross-linkable polysiloxane in a polysiloxane, the mixture is placed between two substrates, a gel is permitted to develop, and one of the substrates is removed, wherein between the gel and the substrate to be removed there is provided a metal or metal oxide layer to reduce adhesion of the gel to the substrate.

The layer could for example be nickel, chromium, titanium, titanium oxide, molybdenum oxide, Ta or $Ta_2O_5$. Its thickness could be in the range of about 0.1 - 1 $\mu$m, and for example about 0.1 - 0.3 $\mu$m. The main requirements are that it should be of a sufficient thickness to ensure that it is homogeneous. It may be applied by any suitable manner, such as by vapour deposition.

According to one aspect of an invention disclosed herein, there is provided a method of manufacturing a gel for use in a light modulator in which electrical signals will be used to create a relief on the gel, in which a cross linking agent and, if required, a catalyst are added to a solution of a cross-linkable polysiloxane in a polysiloxane, the mixture is placed between two substrates, and a gel is permitted to develop before one of the substrates is removed, wherein removal of the substrate takes place after development of the gel but before completion of cross linking, and the gel is exposed to gas of at least 20% humidity whilst cross linking is completed. The gas may be air or an inert gas, although of course water vapour will be present.

According to one aspect of another invention disclosed herein, there is provided a method of manufacturing a gel for use in a light modulator in which electrical signals will be used to create a relief on the gel, in which a cross linking agent and, if required, a catalyst are added to a solution of a cross-linkable polysiloxane in a polysiloxane, the mixture is placed between two substrates, and a gel is permitted to develop before one of the substrates is removed, wherein after removal of the substrate the gel is protected by an atmosphere of an inert gas.

According to one aspect of a still further invention disclosed herein, there is provided a method of manufacturing a gel for use in a light modulator in which electrical signals will be used to create a relief on the gel, in which a cross linking agent and, if required, a catalyst are added to a solution of a cross-linkable polysiloxane in a polysiloxane, the mixture is placed between two substrates, and a gel is permitted to develop before one of the substrates is removed, wherein during and after removal of the substrate the gel is not exposed to an atmosphere where the density of dust particles of 0.2 $\mu$m or more exceeds twenty per litre of gas. The gas may be air or an inert gas, and may contain water vapour.

In all of the inventions and aspects set forth above, the preferred cross-linkable polysiloxane is $\alpha,\omega$-dihydroxypolydimethylsiloxane of general formula :

$$HO-Si(CH_3)_2O[-SiO(CH_3)_2-]_nSi(CH_3)_2-OH$$

The preferred polysiloxane is a polydimethylsiloxane of general formula :

$$(CH_3)_3SiO[-SiO(CH_3)_2-]_nSi(CH_3)_3$$

The preferred cross linking agent is tetraethoxysilane, and the preferred catalyst is tin diethyldicaprylate.

Preferably the $\alpha,\omega$-dihydroxypolydimethylsiloxane is in the polydimethylsiloxane as a 10 - 30% solution, and for example a 15% solution. Preferably, the methods use $\alpha,\omega$-dihydroxypolydimethylsiloxane having a molar mass of $(1-2)\cdot10^4$ g/mol in polydimethylsiloxane having a molar mass of $(0.6-1)\cdot10^3$ g/mol, at the 1:0.8-1:1.5 and 1:2-1:5 $\alpha,\omega$-dihydroxy-polydimethylsiloxane / tin diethyldicaprylate and $\alpha,\omega$-dihydroxypolydimethylsiloxane / tetraethoxysilane molar ratios.

Preferably, in a system in which the gel is to remain adhered to one substrate after development, there is provided between the gel and that substrate a layer of a substance which will increase adhesion of the gel to the substrate, such as a polycarboarylenesiloxane film.

As well as the aspects of the inventions set out above, the inventions also extend to gels in accordance with the methods, to modulators incorporating the gels, and to optical systems incorporating the modulators. The methods may be used alone or in various combinations in the design and manufacture of a gel and a modulator incorporating the gel. Thus, an invention disclosed herein comprises a light modulator comprising at least one cell which has two deformable dielectric layers which meet at an interface, at least one of which is a relief forming gel, a first electrode on one side of the layers and a signal electrode on the other side of the layers to which signal pulses are to be applied, wherein the following criteria are met:

$$0.01d_1 < d_2 < d_1$$
$$d_2 > \lambda / (20 \mid \eta_1 - \eta_2 \mid)$$
$$\mid \eta_1 - \eta_2 \mid > 0.1$$
$$t_\rho > 0.01 \ \tau_m$$
$$0.1d_1 < L < 10 \ d_1$$

in which $d_2$ is the distance between the signal electrode and the interface between the deformable layers; $d_1$ is the distance between the first electrode and the interface between the deformable layers; $\lambda$ is the wavelength of light with which the modulator is to be used; $\eta_1$ is the refractive coefficient of one of the deformable layers; $\eta_2$ is the refractive coefficient of the other of the deformable layers; $t_\rho$ is the duration of voltage pulses to be applied to the signal electrodes; $\tau_m$ is the time constant of mechanical relaxation of the relief formed at the interface between the layers; and L is the minimum dimension of a single signal electrode in a direction parallel to the layers or, in the case of a plurality of cells, the minimum spatial period between electrodes in adjacent cells.

In order to simplify the production technology, the first electrodes in all cells of a light modulator may be constituted by a common support electrode, while the deformable gel layers in all cells may be constituted by a common deformable gel layer.

One problem with light modulators using relief forming gels, is that the grey scale characteristics may not be ideal. The dependence of output light intensity on the voltage applied to a signal electrode may be S-shaped for example. There may be other factors which result in output characteristics being non-ideal.

In accordance with one aspect of another invention disclosed herein, there is provided a light modulator comprising a cell which has two deformable dielectric layers which meet at an interface, at least one of which is a relief forming gel, a first electrode on one side of the layers and a signal electrode on the other side of the layers to which voltage pulses are to be applied in accordance with desired signals, wherein compensating means are provided so as to control the voltage difference between the first electrode and the signal electrode for a desired signal and provide the modulator with desired output characteristics, the compensating means being dynamic and comprising a feedback system which measures light output intensity for given signals.

The compensating means could operate by adjusting the voltage of a pulse applied in accordance with a particular signal. Alternatively, a bias voltage applied to the first electrode could be altered, the end effect being equivalent as far as compensation is concerned, namely that the voltage between the two electrodes will be altered.

For example, if there are 256 possible grey levels at a digital signal level, ranging from 0 to 255, there could be 256 evenly spaced voltage levels without any grey scale correction. Signal levels of 0 to 255 would simply result in the corresponding voltages being applied. That would normally provide unacceptable results in view of the grey scale characteristics of gel based modulators. It is possible to provide a static grey scale correction system in which a lookup table, stores the appropriate voltage level for a particular signal level, in a non-linear manner according to any desired profile. In accordance with this particular invention, however, a feedback system is provided which permits dynamic grey scale correction. If the measured light intensity output for a particular signal does not match the expected intensity, then adjustments can be made dynamically to the voltage level for that particular signal level. In this manner, fluctuations in the grey scale characteristics of the gel based modulator, for example caused by environmental changes such as temperature, can be accounted for. The desired characteristic need not be linear, and can follow any desired profile.

However, the invention is not restricted to compensation for undesirable grey scale characteristics. Other factors are colorimetric characteristics, spatial-frequency effects and time-frequency effects. An image has four essential characteristics, namely grey scale, spatial frequency, time frequency and colorimetric. All of them can be accounted for by means of the feedback system.

The colorimetric characteristics of a modulator concern the relationship between the light output intensity and the wavelength at a given amplitude of electric pulses applied to the signal electrodes. An increase in the phase of a light wave reflecting from the interface between the deformable layers depend on the wavelength. This implies that for the same depth of relief and at the same amplitude of input electrical signals, the output light intensities will be different for different wavelengths. By varying the pulse voltage of the input signals it is possible to change the ratio between the parameters. Thus, for example, at different wavelengths the signal voltage could be adjusted to ensure that the output intensities are the same.

Time frequency characteristics concern the relationship between output light intensity and the time frequency of the input signal pulses. Typically, with an increase in time frequency characteristics, the output light intensity, which is nearly constant at first, gradually declines from a certain upper level $f_{upper}$ to zero. The value of $f_{upper}$ depends both on the chemical composition of the deformable layers and the geometric size of the modulator. One possible mode of correction is to increase the amplitude of the signal pulses in accordance with commands from the feedback system, at frequencies where there would normally be a decline in intensity. Thus, if there is a decline it will occur at frequencies above $f_{upper}$.

Spatial frequency characteristics concern the relationship between output light intensity and the spatial frequency characteristics of a, typically sinusoidal, relief at a given amplitude of input signal pulses. Typically, with an increase in relief period the output light intensity will increase from zero to a maximum level corresponding to an optimum period $T_{opt}$, with a subsequent gradual decline to zero. A possible approach to correction in accordance with the invention is to make the feature more rectangular, for example by increasing the amplitude of the input electrical signals, in accordance with commands from the feedback system, when the relief period is greater or less than $T_{opt}$.

A typical modulator system comprises the following components: a light source, a condenser, first diaphragm means, an illuminant objective, a light modulator with the deformable gel layers, a projection objective, and second diaphragm means placed before or behind the projection objective. The first and second diaphragm means may be provided by separate physical items, or may be provided by a single item. If a light modulator utilizes a thermal light source, the efficient size of its radiating element may be so large that efficient focusing at the second diaphragm will be inevitably associated with considerable light losses. To prevent this, in accordance with another invention disclosed herein a single- or a multicomponent lens raster whose focal plane coincides with that of the first diaphragm is placed between the condenser and the first diaphragm. The introduction of a raster is equivalent to the splitting of the single light source with a bulky radiating element into several independent light sources of lower power and a smaller effective size of the luminous element. Thus viewed from one aspect of another invention disclosed, there is provided an optical system comprising a light source, first diaphragm means, an illuminant objective, a light modulator, a projection objective, and second diaphragm means placed before or behind the projection objective, wherein the light modulator comprises a cell which has two deformable dielectric layers which meet at an interface, at least one of which is a relief forming gel, a first electrode on one side of the layers and a signal electrode on the other side of the layers to which voltage pulses are to be applied in accordance with desired signals, and wherein lens raster whose focal plane coincides with that of the first diaphragm means is placed between the condenser and the first diaphragm means.

In accordance with another invention disclosed herein, in order to reduce the number of lenses in a system utilising a gel based modulator, the modulator itself can perform a focussing function. Thus, there is provided a light modulator comprising a cell which has two deformable dielectric layers which meet at an interface, at least one of which is a relief forming gel, a first electrode on one side of the layers and a signal electrode on the other side of the layers to which voltage pulses are to be applied in accordance with desired signals, the electrodes being provided on dielectric substrates, wherein the interface between the deformable layers is curved and at least one of the substrates is transparent and is also curved, so that the modulator can focus light. In one arrangement the modulator may be shaped as a curved cylindrical, spherical or other surface, whilst the or each dielectric substrate serves as a single- or multicomponent objective. In one arrangement the modulator transmits light, and in another it reflects light.

Another advantage of a curved interface between the deformable layers is that it enables the reduction or elimination of distortion of projected images even when a planar screen is used.

In order to minimize light losses by elements of the first diaphragm, the optical axis of the light source and the condenser may be placed at an angle to the main optical axis and the first diaphragm may be made in the form of reflecting elements. These elements can be made in the form of reflective mirrors. In this case, the position of the mirrors and their tilting should be such that the whole quantity of the light emitted by the light source will be deflected by the mirrors and sent to the light modulator. Alternatively, the reflective mirrors can be made in the form of a set of total internal reflection prisms. In this case, the light is absorbed exclusively during its passage through the glass, being reflected from the prism's legs, while the loss of the light reflected from the hypotenusal faces of the prisms is virtually zero.

In actual practice, lenses and other optical elements may contain some internal micro inhomogeneities such as bubbles. Furthermore their surfaces, and the interface between the deformable layers in the light modulator may be covered with dust which causes diffusion of the incident light. In the absence of a relief, i.e., in the absence of signal electrode voltage, some part of the light flux will bypass the second diaphragm. This will be transferred to the output optical signal receptor, and will worsen the image contrast. To exclude excessive background light, in accordance with another invention disclosed herein some elements of an adaptive amplitude filter for absorption of Fourier-transformation images of the noise are placed in the plane of the second diaphragm, in the spaces between the elements. Thus, according to this invention there is provided an optical system comprising a light source, first diaphragm means, an illuminant objective, a light modulator, a projection objective, and second diaphragm means placed before or behind the projection objective, wherein the light modulator comprises a cell which has two deformable dielectric layers which meet at an interface, at least one of which is a relief forming gel, a first electrode on one side of the layers and a signal electrode on the other side of the layers to which voltage pulses are to be applied in accordance with desired signals, and wherein a filter for the absorption of Fourier transformation images of optical noise is placed in the plane of the second diaphragm means.

As noted above, the first and second diaphragm means may be provided by a single physical item. Such an arrangement is of use where the modulator reflects light rather than transmits it. In such a system, there may be provided a common spatial-frequency raster of angled reflecting elements so that incident light from a light source, which is placed at an angle to the main optical axis, is reflected in the direction of the light modulator, and then after modulation travels in the opposite direction, i.e., towards the system of reflecting elements which now serves as the second diaphragm means.

When using the modulator as a reflector, it may be advantageous to use a curved interface as discussed earlier. Furthermore, in order to reduce the number of lenses in a composite illuminant objective the reflecting elements of the common spatial-frequency raster may be arranged in a curve so that their arrangement represents a concave surface able to focus the incident light. In order to minimize light losses resulting from light reflection from the common spatial-frequency raster, the reflecting elements may comprise a set of total internal reflection prisms. In such an arrangement, blocking means are preferably provided behind each prism in order to stop the passage of diffracted light of zero orders reflected from the modulator.

In order to reduce the number of lenses and to reduce the size of an optical system based on a gel based light modulator, a reflecting interface between the deformable layers may curved so as to be part cylindrical and a plurality of linear, parallel signal electrodes are provided, the first and second diaphragm means are provided by a common raster of parallel reflecting elements, a projection objective comprises at least one cylindrical lens, and an additional cylindrical objective lens has been placed between a condenser and the common raster of reflecting elements. With such an arrangement, the output light is in the form of a narrow, blade-like beam.

To provide line scanning in such an arrangement, a rotating scanning mirror device may been placed between the projection objective and the surface of an output optical signal receptor. A secondary light source and a photosensor are positioned adjacent to the scanning mirror device so that the incident light from the secondary light source is reflected from the mirror device to the photosensor. This occurs only once during a scanning cycle. The primary light source is of pulse type and control means interconnect the light modulator, primary light source, photosensor and means for rotating the mirror. The coupling of mirror rotation with control means for the light modulator and for the primary light source ensures high stability of scanned images projected on the surface of the output optical signal receptor (e.g., on the screen) throughout the whole duration of a frame due to continuous matching of scanning frequency with image frame rate. Such an arrangement has provided maximum illumination intensity and thus significantly improved the image quality.

Another invention disclosed herein concerns the use of a light modulator in a novel way. Instead of being used to produce images in accordance with applied signal, the modulator is used as a more passive element in an optical system. Thus viewed from one aspect, this invention provides a light modulator comprising a plurality of cells, each cell comprising two deformable dielectric layers which meet at an interface, at least one of which is a relief forming gel, a first electrode on one side of the layers and a signal electrode on the other side of the layers, and means arranged to supply signals to the signal electrodes so that a relief is created with a profile such that the modulator will act as a lens.

In such an arrangement, under the influence of signal voltages the relief surface of the deformable gel layer can be changed to alter the focal length of the lens. Thus, by changing the radius of curvature of the deformable gel layer surface, the focal length can be varied, the rate being dependent on the rate of development of a relief. Accordingly, there is provided a lens whose properties can be changed rapidly. Such a lens may be used in many optical systems, such a laboratory equipment, cameras, projectors, or even spectacles.

Preferably different voltages are applied to the signal electrodes of all cells of the light modulator so that the distribution of the electric potential across the plane of the signal electrodes and at the interface between the deformable layers is not rastered, which enables space-time control of the relief shape in accordance with desired laws.

In order to implement an arrangement in which a modulator can be used as a lens, the signal electrodes of the cells of the light modulator may be arranged in the form of concentric rings, for example, each ring having its own switching device:

It is also possible to use gel based modulatorsas other elements of an optical system, applying signals so that it can act as a passive diffraction grating, for example.

In order to increase the sensitivity of a modulator, another invention disclosed concerns the provision of a number of sub-cells in series, so that reliefs are formed simultaneously at two ore more interfaces in each cell. Thus according to one aspect of this invention, there is provided a light modulator comprising a plurality of cells, each cell comprising a plurality of transparent sub cells arranged in series, wherein each sub cell comprises two deformable dielectric layers which meet at an interface, at least one of which is a relief forming gel, a first electrode on one side of the layers and a signal electrode on the other side of the layers, adjacent sub cells being connected in series by a transparent electrode supporting substrate, and means being provided to supply signals simultaneously to the signal electrodes of the sub cells.

As a result of this invention, phase modulations of the light fluxes passing through these cells n times as great as phase modulations of the light fluxes that have passed through a cell with only one interface, where n is the number of sub cells. Typically there may be two, three or more sub cells.

In preferred modulators utilising a plurality of signal electrodes, adjacent signal electrodes are preferably separated by an additional electrode portion arranged to establish constant zero potential between the adjacent signal electrodes. Such an arrangement neutralises the mutual interactions of adjacent signal electrodes in the case when there is a common substrate for the signal electrodes. In the absence of additional ground electrode portions, the application of equal voltage pulses to the signal electrodes of several adjacent cells would equalize the electric potential between them at the expense of minor electric currents flowing through the surface of the common signal substrate.

In order to increase the recording density on the deformable gel layer, preferably the additional electrode portions between adjacent signal electrodes, which may be provided by a common ground electrode, are arranged in a plane spaced from the plane of the signal electrodes, there being an additional dielectric layer whose thickness is much smaller (at least five, ten or even more times smaller) than the width of the signal electrodes and of the additional electrode portions between the signal electrodes, the additional dielectric layer being disposed in a plane between planes of the signal electrodes and the additional electrode portions. Placing the signal electrodes and the additional electrode portions in different planes makes it possible to reduce the lateral distance between them down to zero. As a result, the threshold resolution of the light modulator increases twofold while the minimum distance between the adjacent signal electrodes decreases threefold. Such an increase in the threshold resolution makes it possible to improve the quality of the images projected on the screen.

Thus, according to another invention disclosed herein there is provided a light modulator comprising two deformable dielectric layers which meet at an interface, at least one of which is a relief forming gel, a first electrode on one side of the layers and a plurality of laterally spaced signal electrode on the other side of the layers arranged in a plane on a common signal substrate, wherein between adjacent signal electrodes there are provided additional electrode portions arranged to establish constant zero potential between the adjacent signal electrodes, the additional electrode portions being disposed in a plane spaced from the plane of the signal electrodes, and there being an additional dielectric layer between the plane of the signal electrodes and the plane of the additional electrode portions.

It will be appreciated that the expression "plane" is used in a general sense and not in the sense of being geometrically planar. For example, as discussed earlier the modulator may take a curved form and in that case the planes referred to would be curved surfaces.

An additional or alternative way of reducing the effects of adjacent signal electrodes on each other concerns the manner in which the electrodes are used for a given image. Thus in accordance with another invention disclosed there is provided a light modulator comprising two deformable dielectric layers which meet at an interface, at least one of which is a relief forming gel, a first electrode on one side of the layers and a plurality of laterally spaced signal electrode on the other side of the layers, wherein control means are provided to supply signals to the signal electrodes so as to form a surface relief representative of an image, and wherein the control means is arranged to divide an image into a plurality of interlaced image portions and to supply in sequence signals representative of the image portions to a corresponding plurality of interlaced groups of signal electrodes. In this manner, at any given moment in time only one interlaced group of signal electrodes is being used, and each electrode in a group is spaced from the next electrode in the group by at least one electrode from another group.

In a simple arrangement, where the signal electrodes are arranged in a regular rectangular array, there may be two interlaced groups so that the group members alternate in the orthogonal x and y directions. Thus in the x and y directions each electrode is separated from the next electrode in the group by one other electrode. However, there will be diagonally adjacent electrodes in the same group although this may not be problematical. Another possibility would be the use of four interlaced groups, in which case each electrode would be completely surrounded by electrodes from other groups.

The electrodes in the or each group which is not being used at any instant may be grounded. Alternatively, a reverse polarity signal could be applied to certain of the electrodes. For example if a signal of a particular magnitude and polarity is applied to an electrode in a group which is being used to provide a relief representative of an interlaced image portion, then the application of a signal of equal magnitude but reverse polarity to an adjacent electrode from another group, the amplitude of a relief formed will be twice as great as in the case where the adjacent electrode is grounded.

A problem with the use of gel based light modulators is charge inleakage due to the presence of gel-contaminating particles (e.g., low-molecular-weight ionized admixtures), polarization, electron injection from the support electrode, and so forth. The presence of electric charges on the surface of deformable gel layers increases their sensitivity to voltages applied to the signal electrodes. However, accumulation of electric charges is a slow process in comparison with the mechanical formation and erasure of reliefs. In order to increase the operation rate of the light modulator, it is now proposed to coat the gel layer with an additional conducting gel layer.

Thus, in accordance with another invention disclosed herein, there is provided a light modulator comprising a plurality of cells each having two deformable layers which meet at an interface, one of the layers being a dielectric and one being a relief forming gel, a first electrode on one side of the layers and a plurality of laterally spaced signal electrodes on the other side of the layers, wherein the relief forming gel layer comprises a sub layer of a dielectric relief forming gel and a surface layer of a conducting relief forming gel.

Preferably the gels are both polyorganosiloxane gels, the conducting layer being metal containing. For example, the conducting gel layer could be prepared as described earlier, the sole difference being that $\alpha,\omega$-dihydroxypolydimethylsiloxane molecules with terminal groups containing Li, Zn, Na or other metals are added to polydimethylsiloxane or $\alpha,\omega$-dihydroxypolydimethylsiloxane prior to the preparation of the gel layer. The amount added may be at least three molar percent.

Preferably, the first electrode is electrically conjugated with the additional conducting gel layer in order to prevent the inleakage of electric charges into the layer.

A further problem with gel based modulators is that some parts of the reliefs created by adjacent signal electrodes may interact with one another due to the overlapping of the protrusions formed by the electrodes on the relief. In one preferred arrangement, therefore, the gel layers of the cells of the modulator are separated from each other. In manufacturing, this can be achieved by depositing the gel onto a substrate which has separated, gel receiving recesses for each cell. If the gel does not fill the recesses, then the air gaps between the gel portions and the upper surface of the substrate can constitute the second deformable layer.

Thus, viewed from one aspect of an invention disclosed there is provided a method of manufacturing a light modulator comprising the steps of providing a first dielectric substrate formed with a plurality of separated recesses defining individual cells, providing a first electrode portion in each of the recesses, depositing a portion of a deformable, relief forming gel into each of the recesses over the first electrode portion, the quantity deposited in each recess being less than the volume of the recess so that there is left an air gap between the gel layer and the surface of the first dielectric substrate, and placing a second dielectric substrate onto the first dielectric substrate, the second dielectric substrate carrying a plurality of signal electrodes which are aligned with and face into the recesses. This invention also extends to a light modulator made by such a method.

Another invention disclosed concerns the provision of dynamic control of the image contrast. In preferred modulator arrangements, the first electrode is not grounded but provided with a support voltage, and variation of this will affect output light intensity. According to one aspect of this invention, therefore, there is provided a light modulator comprising a plurality of cells, each cell comprising two deformable dielectric layers which meet at an interface, at least one of which is a relief forming gel, a first electrode portion on one side of the layers and signal electrode on the other side of the layers, wherein the cells are arranged in groups, each group having its first electrode portions electrically connected together, but independent of the first electrode portions of other groups, and wherein support voltage supply means are provided for supplying support voltages to the first electrode portions of each group independently of the support voltages supplied to other groups, so that the support voltage level for each group can be set and / or varied independently. Thus, it is possible to adjust image contrast for different regions of an image corresponding to the different groups of cells.

For colour systems, three modulators of any of the types described above could be used, corresponding to the conventional three RGB colour channels. However, in accordance with another invention disclosed there should be different support voltages for the three modulators since the phase modulation of a light wave passing through the relief of a gel is dependent upon wavelength. Thus, according to this invention there is provided a colour optical system comprising three colour channels for handling light of three different frequencies, output from the three channels being combined to create a colour image, wherein each channel includes a modulator comprising two deformable dielectric layers which meet at an interface, at least one of which is a relief forming gel, a first electrode on one side of the layers and signal electrode on the other side of the layers, means for supplying a signal to the signal electrode and means for supplying a support voltage to the first electrode, wherein the support voltage for each channel differs from the support voltage of the other channels and is proportional to the frequency of light being handled by the channel.

A colour optical system utilising a gel based modulator will normally include first and second diaphragm means, as described earlier. The transverse section of light fluxes of different orders of diffraction and the distance between them on the surface of the second diaphragm means depend on the wavelength. With certain parameters of a three-color optical system, the zero order of the light of one wavelength can partly overlap with the first order of the light of a different wavelength. The second diaphragm means will stop light fluxes of both zero and first orders of diffraction and this will not work. Therefore, in accordance with another invention disclosed, the second diaphragm means is in the form of a system of light filters capable of stopping colour fluxes of zero orders of diffraction but passing light fluxes of higher orders of diffraction for all three colours. Thus, in accordance with this invention there is provided a colour optical system comprising three colour channels for handling light of three different colours, output from the three channels being combined to create a colour image, wherein each channel includes a light source, first diaphragm means, and a modulator comprising two deformable dielectric layers which meet at an interface, at least one of which is a relief forming gel, a first electrode on one side of the layers and signal electrode on the other side of the layers, and means for supplying a signal to the signal electrode to create a relief to modulate light from the light source, there being common second diaphragm means to receive combined output from the three channels, the second diaphragm means being in the form of a system of light filters capable of stopping light fluxes of zero orders of diffraction but passing light fluxes of higher orders of diffraction for all three colours.

In an alternative arrangement, a three colour optical system uses a common light source (instead of three independent light sources of different wavelengths) for the three independent colour channels. In order to isolate a light beam of a definite wavelength from the light flux that has passed through the light modulator in each channel, each channel is provided with a second diaphragm of its own. In this case, the formation of colour images is achieved by the spatial-frequency method. The passage of the light flux through the relief surface of the deformable gel layer results in the formation of various diffraction orders; the angles of deflection from the optical axis within the same diffraction order are different for light beams of various wavelengths. The design of the second diaphragm in each independent channel therefore permits one to single out spectral ranges of red, green or blue colours within each diffraction order.

Thus, according to an invention disclosed herein there is provided a colour optical system comprising three colour channels for handling light of three different colours, output from the three channels being combined to create a colour image, wherein there is a common light source and each channel includes first diaphragm means, a modulator comprising two deformable dielectric layers which meet at an interface, at least one of which is a relief forming gel, a first electrode on one side of the layers and signal electrode on the other side of the layers, means for supplying a signal to the signal electrode to create a relief to modulate light from the light source, and second diaphragm means independent of the second diaphragm means for the other channels, the second diaphragm means for each channel permitting the passage only of light of the colour associated with that channel.

In order to reduce the size of a three colour optical system, a new arrangement has been developed. In accordance with one aspect of this invention there is provided a colour optical system comprising a light source, first diaphragm means, a light modulator and second diaphragm means, the modulator comprising a plurality of cells, each cell being divided into three angularly displaced sub cells each of which includes two deformable dielectric layers which meet at an interface, at least one of which is a relief forming gel, a first electrode on one side of the layers and signal electrode on the other side of the layers, there being means for providing signals to the three signal electrodes of each cell independently, corresponding to three separate colours, and wherein the first diaphragm means and the second diaphragm means comprise three angularly displaced regions whose positions are aligned with the orientation of the three sub cells for each cell of the modulator, the arrangement being such that each of the three regions of the second diaphragm means permits the passage of light of only one of the three colours after diffraction by reliefs created on the gel in accordance with the signals.

In order to increase the maximum switching frequency of the signal electrodes in a three colour optical system using a single modulator, the cells may be arranged in interlaced groups as described earlier and the three basic colours (red, green and blue) of each image frame are recorded consecutively into the groups. The reduction or elimination of inleaking surface charges is then possible due to the alternate application of voltages for modulating light fluxes of different wavelengths to the adjacent cells of the light modulator.

Various of the systems described above make it possible to have a modulator with a high density of cells. If the cell density is high enough, it becomes possible to use the modulator as a display panel without the need for e.g. Schlieren optics. Thus, in accordance with another invention disclosed there is provided a display panel in the form of a light modulator having an array of cells each of which comprises two deformable dielectric layers which meet at an interface, at least one of which is a relief forming gel, a first electrode on one side of the layers and signal electrode on the other side of the layers, there being means for providing signals to the signal electrodes to create reliefs in the cells on the gel surfaces, the arrangement being such that the reliefs create images on the modulator which are viewable by the naked eye under the effect of light from a scattered source.

Viewed from another aspect, a display panel in accordance with the invention may at least one cell made as described above which may be arranged so that a distributed light source is placed on one side of the cell so that the illuminating surface is parallel to the deformable layers and the incident light is perpendicular to the deformable layers, wherein the signal electrode in the cell comprises a plurality of laterally spaced portions and stop-diaphragm means is arranged in the cell parallel to the layers, the stop-diaphragm means consisting of periodically repeated opaque parts which coincide either with the maxima $I_{max}$ or with the minima $I_{min}$ of the outgoing light intensity, and the repetition period $T$ of the opaque parts being equal to the gel layer surface relief period.

Preferably between adjacent portions of a signal electrode there are provided additional electrode portions arranged to establish constant ground (zero) potential between the adjacent signal electrode portions.

An arrangement as above described may be used as a display panel without the need for additional optics.

In the preferred arrangement, the distance H from the stop-diaphragm to the relief gel layer surface and the maximum value of the modulation coefficient

$$K_{max} = \frac{I_{max} - I_{min}}{I_{max} + I_{min}}$$

are determined from the Fresnel-Kirchhoff integral under the conditions

$$H \leqslant \frac{5 \cdot S^2}{\lambda}, \qquad S \geq 3T$$

in which S is the width of a cell;

T is the period of the relief on the interface between the deformable layers and the period of the signal electrode portions; and

λ is the wavelength of the incident light.

Assume that a periodic relief of an approximately sinusoidal shape is created on the surface of a deformable gel layer. If a light beam is perpendicular to this surface, the minor protrusions on the relief surface will focus light like microlenses. The intensity of the light flux will be maximum at a certain distance from the relief surface; each of these maxima will correspond to its "own" protrusion (a "microlens"). In order to ensure visualization of the relief, it is necessary to place the opaque elements (for example by application onto a transparent plate) in the plane of light intensity maxima.

In this case, the opaque elements will retain more light than in its absence. Other modes of visualization can also be used. Thus, whilst the relief image formed on the surface of the deformable gel layer is viewed the help of e.g. a special plate provided with a set of opaque elements, it is simpler, of course, than visualization of the relief by means of dark field method optics).

The calculation of a feasible set of parameters providing the operation of the light modulator as a display panel have been done for one-dimensional harmonic relief with the use of the Fresnel integral (a particular case of the Fresnel-Kirchhoff integral) for the intensity of light $I(x,h)$ at any distance h from the relief:

$$I(x,h) = \left| \frac{1}{\lambda h} \int_{-\frac{S}{2}}^{\frac{S}{2}} u_0(\xi) \cdot exp\left[ -j\frac{\pi}{\lambda h}\left(\xi^2 - x\xi\right) \right] d\xi \right|^2$$

in which $x$ and $\xi$ are the coordinates along the direction parallel to deformable layers and the stop-diaphragm,

$$u_0(\xi) = exp\left[jA(\xi)\right]$$

is the phase transfer function of the harmonic relief

$$A(\xi) = A_0 \, cos\left( \frac{2\pi}{T}\xi \right),$$

in which $A_0$ is the relief depth.

Calculations suggest the following possible values: T=100 $\mu$m, $A_0$=0.1-0.15 $\mu$m; $\lambda$=0.5 $\mu$m; possible values for $H_1$ ... $H_n$ lie in the range 5-25 mm. Calculations show that the Fresnel diffraction region comprises several light-focusing planes but not one, as is the case with an ordinary lens.

In general, the relief period inside a cell is determined primarily by the mode of visualisation of the relief and should not exceed 100 - 200 $\mu$m. At greater periods there will be large gaps between the signal electrodes and the surface of the deformable gel layer, in order to ensure an approximately harmonic (sinusoidal or cosinusoidal) relief. This becomes a difficult task as the voltages to be applied to the signal electrodes have to be high. The depth of the relief should be as great as possible to reduce the size of the device. Then, the distance between the relief surface and the plane containing the stop diaphragm opaque parts can be small. In practice, the relief depth will not exceed several tenths of a micron due to the maximum permissible voltage that can be applied to signal electrodes without a dielectric breakdown.

The light source may be both artificial, such as a luminodiode panel, and natural ambient lights. For display panel use, the light source can be placed on one side of the panel, and the viewer on the other side. Alternatively, the light source and the viewer can be on the same side of the panel. In one possible case, light passes between the opaque parts of the plate, and then through the deformable layers to be reflected from a matrix of reflective signal electrodes, or from a reflective dielectric layer over the electrodes, before passing in the opposite direction through the deformable layers to the plane containing the opaque parts. In another case, the light passes through the layers of the cell and is then reflected from the opaque parts of the stop diaphragm back through the layers. Where the opaque parts are reflective in such a system, the remaining parts of the stop diaphragm should preferably be light absorbent.

In one possible arrangement, an additional microlens is placed between the distributed light source and the deformable layers. In one possible arrangement the signal electrodes and, if provided, the ground electrodes are coated by an additional dielectric layer. In one possible arrangement a dielectric substrate for the signal electrodes and, if provided, the ground electrodes is transparent and defines a set of individual microlenses able to focus light form each

EP 2 302 439 A1

relief protrusion.

Many of the optical systems described above may use either the dark or the light field methods. The various methods, modulators and optical systems may be combined in any appropriate manner. Thus, a modulator may be designed or made by one of the methods specified, may have one of the constructions specified, and may be used in one of the optical systems specified.

In all of the modulators described above the gel is preferably as described earlier. The preferred cross-linkable polysiloxane is $\alpha,\omega$-dihydroxypolydimethylsiloxane of general formula :

$$HO\text{-}Si(CH_3)_2O[\text{-}SiO(CH_3)_2\text{-}]_nSi(CH_3)_2\text{-}OH$$

The preferred polysiloxane is a polydimethylsiloxane of general formula :

$$(CH_3)_3SiO[\text{-}SiO(CH_3)_2\text{-}]_nSi(CH_3)_3$$

The preferred cross linking agent is tetraethoxysilane, and the preferred catalyst is tin diethyldicaprylate.

Preferably the $\alpha,\omega$-dihydroxypolydimethylsiloxane is in the polydimethylsiloxane as a 10 - 30% solution, and for example a 15% solution. Preferably, the methods use $\alpha,\omega$-dihydroxypolydimethylsiloxane having a molar mass of $(1\text{-}2)\cdot 10^4$ g/mol in polydimethylsiloxane having a molar mass of $(0.6\text{-}1)\cdot 10^3$ g/mol, at the 1:0.8-1:1.5 and 1:2-1:5 $\alpha,\omega$-dihydroxy-polydimethylsiloxane / tin diethyldicaprylate and $\alpha,\omega$-dihydroxypolydimethylsiloxane / tetraethoxysilane molar ratios.

In each case the modulator satisfies the criteria that:

$$0.01d_1 < d_2 < d_1$$
$$d_2 > \lambda / (20 \mid \eta_1 - \eta_2 \mid)$$
$$\mid \eta_1 - \eta_2 \mid > 0.1$$
$$t_\rho > 0.01\, \tau_m$$
$$0.1d_1 < L < 10\, d_1$$

in which $d_2$ is the distance between the signal electrode and the interface between the deformable layers; $d_1$ is the distance between the first electrode and the interface between the deformable layers; $\lambda$ is the wavelength of light with which the modulator is to be used; $\eta_1$, is the refractive coefficient of one of the deformable layers; $\eta_2$ is the refractive coefficient of the other of the deformable layers; $t_\rho$ is the duration of voltage pulses to be applied to the signal electrodes; $\tau_m$ is the time constant of mechanical relaxation of the relief formed at the interface between the layers; and L is the minimum dimension of a single signal electrode in a direction parallel to the layers or, in the case of a plurality of cells, the minimum spatial period between electrodes in adjacent cells.

The various inventions may be better understood by reference to the following detailed description and with reference to the accompanying drawings, in which :

Fig. 1 shows a cell of a light modulator with a deformable gel layer;

Fig. 2 shows a light modulator with a number of cells having deformable gel layers;

Fig. 3a shows time dependencies of the voltage at the signal electrode, at the outputs of the bias voltage and support voltage units. The areas demarcated with dotted lines are shown on an enlarged scale in Fig. 3b;

Fig. 4 shows a single-colour transformable optical system using a light modulator with a deformable gel layer.

Figs. 5 to 17 show various alternative embodiments of a single-colour transformable optical system;

Fig. 18 shows an optical focusing system using a deformable gel layer;

Fig. 19 shows a light modulator with control circuitry;

Fig. 20 shows a cell of a light modulator;

Fig. 21 a shows how the various voltages, the height of a protrusion on the relief surface and the light intensities vary with time;

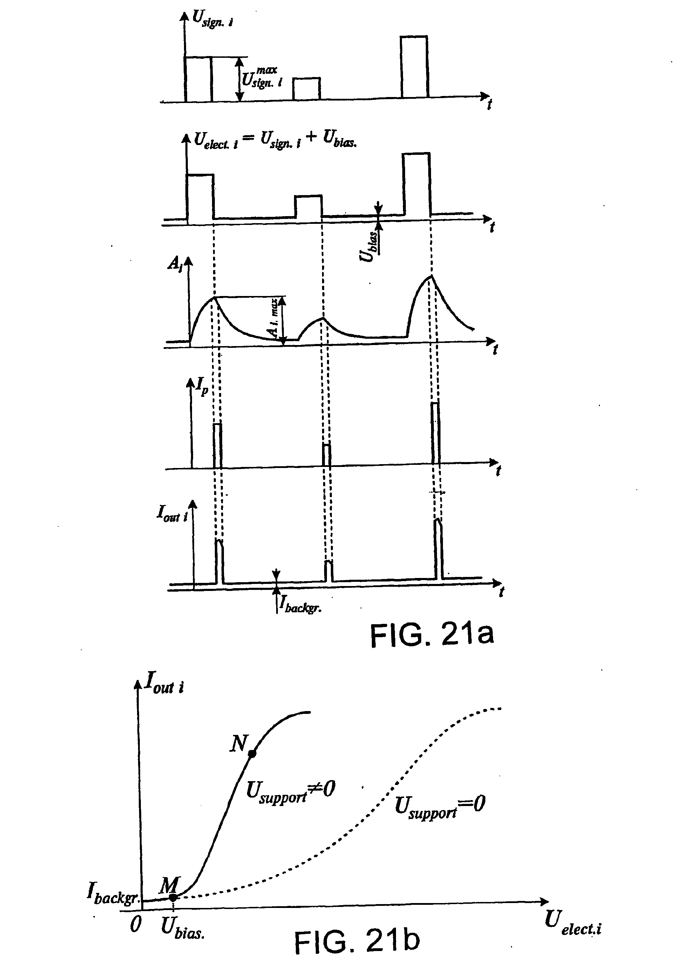

Fig. 21 b shows the grey scale characteristics of a light modulator with a deformable gel layer;

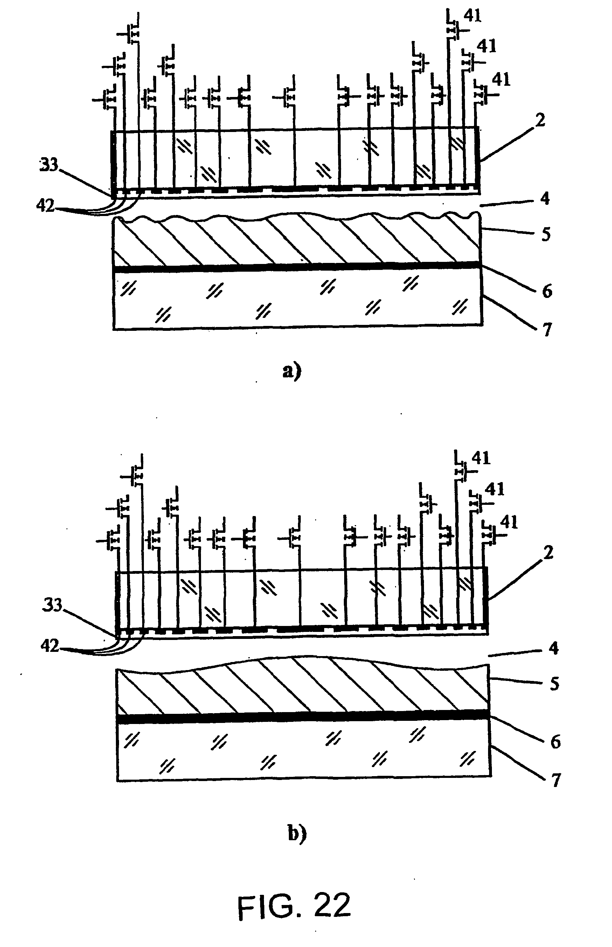

Figs. 22a and 22b show a light modulator being operated on different ways;

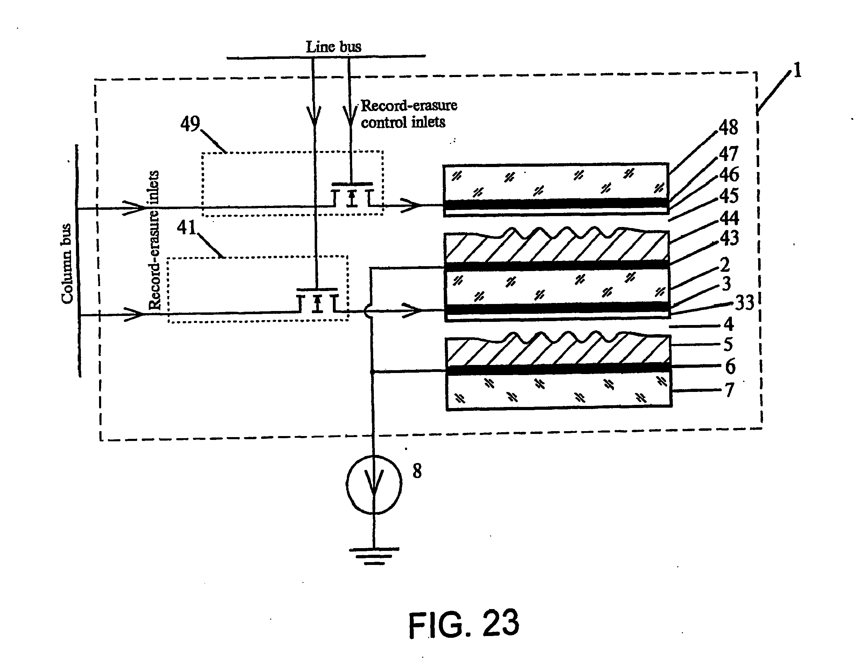

Figs. 23 to 27 show various embodiments of light modulators;

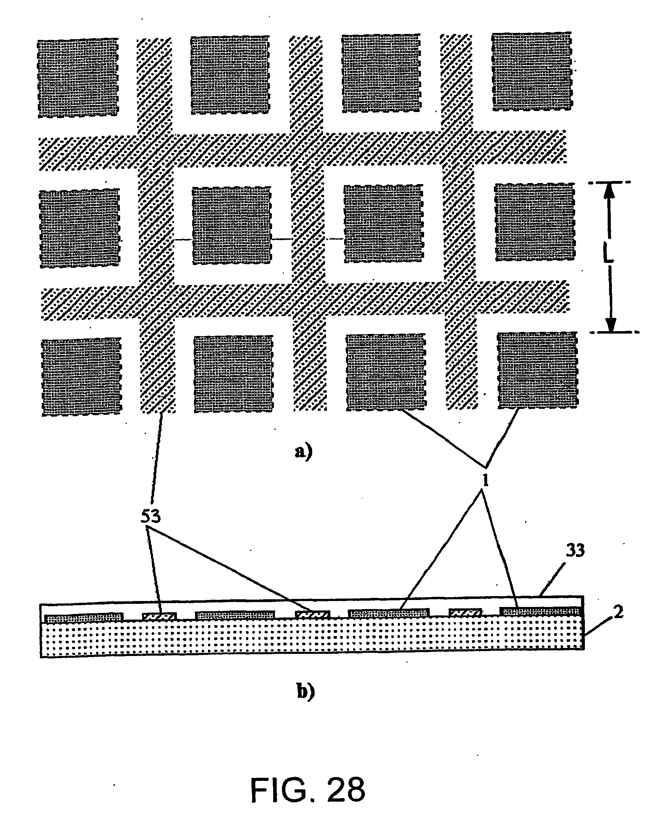

Fig. 28 to 32 show various embodiments of a matrix of cells forming a light modulator;

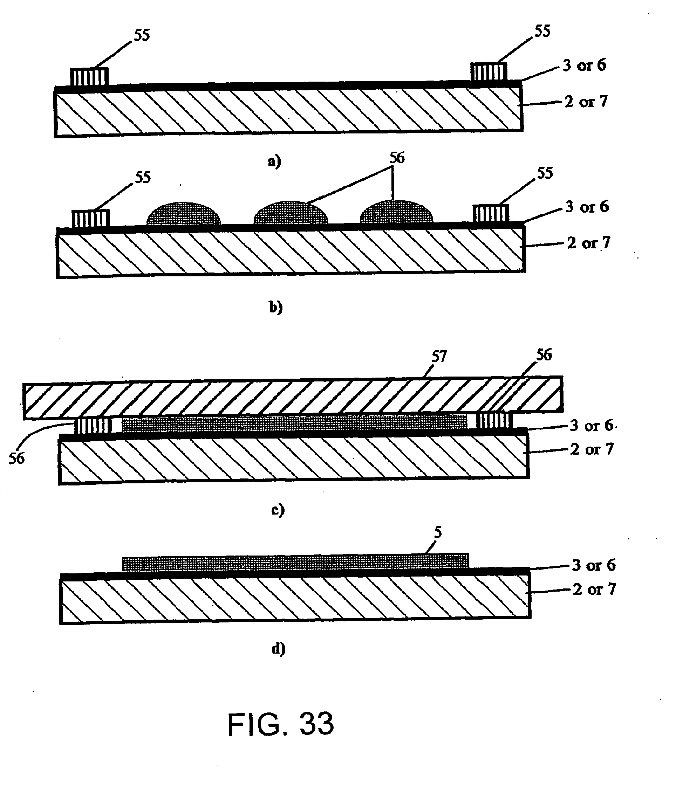

Figs. 33 to 37 show steps involved in manufacturing various embodiments of a light modulator;

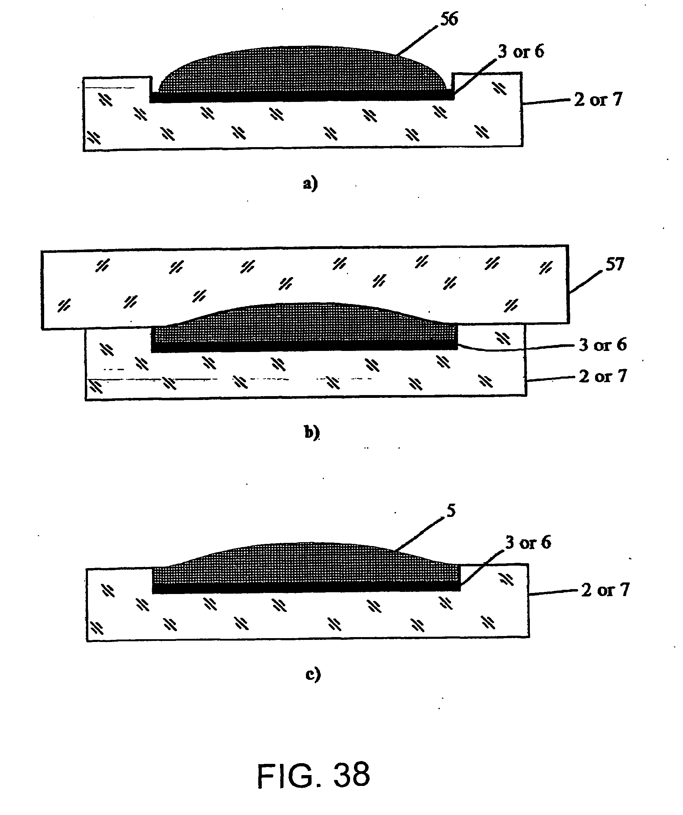

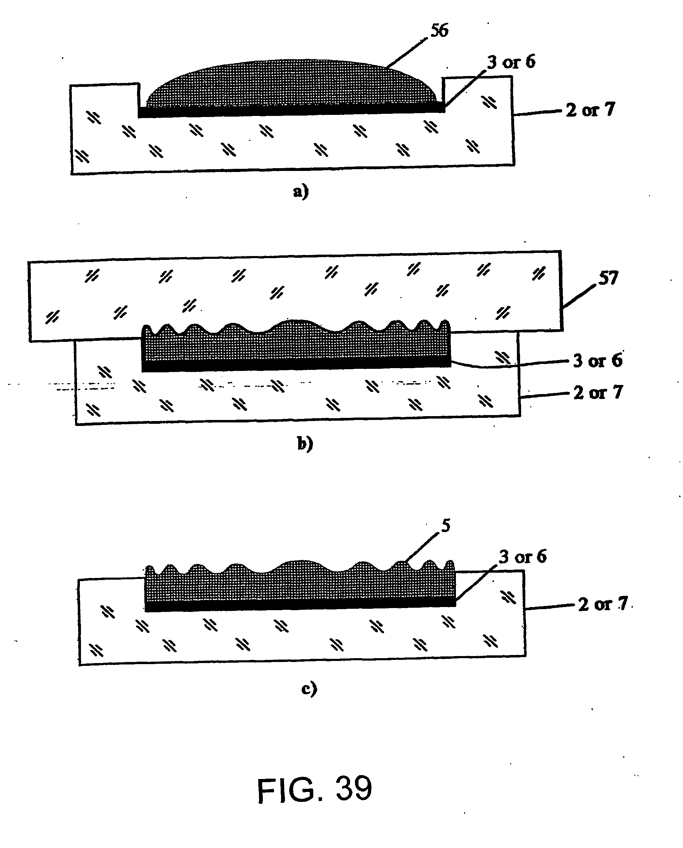

Figs. 38 and 39 show steps involved in a further embodiment of a method for forming a gel layer for use in a modulator;

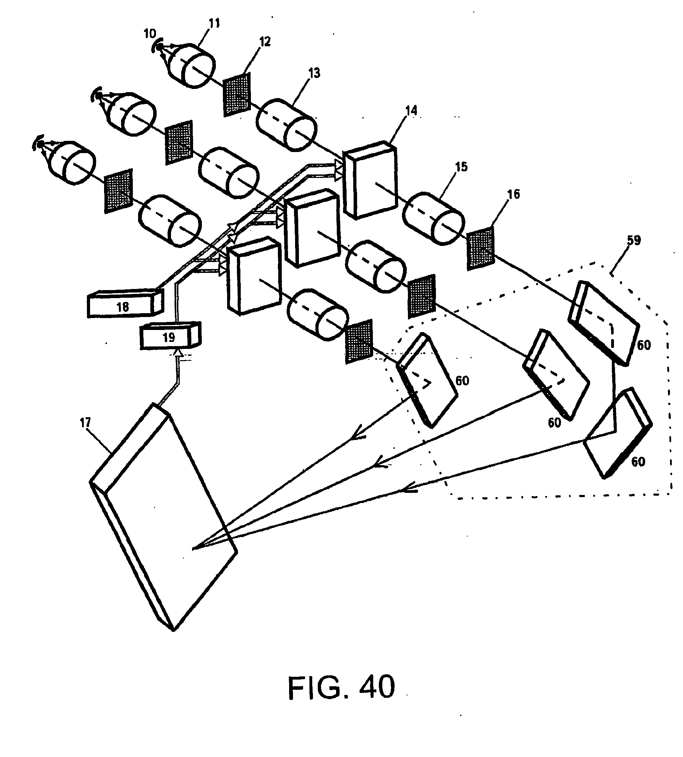

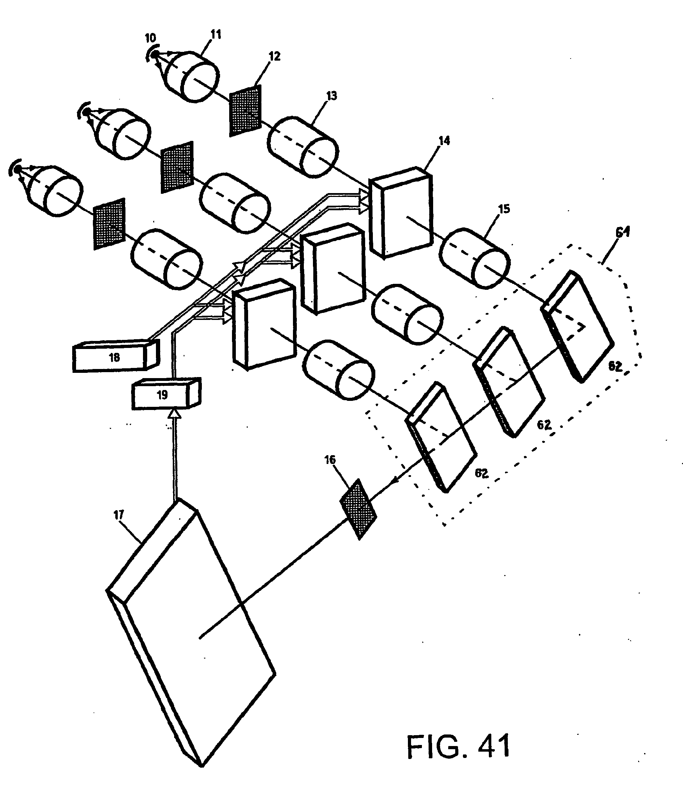

Figs. 40 and 41 show embodiments of three-colour optical systems;

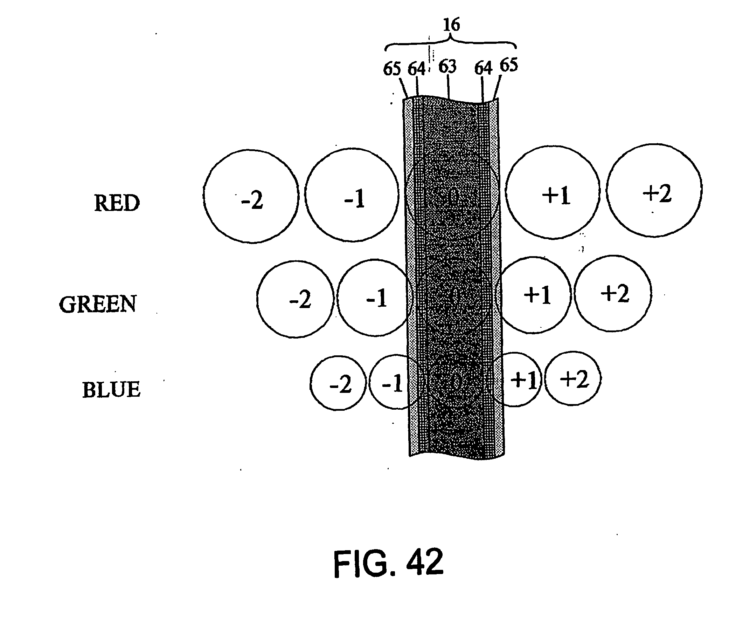

Fig. 42 shows the orders of diffraction of red, green or blue light fluxes in a three-colour optical system such as shown in Fig. 41;

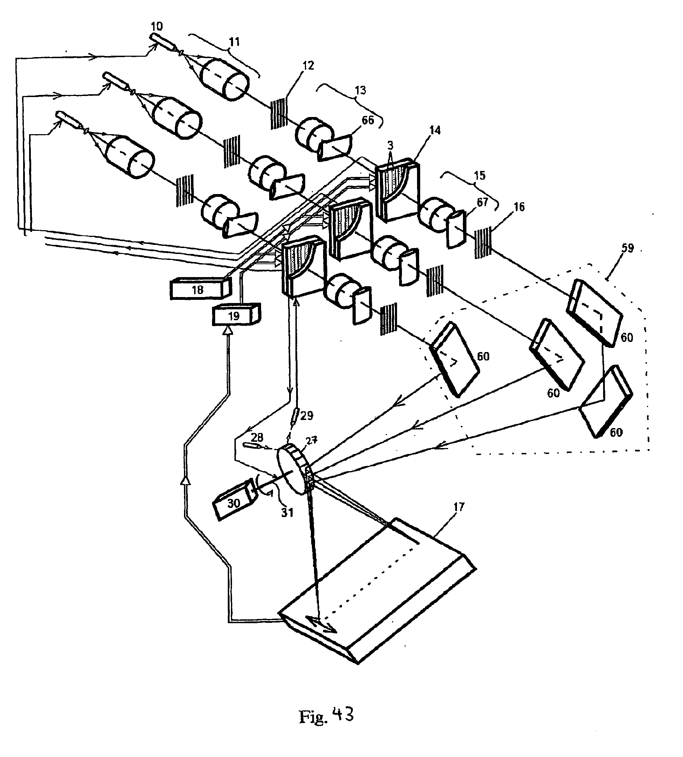

Figs. 43 to 48 show different embodiments of three-colour optical systems; and

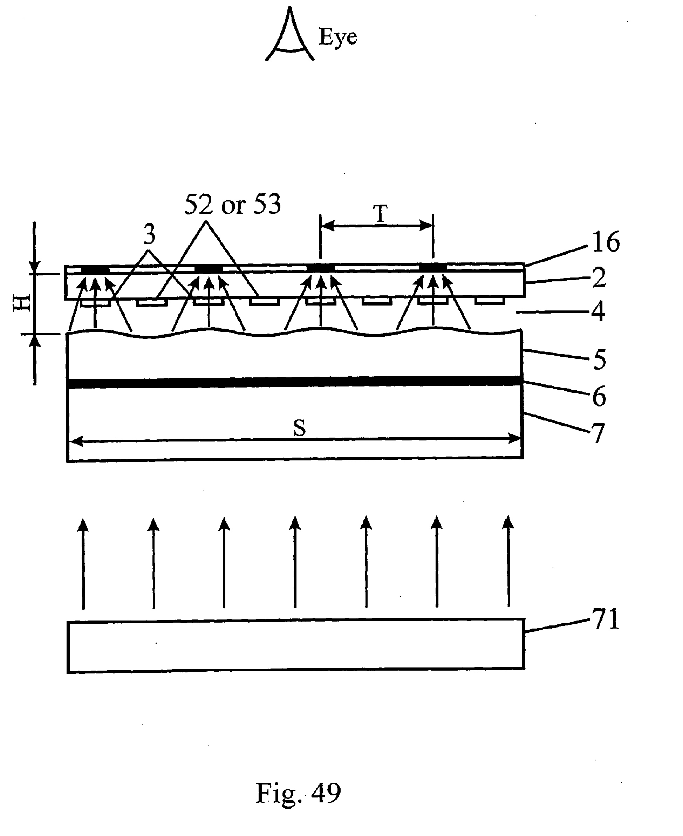

Figs. 49 to 55 show various embodiments of a display panel.

Throughout the description and drawings, the same numbers have been used for similar items. Where an item or a procedure is not described in full for a particular embodiment, reference can be made to an earlier description.

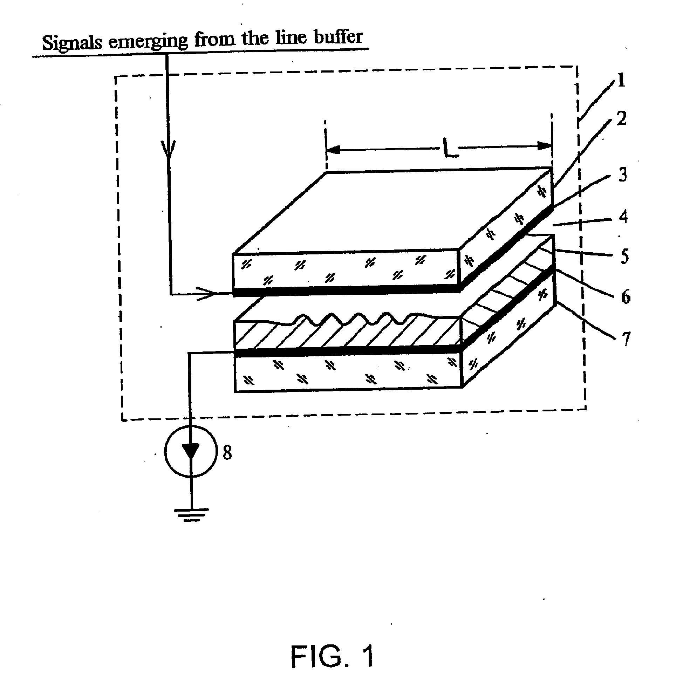

Figure 1 shows a cell (1) of a light modulator with a deformable gel layer. The cell includes a first dielectric substrate layer (7) on which is mounted a first, or support, electrode (6) followed by the gel layer (5). A signal electrode (3) mounted on a second dielectric substrate layer (2) is separated from the deformable gel layer (5) by a second deformable layer (4) which in this case is air. A support voltage unit (8) is also provided. Such a basic arrangement is described in Russian Patent 2080641 to Guscho et al.

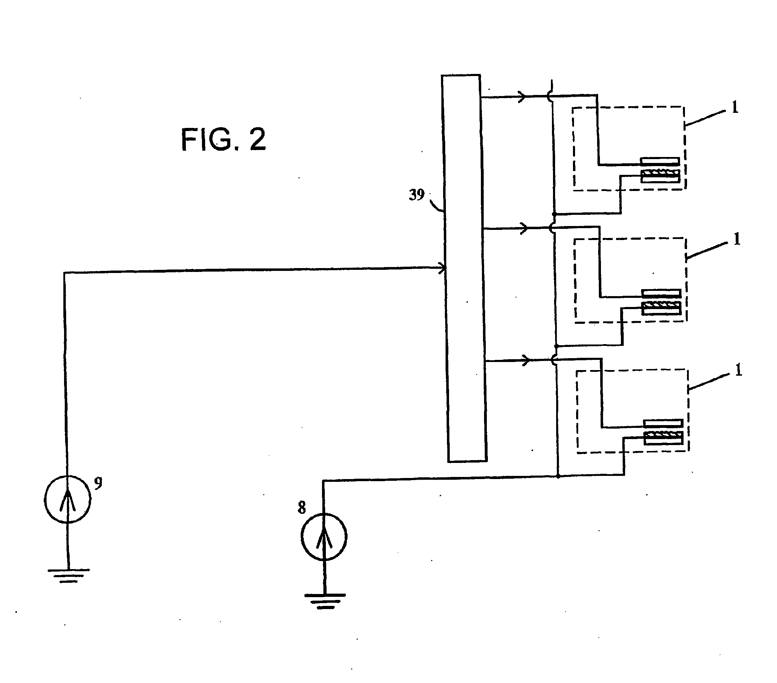

Figure 2 shows an arrangement of several such cells connected in a light modulator. A bias voltage unit (9) is also provided for the signals.

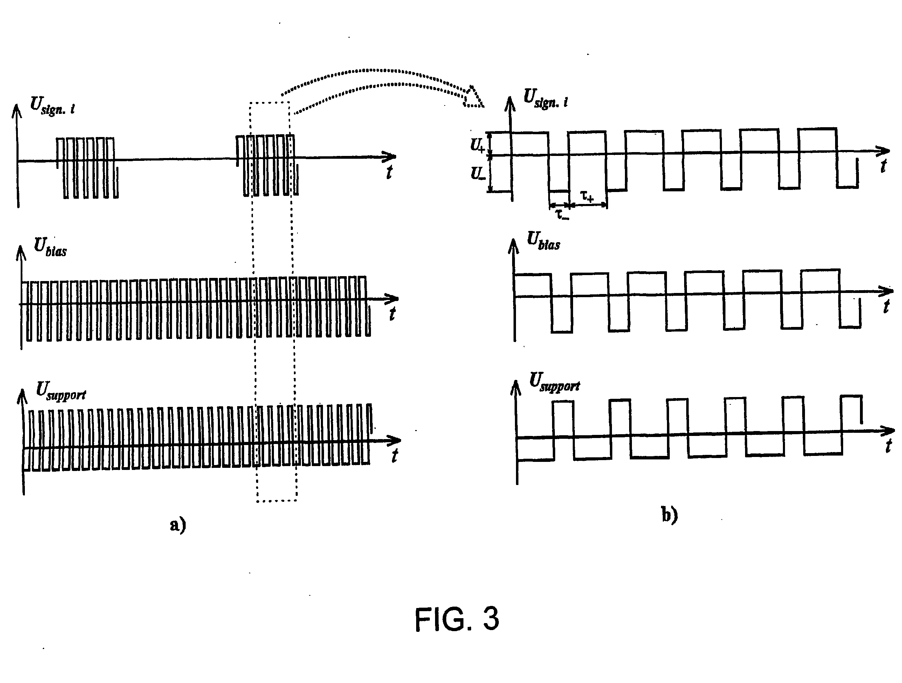

Figure 3 shows time dependencies of the voltage at the $i$-th signal electrode, $U_{sign.i}$, and at the outlets of the bias voltage ($U_{bias}$) and support voltage ($U_{support.}$) units. In order to eliminate the inleakage of electric charges in the deformable gel layer, rectangular pulses to be transferred to the signal electrodes, $U_{sign.i}$, are filled with high-frequency rectangular bipolar voltage. The support voltage, $U_{support}$, and the bias voltage, $U_{bias}$, are filled with the same voltage. $U_{support}$ is antiphasic, while $U_{bias}$ is synphasic to $U_{sign.i}$. In Fig. 3b, the area demarcated with a dotted line in Fig. 3a, is shown on an enlarged scale.

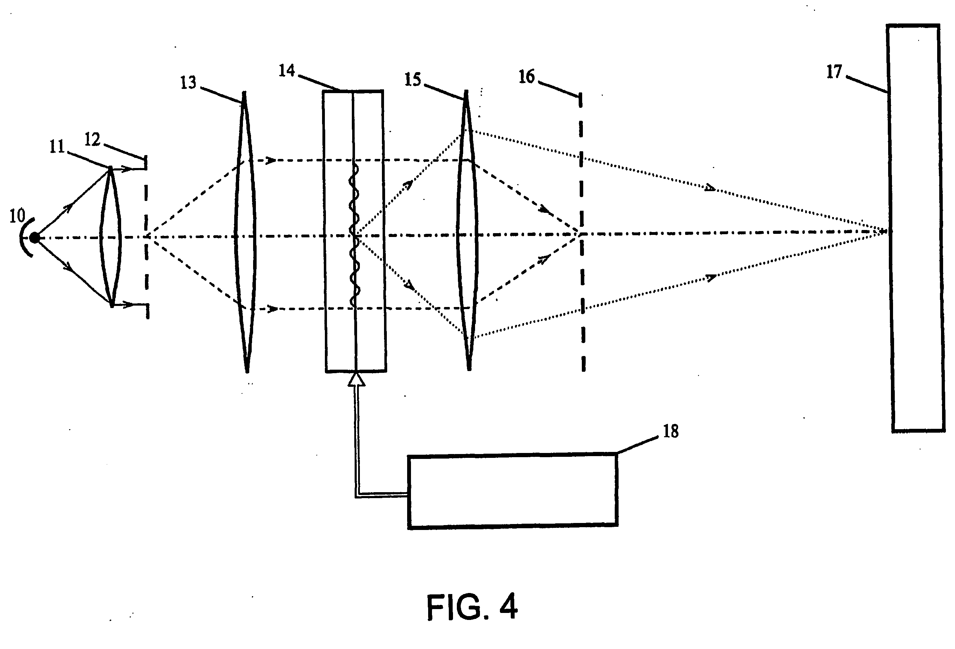

Figure 4 shows a single-colour transformable optical system using a modulator such as shown in Figure 2, and comprising a light source (10), a condenser (11), a first diaphragm (12), a composite illuminant objective (13), the modulator (14), a composite projection objective (15), a second diaphragm (16), an output optical signal receptor (17) and a source of input electrical signals (18).

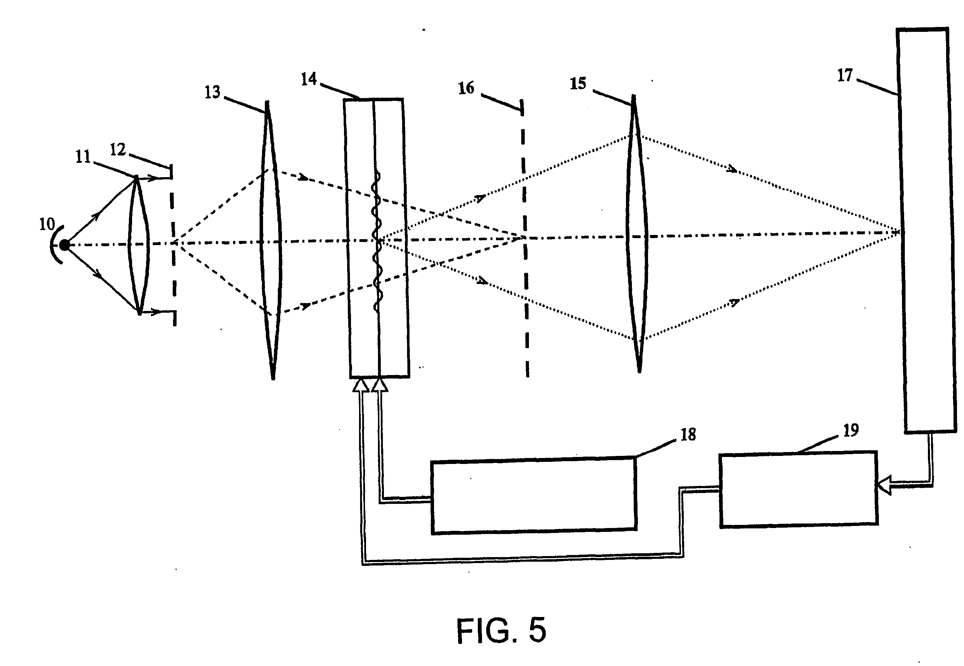

Referring now to Figure 5, there is shown a modified single-colour transformable optical system. The light source (10) can be both external and internal. External light sources (10) derive light energy either from the Sun or from daylight lamps or any other source which is not an integral element of the single-colour transformable optical system. An internal light source is an integral element of the said system and represents a thermal (e.g., an incandescence lamp) or a laser source. The condenser (11) collects the incident light from the light source (10) and sends it to the first diaphragm (12). The first diaphragm (12) can be made in various configurations, e.g., as a round hole situated on the optical axis and made in an opaque plate which is perpendicular to the optical axis, or as a slit made in the opaque plate so that the middle of the slit lies on the optical axis, while the opaque plate is perpendicular to it. In this embodiment of a light modulator, the light flux is focused into a hole or a slit by the condenser. The first diaphragm can be also made as a set of opaque elements of required shape and is situated on a certain surface. In this case, the condenser transfers parallel, converging or diverging light fluxes to the first diaphragm; some of them are stopped by the opaque elements of the diaphragm and some pass further through the system. The opaque elements of the first diaphragm may be given the shape of parallel bars.

The composite illuminant objective (13) sends the light flux that has passed through the first diaphragm (12) to the light modulator with a deformable gel layer (14).

In the transparent light modulator (14), the light flux is phase-modulated on passing through the deformed surface of the layer (5) which carries a relief in accordance with applied signals.

If the second diaphragm (16) is placed behind the composite projection objective (15) as shown in Fig. 4, the latter collects the light flux that has passed through the light modulator (14) and sends it to the second diaphragm (16); the surfaces of the first (12) and second (16) diaphragms are optically conjugated. This implies that if an object is placed onto the surface of the first diaphragm (12), the composite illuminant (13) and projection (15) objectives will reproduce its image on the surface of the second diaphragm (16). The dashed line in Fig. 4 indicates that a dot situated on the optical axis in the plane of the first diaphragm (12) will be projected as a dot lying on the optical axis in the plane of the second diaphragm (16). The second diaphragm (16) features such a construction that in the absence of a light modulator (i.e., in the absence of a relief surface of a deformable gel layer), the whole light flux that has already passed through the first diaphragm (12) will be stopped by the second diaphragm (16). By illustration, if the first diaphragm (12) represents a round hole situated on the optical axis, the second diaphragm (16) can be made as an opaque round spot on the surface of a transparent plate which is also situated on the optical axis. If the first diaphragm (12) represents a slit, the second diaphragm (16) can be made in the form of an opaque rod. If the first diaphragm (12) represents a set of opaque elements of specific shapes and location, the second diaphragm can also be produced as a set of opaque elements endowed with a capacity to stop the whole quantity of the light passing through the light modulator (14) and the composite projection objective (15) provided that the surface of the gel layer (5) is not deformed. Besides, the surface of the second diaphragm (16) represents the surface of a spatial Fourier-transformation image of the interface between the deformable layers (4, 5). As a result, the second diaphragm (16) will stop the light fluxes of zero orders of diffraction and transmit only light fluxes of higher orders of diffraction which pass further to the output optical signal receptor (17), i.e., the light fluxes will be modulated by the embossed surface of the deformable gel layer (5) (or, which is the same, by the interface between the deformable layers (4, 5)).

If the second diaphragm (16) is placed in front of the composite projection objective (15),as shown in Fig.5, the optical conjugation of the surfaces of the first (12) and second (16) diaphragms will be provided exclusively by the composite illuminant objective (13). The surface of the second diaphragm (16) still remains to be the surface of a spatial Fourier-transformation image of the interface between the deformable layers (4, 5), while the second diaphragm (16) features such a construction that would ensure the stoppage of the whole light flux in zero orders of diffraction.

As an output optical signal receptor (17) of required sensitivity, one can use transparent or reflective screens that are optically conjugated with the human eye, or photosensitive materials (e.g., photographic printing paper, electrographic drums, etc.). Standard electronic receptors of optical signals (e.g., photoelectronic multipliers, photodiodes, charge-coupled area image (CCD) matrixes, photometers, etc.) can also be used as output optical signal receptors (17) for monitoring changes in grey-scale characteristics.

The interface between the deformable layers (4, 5) in each cell (1) of the light modulator (14) is optically conjugated with the surface of the output optical signal receptor (17) so that an image recorded as a relief on the surface of a deformable gel layer (5) is reproduced on the surface of the optical signal receptor (17). (For example, a dotted line in Fig. 4 shows how a dot situated on the optical axis on the surface of the deformable gel layer (5) is projected as a dot situated on the optical axis on the surface of the output optical signal receptor (17)).

It is expedient that the output optical signal receptor (17) be highly sensitive in order to be able to monitor changes in spatial-frequency and edge effect characteristics as well as in grey-scale, time-frequency and colorimetric characteristics of modulated light fluxes (or at least in one thereof). See Guscho Yu. P. (1992) Fizika Reliefografi, Moscow, Nauka Publishers, 520 p.

The particular arrangement for the transmission of light fluxes set out above means that visualisation of the relief surface of the deformable gel layer (5) will be by the *dark field+ method, viz., in the absence of a relief the whole light flux will be stopped by the second diaphragm (16), while the surface of the output optical signal receptor (17) (e.g., screen) will remain dark. However, it is also possible to permit image visualisation by the *light field+ method. In the latter case, the reciprocal positions of the elements and the optical conjugation between them are essentially the same as in the *dark field+ method, with the sole exception that the second diaphragm (16) ensures the passage of light beams of zero orders of diffraction but stops all other orders. In the absence of a relief on the surface of a deformable gel layer (5), the whole light flux passes through the second diaphragm (16) and the surface of the output signal receptor (17) (e.g., screen) becomes luminant (*light field+).

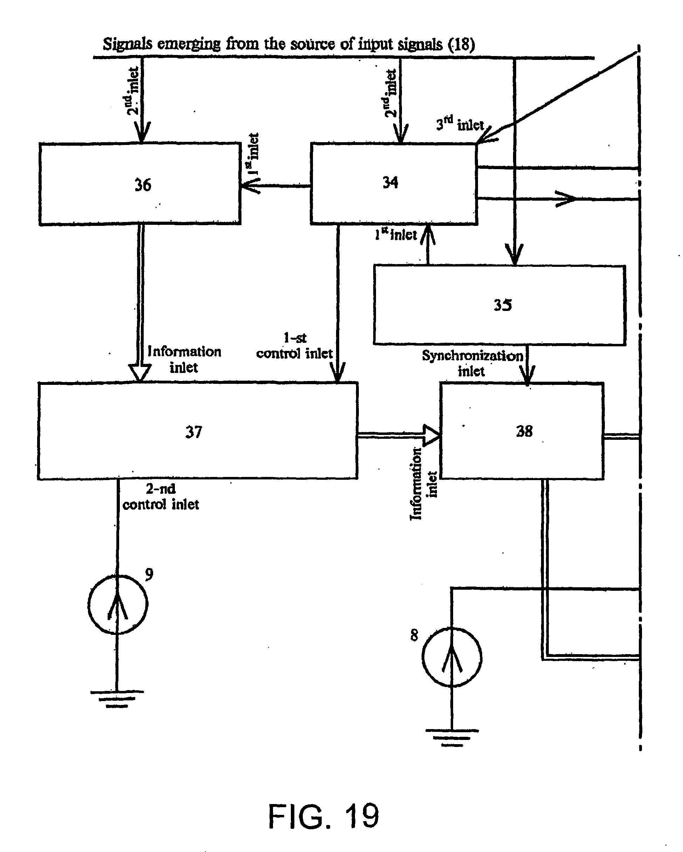

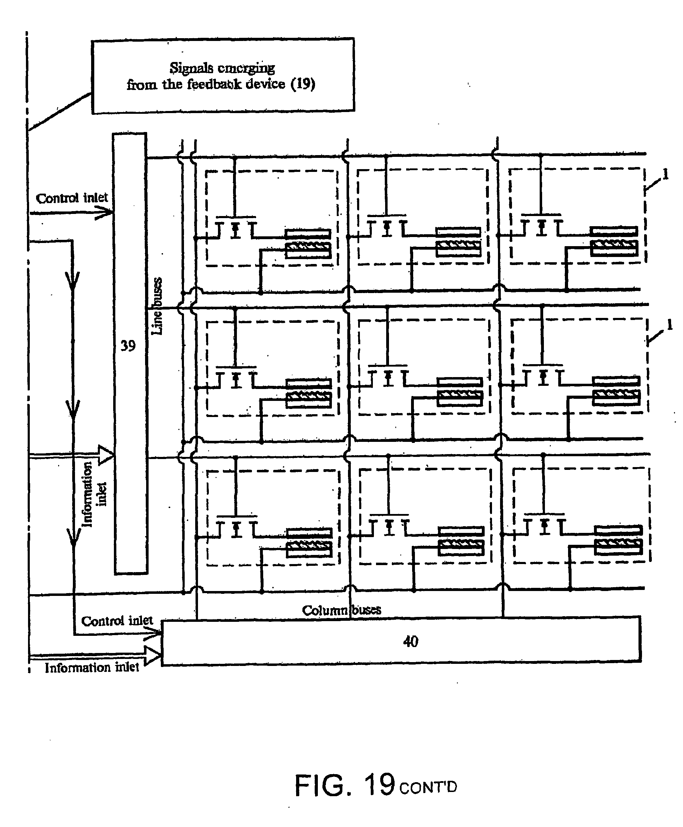

The light modulator (14) of Figure 5 operates as follows, with reference also to Fig. 19.

An information signal (in a digital or analogue form) emerging from a source of input electrical signals (18) is transferred to the 2nd inlet of an input electrical signal converter (36). The information contained in these signals can be transferred either stepwise, line by line (e.g., as PAL, SECAM or NTSC standard video signals), or in the parallel-sequential format with the aid of a multibit bus. As can be evidenced from the command signals emerging from the controller (34) and further transferred to the 1st inlet of the input electrical signal converter (36), the latter represents information signals transmitted in the form of information pulses. The duration of the said pulses depends on the time required for the reproduction of one element of the transmitted image on the surface of the output optical signal receptor (17). For example, in the case of frame-by-frame transmission of video signals, the matrix of cells (1) of the light modulator (14) with a deformable gel layer has a rectangular structure and the number of cells (1) in the lines and columns of the matrix coincides with the number of lines in a video image and the number of dots per line, respectively. In such an arrangement, the duration of information pulses at the outlet of the input electrical signal converter (36) cannot exceed the duration of one frame (or a half-frame as in the case of interlaced scanning). In the case of non-interlaced scanning of video signals (wherein the matrix of cells (1) of the light modulator (14) with a deformable gel layer represents a row of parallel electrodes and the number of cells (1) in this row is equal to the number of dots in one video image line), the duration of information pulses at the outlet of the input electrical signal converter (36) cannot exceed the duration of one line. Besides, the duration of information pulses at the outlet of the input electrical signal converter (36) cannot be less than the total time of the development and erasure of a relief on the surface of the deformable gel layer (5) of the light modulator (14).

The information pulses emerging from the input electrical signal converter (36) are transferred to the information inlet of a grey-scale corrector (37) either in a sequential or in a parallel-sequential format (e.g., as lines of a video image). It is known that the grey-scale characteristics of a light modulator (14) with a deformable gel layer (5) (i.e., the dependence of illumination intensity on the surface of the output optical signal receptor (17) in a given point on the voltage applied to the corresponding signal electrode (3)) has an S-shape. In order to correct the shape of grey-scale characteristic curves, the light modulator (14) with a deformable gel layer has been provided with the grey-scale corrector (37) whose outlet is connected with the information inlet of a separator (38), and the 1st and 2nd control inlets are connected with the controller (34) and the bias voltage unit (9), respectively. These elements make it possible to correct, where necessary, the grey-scale characteristics of the light modulator (14) and to give it a linear or any other shape. Within the grey-scale corrector (37), the amplitude of each information pulse increases or decreases depending on the shape of the grey-scale characteristics and the output voltage of the bias voltage unit (9). The correction is performed with the help of command signals transferred from the controller (34) to the 1st control inlet of the grey-scale corrector (37) according to the signals sent to the 3rd inlet of the controller (34) by a feedback device (19). The feedback device (19) may include one or more photosensors in the plane of the signal receptor (17).

The shape of the corrected grey-scale characteristic curve depends on the specific function of the single-colour transformable optical system. If the latter is used as a TV projector, the non linearity of the said curve at extremely low or extremely high voltages will narrow the range of admissible control voltages; in this case, it is desirable to enlarge the linear segment of the grey-scale curve. It is also possible to attain not only smooth but also discrete multilevel (including two-level) correction where illumination intensity on the surface of the output optical signal receptor (17) approximates zero at the instantaneous value of the signal voltage at the $i$-th signal electrode (3), $U_{sign.i}$, which is less than a certain threshold value, $U_{thresh}$, and is maximum at $U_{sign.i} > U_{thresh.}$ .

The information pulses with a corrected amplitude are further transferred to the information inlet of the separator (38). The separator (38) and the controller (34) record these pulses into the cells (1) of the light modulator (14) in accordance with the "tact" or clock pulses emerging from a synchroniser (35).

In the case of line-by-line transmission of TV signals, the input electrical signal converter (36) forms video frames consisting of a definite number of lines (625 lines for a PAL - SECAM standard and 525 lines for an NTSC standard). In order to record the $i$-th line, the separator (38) first transfers the line to a column buffer (40) and then sends a recording signal to the information inlet of a line buffer (39). Then the controller (34) sends a pulse to the control inlet of the line buffer (39) which recognises this particular line in the matrix of cells (1) of the light modulator (14) as corresponding to the $i$-th line of the input signal. Along this pulse, the recording signal from the separator (38), which triggers switch devices (41), is transferred to the control record-erasure inlets of all switch devices (41) of the selected line in the matrix of cells (1). Then the pulse generated by the controller (34) is applied to the control inlet of the column buffer (40) which sets the voltages for the dots in the $i$-th line previously recorded into the column buffer (40) from the separator (38). These voltages are further supplied to the signal electrodes (3) of the cells (1) of the light modulator (14) through the record-erasure inlets of the triggered switch devices (41). After the required voltages of the $i$-th line of the input signal have been set at the signal electrodes (3) as corresponding to the $i$-th line of the matrix of cells (1) (this time should not be 10 $N$ times less than the frame duration, where N is the number of lines in one frame), the controller (34) switches off the column buses from the column buffer (40) and the separator (38) stops the transmission of the recording signal to the information inlet of the line buffer (39). Then, the $(i+1)$th line is recorded into the cells (1) of the light modulator (14) in the same succession. Information or any other signals emerging from the source of input electrical signals (18), which generates signals controlling the operation of other devices within the light modulator, are sent to the inlet of the synchroniser (35) and the 2nd inlet of the controller (34).

The electrical signals emerging from these devices, $U_{elect.i}$, as voltage pulses of identical shape and duration but of different amplitude (which correspond to the incoming information) are sent along line and column buses to the signal electrodes (3) of all cells (1) of the light modulator (14) with a deformable gel layer. Their passage generates ponderomotive forces at the interface between the deformable dielectric layers (4, 5) in each cell due to different dielectric permitivities of the said layers. These forces cause a deformation of the interface whose extent depends on the voltage applied to the signal electrodes. At least one of the two deformable layers (4 or 5) in each cell should be gel-like. If the second layer is also a gel, its dielectric permitivity should differ from that of the first layer.

The geometric relief recorded on the surface of the deformable gel layer (5) is reproduced on the surface of the output optical signals receptor (17) as a line consisting of dots (see above).

The support voltage unit (8) and the bias voltage unit (9) fulfil the following functions. The intensity of ponderomotive forces in a given point on the free surface of the deformable gel layer (7) is roughly proportional to the square of strength of the electric field in the said point (in one of the two adjacent media). The strength of an electric field created by a certain signal electrode (3) is proportional to the voltage between this signal electrode (3) and the substrate electrode (6) within the same cell (1), i.e., the strength of an electric field formed underneath the $i$-th signal electrode (3) at a definite instant of time is proportional to $[U_{elet.i} - U_{support}]$, where $U_{support}$ is the instantaneous value of the support voltage generated by the support voltage unit (8), $U_{elect.i} = (U_{sign.i} + U_{bias})$ is the voltage at the $i$-th signal electrode (3), $U_{sign.i}$ is the instantaneous value of the signal voltage at the $i$-th signal electrode (3) and $U_{bias}$ is the instantaneous value of the bias voltage generated by the bias voltage unit (9).

For a certain relief depth, $A_i$, we obtain:

$$A_i = [U_{sign.i} + U_{bias} - U_{support}]^2 = U^2_{support} - 2\,U_{support} \cdot [U_{sign.i} + U_{bias}] + [U_{sign.i} + U_{bias}]^2.$$

The first term in this expression cannot induce a relief, since the additional electric field created by the support voltage unit (8) is homogenous. If $U_{support}$ exceeds $[U_{sign.i} + U_{bias}]$ 5- to 10-fold, the third term (in contrast with the second one) can be neglected. Therefore, for the proposed device:

$$A_i \sim U_{support} \cdot [U_{sign.i} + U_{bias}]. \quad (1)$$

It follows from the above formula (1) that the support voltage, $U_{support}$, provides the required sensitivity of the light modulator (14) owing to the formation of an additional spatially homogenous component of electric field strength at the interface between two deformable dielectric layers (4, 5). This permits the application of several times lower voltages to the signal electrodes (3) in comparison with systems which do not utilise support voltage units (8) and, within a certain range of signal voltages, ensures the linear dependence of illumination intensity in some point on the surface of the output optical signal receptor (17) (e.g., on the screen) on signal voltage, $U_{sign.i}$, which considerably improves the quality of displayed half-tone images. The linear segment, MN, of the grey-scale characteristic curve for a cell (1) of the light modulator (14) is shown in Fig.21b.

The application of bias voltage units (9) makes it possible to minimise the effect of the initial non-linear segment of the grey-scale characteristic curve of the light modulator (14) on the image quality. This unit shifts the reference point of signal voltages to the initial point of the linear segment of the grey-scale characteristic curve (in Figs. 21 a and b, $I_{backgr.}$ is the background intensity of the light flux).

In the proposed optical systems, the support voltage, $U_{suppot}$, and the bias voltage, $U_{bias}$, may be constant or alternating. In the latter case, higher quality of video images can be attained through elimination of charge inleakage in the deformable gel layer (5). Assume that the support voltage, $U_{support}$, and the bias voltage, $U_{bias}$, are constant and that rectangular voltage pulses are sent to the signal electrodes (3). Under these conditions, the support voltage will induce the inleakage of electric charges from the depth of the deformable gel layer (5) to the interface between the deformable layers (4, 5) in all cells (1) of the light modulator (14). This phenomenon, which has been observed experimentally, may be due to the presence in the dielectric gel layer (5) of low-molecular-weight admixtures (e.g., residues of a crosslinking reagent or a catalyst), moisture, etc., thermal ionisation of macromolecules and contaminant molecules, slow relaxation, charge injection from the support electrode, etc. The total quantity of the accumulated charge is proportional to the support voltage and does not change with time. When a square voltage pulse is sent to a certain signal electrode (3), the electric charges will run off along the interface between the deformable layers to be accumulated underneath the signal electrode. According to experimental data, the time constant of this charge flow is two or three orders of magnitude higher than the time of development (and erasure) of the relief. Therefore, if single voltage pulses are applied, electric charges will remain uniform and will not influence upon the relief (and, correspondingly, upon the quality of the recorded information). However, if voltage pulses with a low (2 to 4) on-off time ratio are sent in series, the amplitude of the relief will gradually increase from pulse to pulse due to charge inleakage and the relief will not be erased completely in the time between the pulses. If this sequence of pulses represents a line or a column projected onto the plane of the output optical signal receptor (17), the first projected dots will be dim, while the last dots will be luminous, although all of them are expected to be of equal brightness.

Charge inleakage can be prevented by high-frequency filling of control pulses. Each voltage pulse, $U_{sign.i}$,

applied to the $i$-th signal electrode is filled with a bipolar voltage. (Fig. 3 provides an illustration of rectangular control pulses filled with rectangular bipolar voltages). The support voltage, $U_{support}$, and the bias voltage, $U_{bias}$, should have the same structure as the high-frequency bipolar filling of control pulses, $U_{sign.i}$. The support voltage, $U_{support}$, should be antiphasic, while the bias voltage, $U_{bias}$, should be synphasic to $U_{sign.i}$ (Fig. 3). In the physical sense, the possibility of using voltages of different polarity is due to the fact that in the absence of volume charges in deformable layers and in the absence of surface charges at the interfaces between the deformable layers (4, 5), the intensity of surface and volume forces will not depend on the minus(plus) sign of the voltages at the signal (3) and support (6) electrodes of the light modulator cells (1) but, rather, on the square of their algebraic sum, i.e., $[U_{sign.i} + U_{bias} - U_{support}]^2$, i.e., the amplitude of a relief will not change but the electric charges will flow in the opposite direction if the (minus)(plus) signs of all the voltages applied change to the reverse at identical absolute values. By changing rapidly the voltage polarity, one can generate electric charges that would be evenly distributed across the whole surface of the deformable gel layer (5), but the development and erasure of the relief will be insensitive of this change. It should be noted also that in actual practice the rate of charge inleakage may differ drastically for positive and negative voltages of identical absolute value. For example, if the substrate electrode - deformable gel layer junction (volt-amperic characteristics) is asymmetric, the charges will be rapidly injecting into the gel and then flow back into the substrate electrode (or out of it); therefore, a certain freedom in the selection of high-frequency bipolar filling is required. This can be achieved by varying the duration and amplitudes of positive and negative segments for all the voltages with constant periods and amplitudes. The amplitude and duration of positive ($U^+$ and $\tau^+$) and negative ($U^-$ and $\tau^-$) segments are shown in Fig. 3. With a change in these parameters, the period, $T = \tau^+ + \tau^-$, and the overall amplitude, ($U^+ + U^-$), will remain constant. If the period, $T$, is far less than the mechanical time constant for the development and erasure of a relief (for the silica gel proposed, $T$ is ~ 0.3 - 1 $\mu$s), the gel will not react to the fast change in $[U_{sign.i} + U_{bias} - U_{support}]^2$ but will react to its medium value, $U_{med}$. If the amplitude and duration of positive and negative segments of high-frequency bipolar filling change at constant $U_{med}$, the amplitude of the relief will not change either but charge inleakage will be eliminated.

And, finally, it has to be remembered that such an equilibrium of charges in the gel may not be stable, i.e., a slight change in $U^+$, $U^-$, $t^+$ or $t$ will initiate a new inleakage of electric charges. Therefore, high-frequency bipolar filling demands a feedback where an optical signal is received from the relief formed underneath one of the signal electrodes (3) with the aid of the output optical signal receptor (17) which provides information about charge accumulation. This information is supplied to the controller (34) of the light modulator with a deformable gel layer which adjusts the amplitudes and duration of segments of high-frequency bipolar filling in order to eliminate charge inleakage. Since in the absence of charge inleakage the relief should be minimum, the controller (34) has to maintain the signals leaving the output optical signal receptor at the minimum level (17). This feedback is distinct from the correction of grey scale or other characteristics.

It has to be noted that the rectangular shape of the high-frequency bipolar filling depicted in Fig. 3 is not unique and voltage pulses can also acquire trapezoidal, saw-tooth or any other shape.

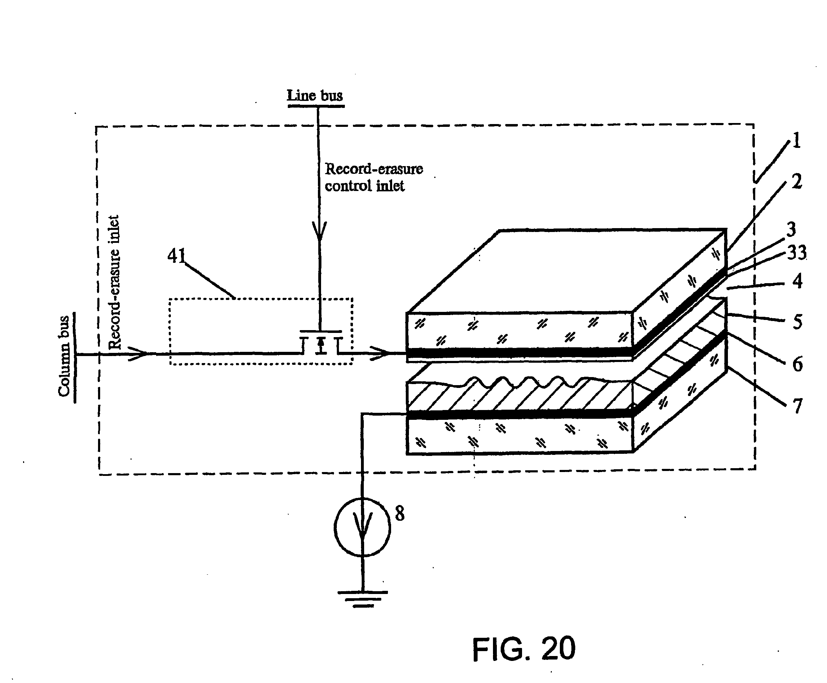

In order to protect the surface of the signal electrode from dust and oxidation by the moisture present in the atmospheric air, the signal electrodes (3) in each cell (1) of the light modulator (14) with a deformable gel layer may be coated with a dielectric layer (33) as shown in Fig. 20, which can protect the electrodes. Additionally or alternatively, such a dielectric layer can be formed as a dielectric mirror. This is of use in an optical system in which reading light is reflected from the dielectric layer (33) and then in the opposite direction, i.e. through the layers (4) and (5), after passage through the dielectric layers (4) and (5).

In reflection of the light from the dielectric layer (33) it is necessary to avoid additional modulation of the light beam. To ensure this, the reflecting surface of the layer (33) should be made as plane as possible and not mimic the contours of the electrodes underneath the layer. Thus, preferably the planar surface of the layer (33) should not incline by more than 0.1 $\mu$m over a 50 mm length, and the size of any local defects on the surface (protrusions, holes) should not exceed one tenth of the wavelength of the reading light.

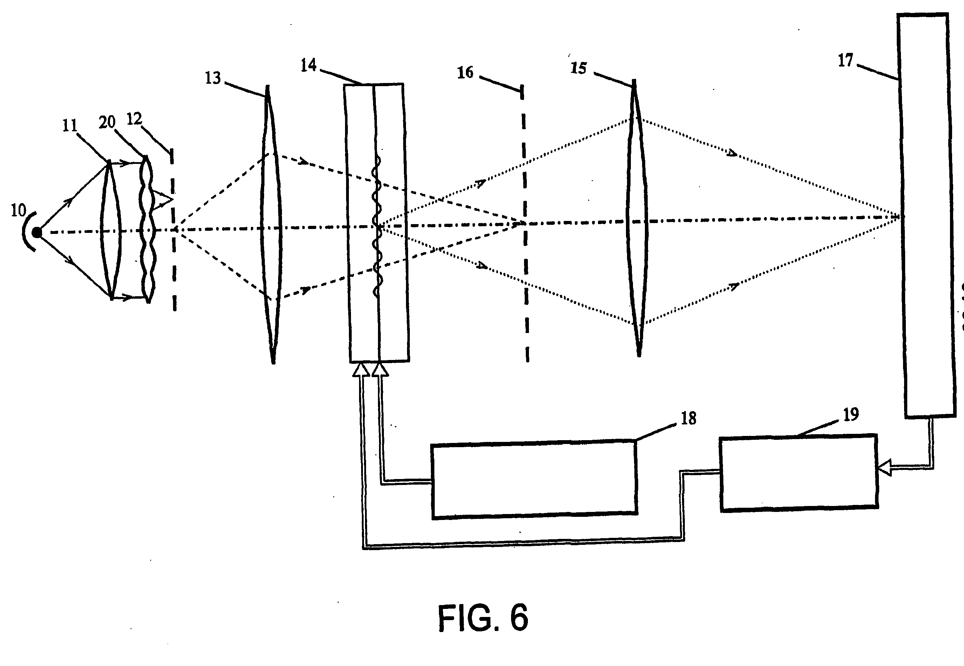

If a light modulator utilises a thermal light source (10), the efficient size of its radiating element may be so large that efficient focusing at the second diaphragm (16) will be inevitably associated with considerable light losses. To prevent this, a single- or a multicomponent lens raster (20) whose focal plane coincides with that of the first diaphragm (12) may be placed between the condenser (11) and the first diaphragm (12) (Fig. 6). The introduction of a raster is equivalent to the splitting of a single light source (10) with a bulky radiating element into several independent light sources of lower power and a smaller effective size of the luminous element.

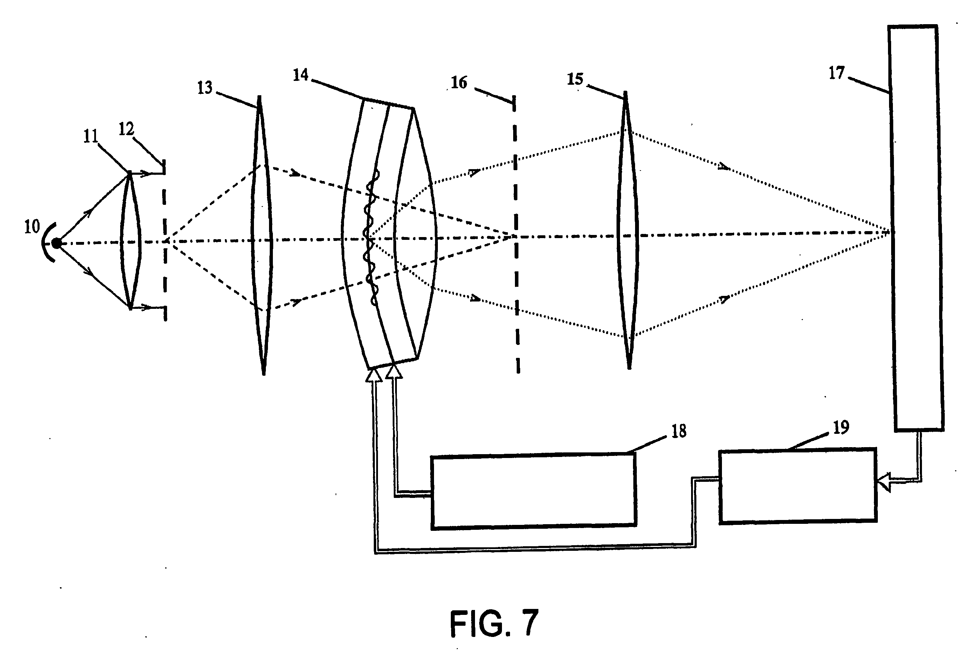

In order to reduce the number of lenses, the interface between the deformable layers (4, 5) of the light modulator with a deformable gel layer may be shaped as a curved cylindrical, spherical or any other surface, while one or both dielectric substrate(s) (2, 7) to which electrodes are applied, may be made as single- or multicomponent objectives (Fig. 7).

Yet another advantage of the curved shape of the interface between the deformable layers is that it excludes distortion of projected images even when a planar screen (17) is used.

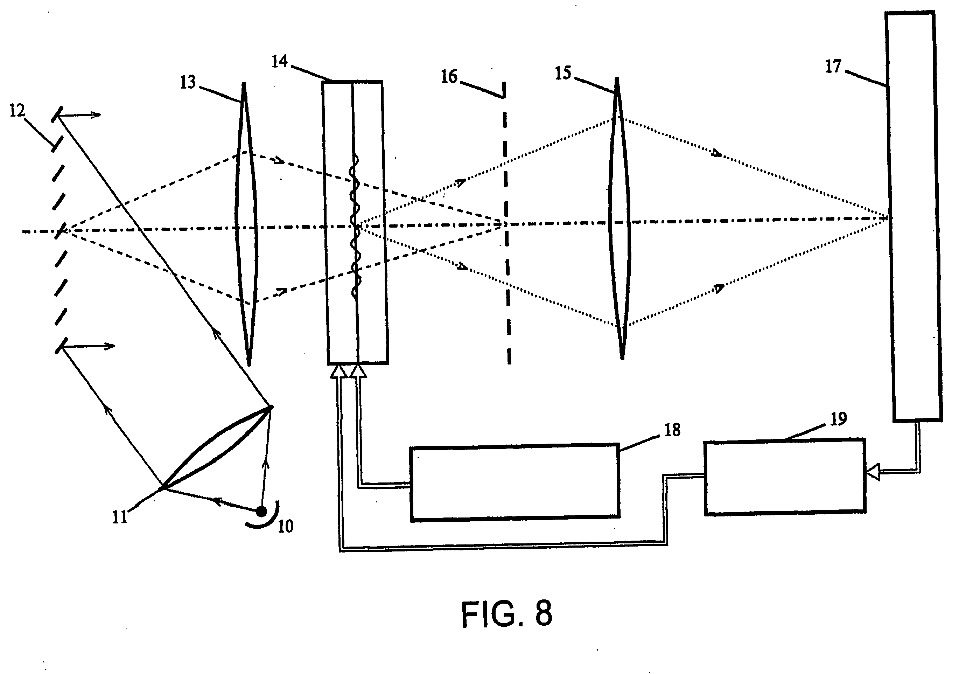

In order to minimise light losses by elements of the first diaphragm (12), the optical axis of the light source (10) and the condenser (11) may be placed at an angle to the main optical axis and the first diaphragm (12) has been made in the form of reflecting elements (21) (Fig. 8). These elements can be made in the form of reflective mirrors. In this case, the position of the mirrors and their tilting should be such that the whole quantity of the light emitted by the light source (10) will be deflected by the mirrors and sent to the light modulator (14). Alternatively, the reflective mirrors can be made in the form of a set of total internal reflection prisms. In this case, the light is absorbed exclusively during its passage through the glass, being reflected from the prism=s legs, while the loss of the light reflected from the hypotenusal faces of the prisms (21) is virtually zero.

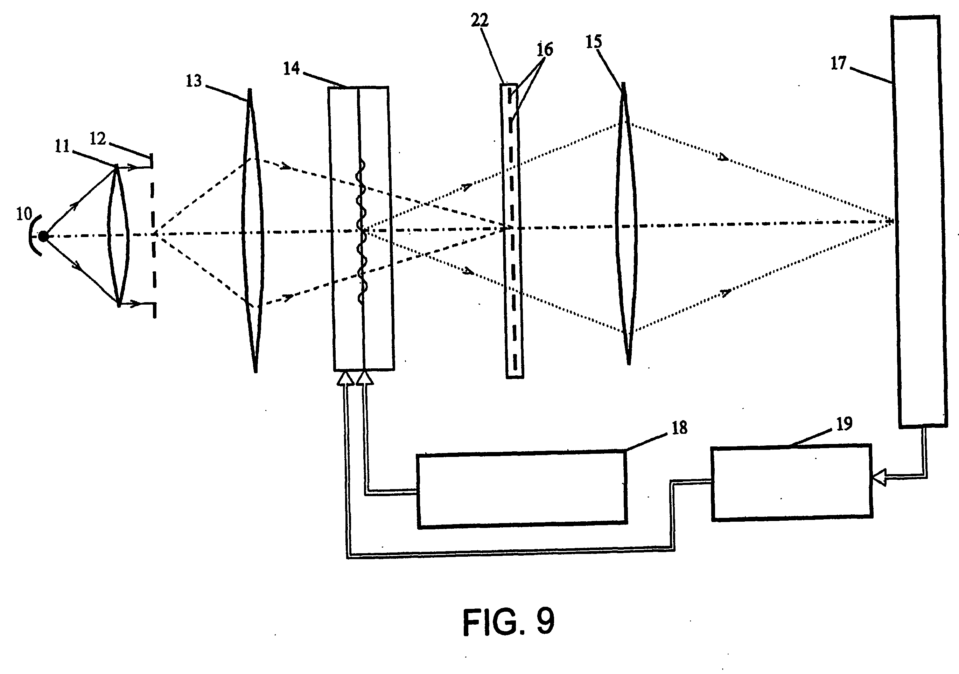

In actual practice, lenses may contain some internal microinhomogeneities (e.g., bubbles) or their surface and the interface between the deformable layers (4, 5) in the cells of the light modulator (14) with a deformable gel layer (5) may be covered with dust which causes diffusion of the incident light. In the absence of a relief (i.e., in the absence of signal electrode voltage), some part of the light flux bypasses the second diaphragm (16) and is further transferred to the output optical signal receptor (17), which significantly worsens the image contrast. To exclude excessive background light, some elements of the adaptive amplitude filter for absorption of Fourier-transformation images of noise (22) may be placed into the plane of the second diaphragm (16) (in the spacings between the elements)(Fig. 9).

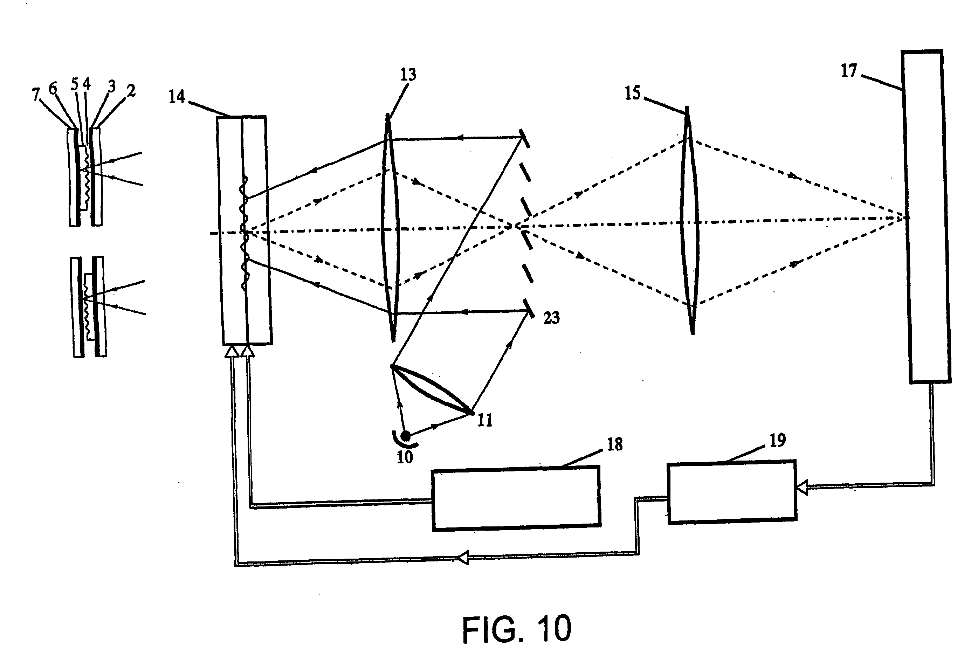

One of the electrodes (3 or 6) in each cell (1) of the light modulator (14) within the single-colour transformable optical system may be made as a reflecting electrode. The reflecting surface formed by the electrodes (3 or 6) in all cells (1) of the light modulator (14) is beyond the deformed interface on the route of the incident light passing through the light modulator (14); the optical axes of the light source (10) and the condenser (11) are at an angle to the main optical axis; the first (12) and second (16) diaphragms are combined to form a common spatial-frequency raster of reflecting elements (23) so that the incident light from the condenser (11), which is placed at an angle to the main optical axis, is fully reflected, first in the direction of the light modulator (14) and then in the opposite direction, i.e., towards the system of mirrors (23); the shape of the constituent elements in the system of mirrors (23), their tilting relative to the main optical axis and the distance between the raster elements (23) have been selected so that the surface of the common spatial-frequency raster (23) is optically self-conjugated and represents the surface of a spatial-frequency Fourier-transformation image of the interface between the deformable layers (4, 5), while the surface of the interface between the said layers (4, 5) has been optically conjugated with the surface of the output optical signal receptor (17) (Fig. 10).

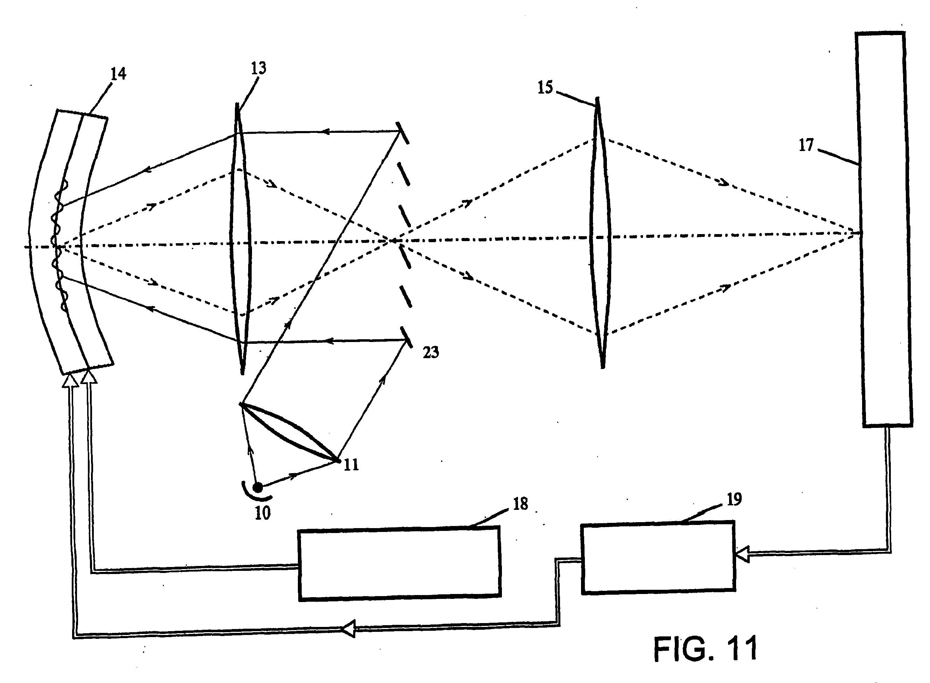

In preparing a single-colour transformable optical system, it is possible to reduce the number of lenses in the composite illuminant objective (13). To provide this, the integral elements of all cells (1) of the light modulator (14) with a deformable gel layer (5) may be made with a cylindrical or spherical curvature so that the reflecting surface formed by the curve-shaped deformable layers (4, 5) or the electrodes (3, 6) of all cells (1) could focus the light (Fig. 11). The integral elements of the said cells (1) can also be made with a curvature of any other shape, e.g., in order to avoid image distortions on the surface of the output optical signal receptor (17), to confer some special properties to projected images, etc.

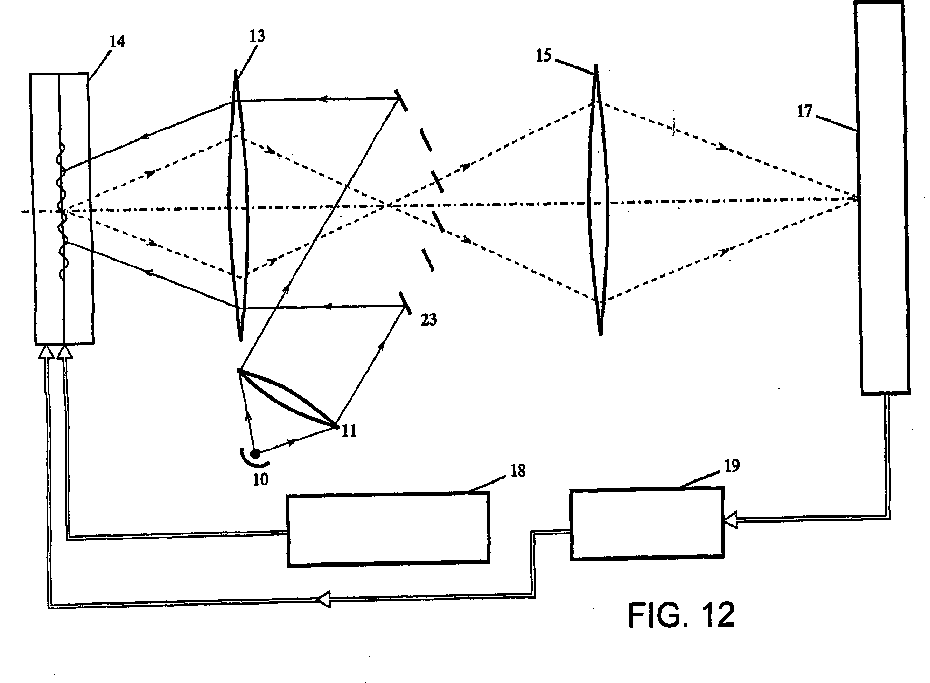

In order to reduce the number of lenses in the composite illuminant objective within a single-colour transformable optical system with a reflecting interface between the deformable layers, the reflecting elements of the common spatial-frequency raster (23) may be made with a curvature so that their overall design represents a concave surface able to focus the incident light (Fig. 12).

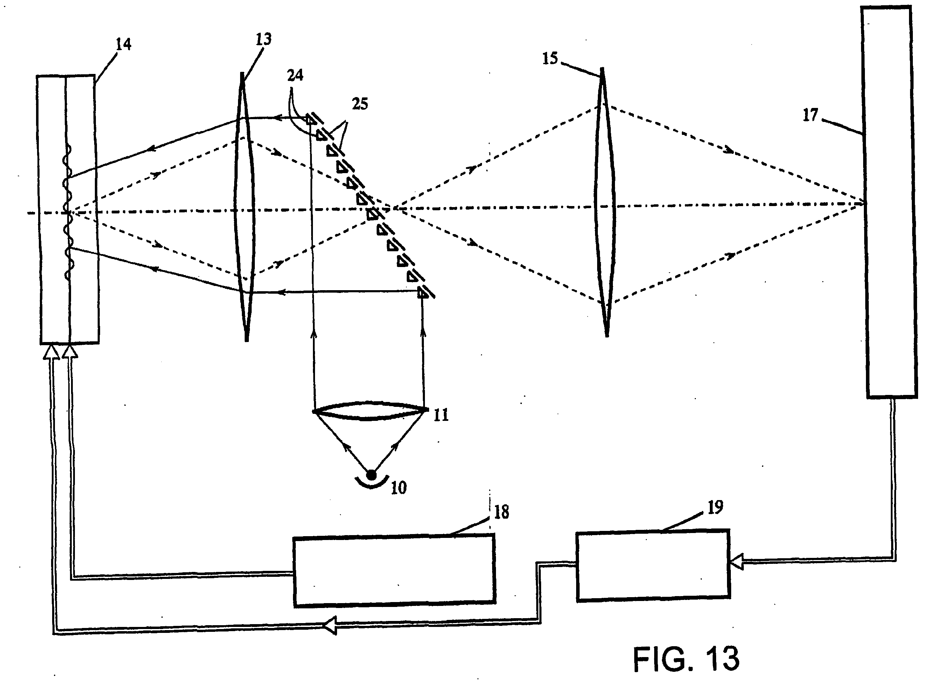

In order to minimise light losses resulting from light reflection from the common spatial-frequency raster, the common spatial-frequency raster may be made as a set of total internal reflection prisms (24). Also, an absorbing plate (25) may be placed with a small spacing behind and parallel to the hypotenusal face of each prism (24) (Fig. 13) in order to stop diffracted light of zero orders reflected from the deformed interface.

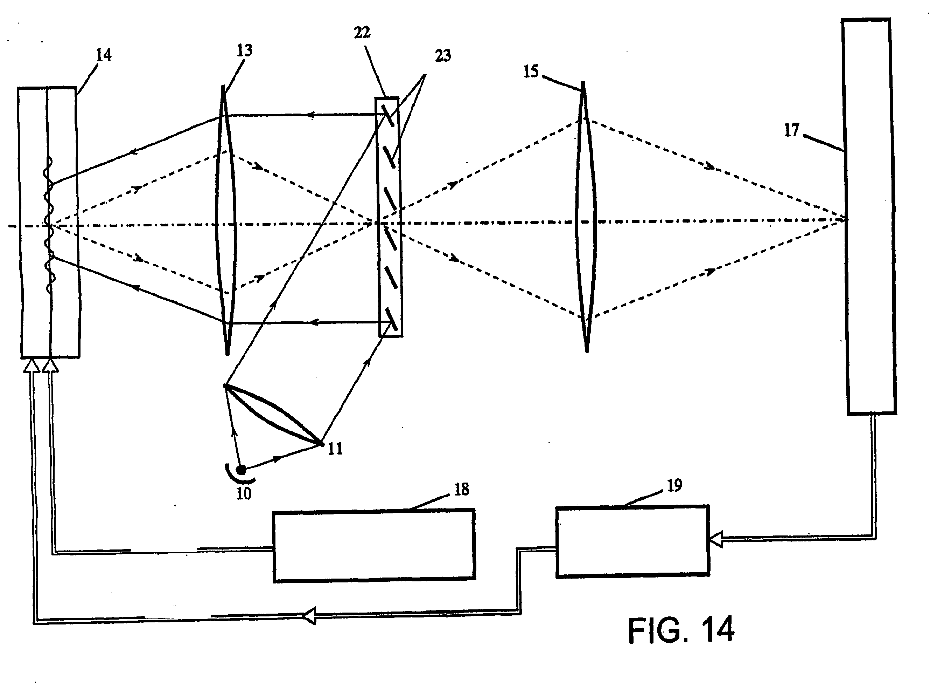

Similar to a single-colour transformable optical system with a transparent light modulator (14), the integral elements of the adaptive amplitude filter for absorption of Fourier-transformation images of noise (22) may be placed in the plane of the common spatial-frequency raster of reflecting elements (23) in the spacings between the elements of the light modulator (14) with a reflecting interface between the deformable layers (4, 5) in order to prevent excessive background light (Fig. 14).

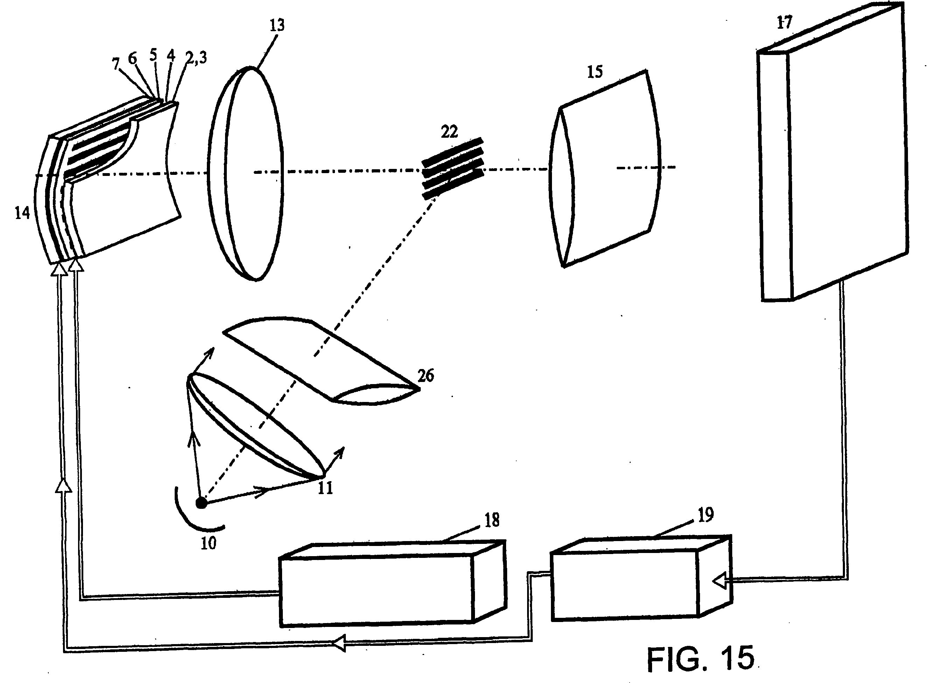

In order to reduce the number of lenses and to diminish the size of the single-colour transformable optical system based on a light modulator (14) with a reflecting interface between the deformable layers (4, 5), the light modulator (14) may be made with a curved cylindrical surface; the matrix of cells (1) of the light modulator (14) may be specially designed for line-by-line input of information so that the signal electrodes (3) of all cells (1) should be linear and parallel to each other; the common spatial-frequency raster of reflecting elements (23) may be made in the form of parallel bars; the composite projection objective (15) has been designed to comprise at least one cylindrical lens; an additional cylindrical objective (26) may be placed between the condenser (11) and the common spatial-frequency raster of reflecting elements (23); the generatrices of the curved surface of the light modulator (14), the cylindrical lens of the composite projection objective (15) and the linear signal electrodes (3) of the light modulator (14) may be made parallel to one another and to the bars of the common spatial-frequency raster of the reflecting elements (23) but perpendicular to the elements of the additional cylindrical objective (26) (Fig.15).

With such a construction of a single-coloured transformable optical system, the output light flux emerges as a narrow, blade-like beam whose intensity is matched with the intensities of the electrical signals at the signal electrodes (3).

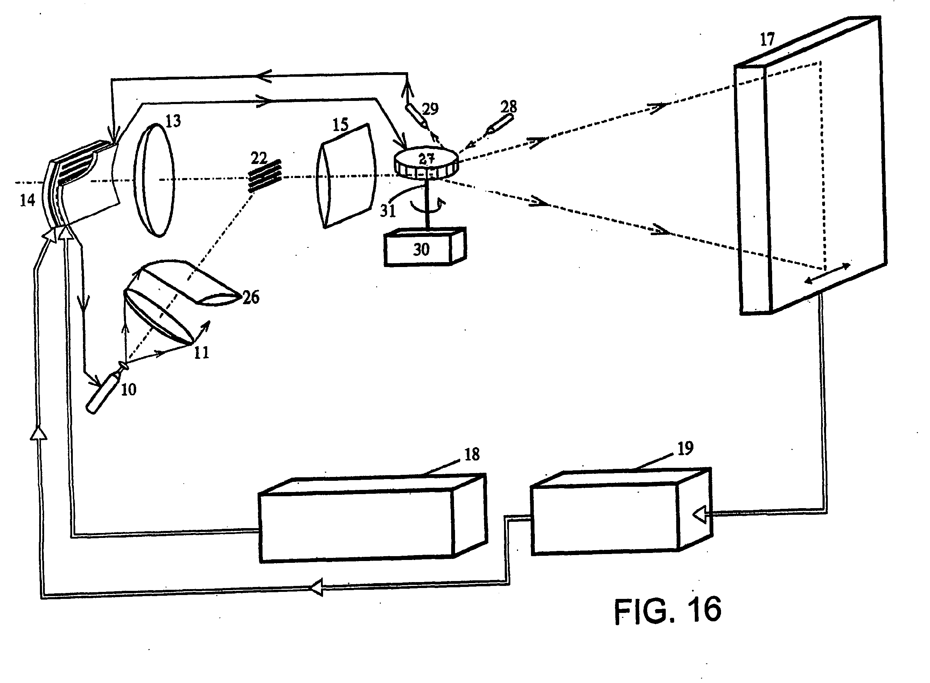

To provide line scanning, a scanning mirror device (27) may be placed between the composite projection objective (15) and the surface of the output optical signal receptor (17). Besides, the system may be provided with a second light source element (28) and a photosensor (29) adjacent to the scanning mirror device (27) so that the incident light from the said element (28) is reflected from the said device (27) and sent to the photosensor (29) (this occurs only once during a scanning cycle); the light source (10) is of pulse type, is triggered externally and is connected with the controller (34) of the light modulator (14) with a deformable gel layer; the photosensor (29) is connected with the synchroniser (35) of the light modulator with a deformable gel layer; the electric motor (30) is connected with the controller (34) of the light modulator (14) with a deformable gel layer; the rotation axis (31) of the scanning mirror device (27) is perpendicular to the generatrices of the curved surface of the light modulator (14) with a deformable gel layer (5), to the cylindrical lens of the composite projection objective (15) and to the linear signal electrodes (3) of the light modulator (14) with a deformable gel layer (5) (Fig.16);

The perpendicularity of the rotation axis (31) of the scanning mirror device (27) to the generatrices of the curved surface of the light modulator (14) with a deformable gel layer, to the cylindrical lens of the composite projection objective (15) and to the linear signal electrodes (3) of the light modulator (14) with a deformable gel layer features such a construction that would ensure the projection of a straight light line onto the surface of the output electrical signal receptor (17) (e.g., in the plane of the screen); the intensity of the dots in the projected lines is modulated with the voltages applied to the signal electrodes (3); within one scanning cycle, the line passes once over the entire extent of the screen of the output optical signal receptor (17), being parallel to itself.

The parallelism of the generatrices of the curved surface of the light modulator (14), the cylindrical lens of the composite projection objective (15) and the linear signal electrodes (3) of the light modulator (14) relative to one another and to the bars of the common spatial-frequency raster of reflecting elements (23) and their perpendicularity to the generatrices of the additional cylindrical objective (26) preclude optical distortion and worsening of the image quality on the surface of the output optical signal receptor (17) due to illumination of the relief surface at the interface between the deformable layers (4, 5) by a light flux converged into a narrow blade-like beam in a direction perpendicular to the linear signal electrodes (3).

This circumstance is of particular importance in those cases when the surface of the deformable gel layer (5) and the surface of the output optical signal receptor (17) are either non planar, or planar but not parallel to each other. In this case, optical distortions are at minimum, which in the proposed version of a light modulator is attained through a specific mutual arrangement of the linear signal electrodes (3), the generatrices of the composite objectives (13, 15) and the scanning mirror device (27). Other embodiments of the light modulator utilise the so-called *oblique projection+ for relief visualisation which significantly complicates the construction of the composite objectives (13, 15) and the scanning mirror device (27) and does not allow one to achieve, even in the present state-of-the-art, the image quality that would compare favourably with that attained in the proposed version of a single-colour transformable optical system.

The coupling of the electric motor (30) of the scanning mirror device with the controller (34) of the light modulator with a deformable gel layer ensures high stability of scanned images projected on the surface of the output optical signal receptor (17) (e.g., on the screen) throughout the whole duration of a frame due to continuous matching of scanning frequency with image frame rate.

The coupling of an externally triggered pulse-type light source (10) with the controller (34) of a light modulator (14) with a deformable gel layer has provided maximum illumination intensity (at a given power of the light source (10) and within this particular design of a single-colour transformable optical system) on the surface of the output optical signal receptor (17) (e.g., on the screen) and thus significantly improved the image quality. If the light source in the proposed version of a light modulator is of pulse type, the synchroniser (35), besides its main function (i.e., processing of input electrical signals), ensures synchronous operation of the light modulator (14) with a deformable gel layer and the light source (10). To achieve this, tact signals are transferred from the source of input electrical signals (18) to the synchroniser (35) at the beginning of each image frame, while pulses from the photosensor (29) are transferred to the synchroniser (35) at the beginning of each scanning cycle, e.g., at the moments when the faces of the scanning mirror device (27) are alternating (if the scanning mirror device has been made in the shape of a rotating multifaceted mirror drum, each of its facets will scan one image frame in the course of its rotation). The synchroniser (35) compares the scanning frequency of pulses emerging from the photosensor (29) (which coincides with the rate of the alternating facets of the revolving mirror drum) with the frame rate and sends a signal to the controller (34) connected with the electric motor (30) so that the scanning frequency is continuously matched with the frame rate. Incoming signals emerging from the photosensor (29) at the beginning of each scanning cycle are transferred to the synchroniser (35) which, in turn, sends a command signal to the separator (38), which ensures line-by-line passage of the image frame to the signal electrodes (3) of the light modulator (14). Meanwhile, the next image frame is being stored in the memory of the input electrical signals converter (36) and the whole cycle is repeated.

The controller (34) provides the operation of the pulse-type light source (10) in the following way (Fig.21a). The repetition frequency of the light pulses, $I_\rho$, emerging from the light source (10) is matched with the scan-line frequency by the controller (34). The time of switching of light pulses is predetermined by the synchroniser (35) so that the light flux projected on the screen (17) should be at maximum. Fig.21a shows that at definite duration and amplitude of the light pulses, $I_\rho$, this is achieved by switching on the light pulses short before the back front of the signal pulses, $U_{elect.i}$. In this case the light flux, $W_{outi} = II_{outi}dt$ projected on the screen (17) will be at maximum.

In order to simplify the production technology, the support electrodes (6) in all cells (1) of the light modulator (14) may be made as a common support electrode, while the deformable gel layers (5) in all cells (1) of the said modulator (14) may be made as a common deformable gel layer.

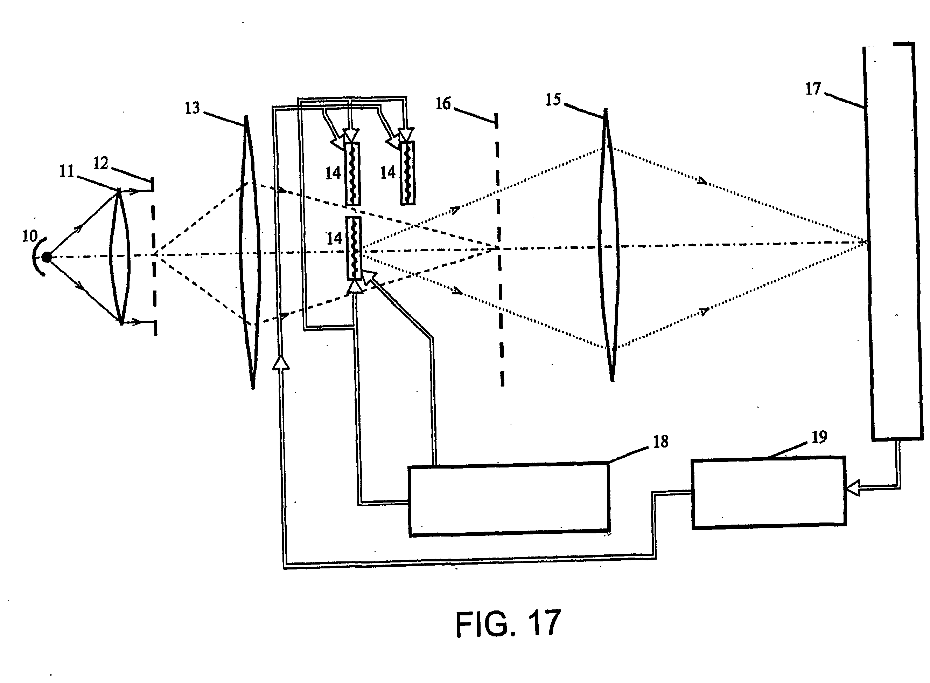

In order to provide dynamic control of laser radiation wave fronts, trick effects, etc., the single-colour transformable optical system may be provided with one or several light modulators (14) with a deformable gel layer (Fig. 17).

The second diaphragm (16) may be placed behind the composite projection objective (15). In this case, the single-colour transformable optical system operates in the following way. The condenser (11), the first diaphragm (12) and the composite illuminant objective (13) send the light flux from the light source (10) to the surface of the deformable gel layer (5) of the light modulator (14) and then to the composite projection objective (15). If the free surface of the said layer (5) is planar, the composite projection objective (15) sends the whole light flux to the second (opaque) diaphragm (16) or projects the surface of the deformable gel layer (5) onto the surface of the output optical signal receptor (17), if the said layer has some deformities. Since light fluxes of zero orders of diffraction are stopped by the second diaphragm (16), the intensity of the projected line is modulated with the amplitude of the relief reproduced on the surface of the deformable gel layer (5). The additional cylindrical objective (26) placed between the light source (10) and the light modulator (14) with a deformable gel layer (Figs. 15 and 16) sets the width of the straight line projected onto the surface of the output electrical signal receptor (17). A combination of spherical and cylindrical objectives provides optical conjugation of the surfaces of the first (12) and second (16) diaphragms with the surfaces of the deformable gel layer (5) and the output optical signal receptor (17).

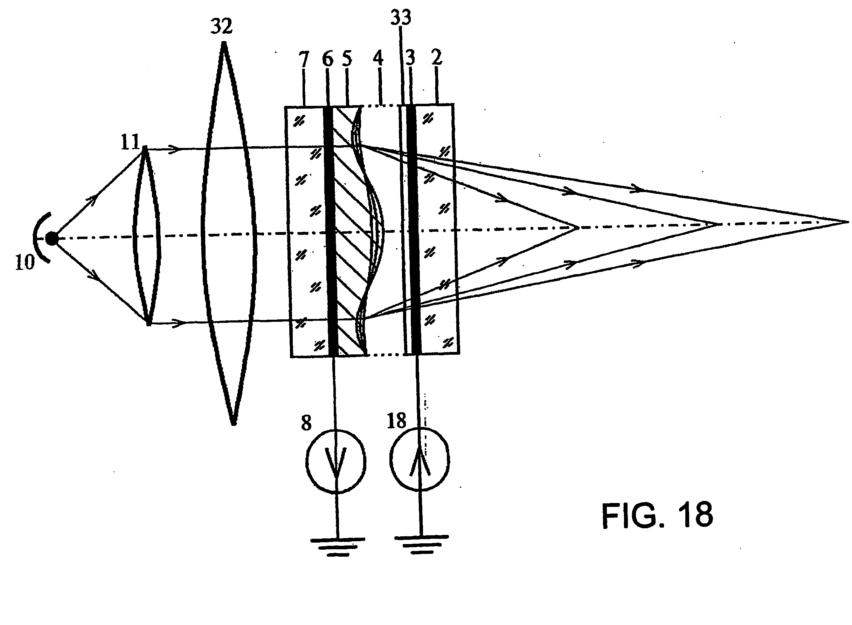

In Figure 18 there is disclosed a focusing system with a light modulator (14) with a deformable gel layer. The modulator (14) is situated on the optical axis behind the lens (32) and comprises a cell (1) with a deformable gel layer (5) in order to ensure focal length control. If under the influence of signal electrode (3) voltages the relief surface of the deformable gel layer (5) takes the shape of a lens, the focal length of the optical focusing system will change. By changing the radius of curvature of the deformable gel layer (5) surface, the focal length can be varied, the rate of this process being dependent on the rate of development of a relief.

Different voltages may be applied to the signal electrodes of all cells (1) of the light modulator (14) so that the distribution of the electric potential across the plane of the signal electrodes (3) and at the interface between the deformable layers is not rastered, which ensures space-time control of the relief shape in accordance with a certain law (Fig. 18).

The signal electrode in each cell (1) of the light modulator (14) may be made in the form of bands, concentric rings, a matrix of elements, or elements of any other structure (42), each of the said elements being connected with the outlet of its own switch device (41); the record-erasure control inlets of the said elements have been connected with the line bus, while the record-erasure inlets have been connected with the column bus (Fig. 22). This ensures control of the relief surface at the interface between the deformable layers (4 , 5) both in the absence and presence of rastering of the recorded images (Figs. 22a,b). The size of the signal electrodes may reduce from the centre towards the periphery, as shown, but for a particular relief may remain constant or increase in this direction, or be irregular.

In order to increase twofold the sensitivity of the light modulator (14) to the voltages applied to signal electrodes, each cell (1) of the light modulator (14) with a deformable gel layer (5) formed on the support electrode (6) of each said cell (1) may be provided with a second signal electrode (47) formed on the free surface of the dielectric substrate (2) of the first signal electrode as well as with a second protective dielectric layer (46), a second deformable layer (45), a second deformable gel layer (44), a second support electrode (43), a dielectric substrate (50) of the second support electrode (all arranged in succession on the second signal electrode (47)) and a second switch device (49); the outlet of said device (49) has been connected with the second signal electrode (47), the record-erasure inlet of the said device (49) has been connected with the line bus; the second support electrode (43) has been connected with the ungrounded outlet of the support voltage unit (8), and all the layers in each cell (1) of the light modulator (14) have been made transparent.

In order to increase twofold the sensitivity of the light modulator (14) to the voltages applied to signal electrodes, each cell (1) of the light modulator (14) with a deformable gel layer (5) formed on the support electrode (6) of each cell (1) may be supplied with a second support electrode (43) formed on the free surface of the dielectric substrate (2) of the first signal electrode as well as with a second deformable gel layer (44), a second deformable layer (45), a second protective dielectric layer (46), a second signal electrode (47) and a dielectric substrate (48) of the second signal electrode (all arranged in succession on the second support electrode (43)), as well as a second switch device (49); the outlet of the said device (49) may be connected with the second signal electrode (47), the record-erasure inlet of the said device (49) may be connected with the column bus, and the record-erasure control inlet of the said device (49) may be connected with the line bus, the second support electrode (43) has been connected with the ungrounded outlet of the support voltage unit (8), and all the layers in each cell (1) of the light modulator (14) may be made transparent (Fig.23).

Such a design of cells (1) of the light modulator (14) ensures the application of equal voltages supplied by the column buffer (40) to the both signal electrodes (3, 47) in each cell (1). The above voltages induce the formation of identical reliefs on the surface of the gel at the both interfaces between the deformable layers (4, 5 and 44, 45). As a result, phase modulations of the light fluxes passing through these cells (1) will be twice as great as phase modulations of the light fluxes that have passed through the cell (1) with only one interface at equal geometric sizes of the deformable layers and at equal voltages applied to the signal electrodes (3), i.e., the sensitivity of the light modulator (14) to control voltages will increase twofold.

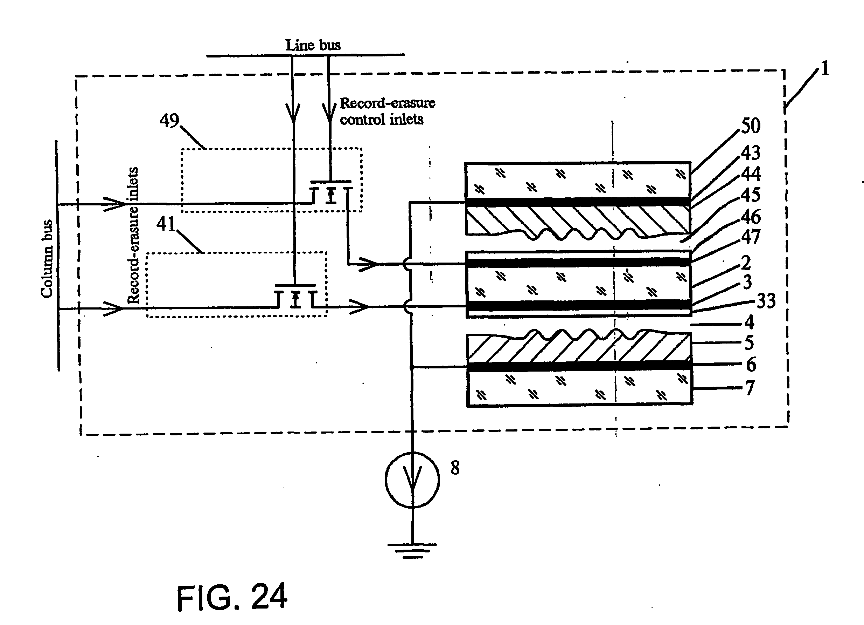

In order to increase twofold the sensitivity of the light modulator (14) to the voltages applied to signal electrodes, each cell (1) of the light modulator (14) with a deformable gel layer (5) formed on the support electrode (6) of each said cell (1) may be provided with a second signal electrode (47) formed on the free surface of the dielectric substrate (2) of the first signal electrode as well as with a second protective dielectric layer (46), a second deformable layer (45), a second deformable gel layer (44), a second support electrode (43) a dielectric substrate (50) of the second support electrode (all arranged in succession on the second support electrode) and a second switch device (49); the outlet of the said device (49) has been connected with the second signal electrode (47), the record-erasure inlet of the said device (49) has been connected with the column bus and the record-erasure control inlet of the said device (49) has been connected with the line bus; the second support electrode (43) has been connected with the ungrounded outlet of the support voltage unit (8), and all the layers in each cell (1) of the light modulator (14) have been made transparent (Fig. 24).

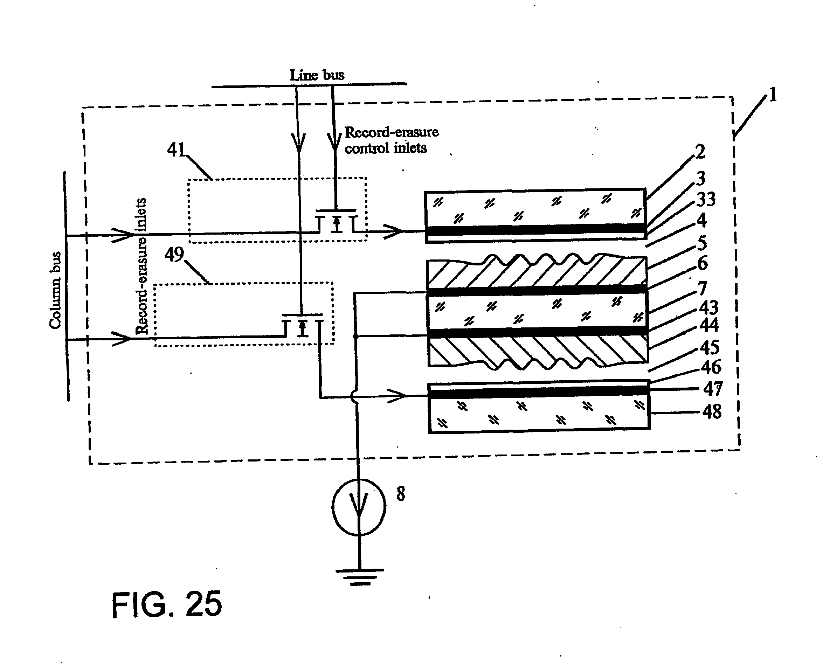

In order to increase twofold the sensitivity of the light modulator (14) to the voltages applied to signal electrodes, each cell (1) of the light modulator with a deformable gel layer (5) formed on the support electrode (6) may be provided with a second support electrode (43) formed on the free surface of the dielectric substrate (7) of the first support electrode as well as with a second deformable gel layer (44), a second deformable layer (45), a second protective dielectric layer (46), a second signal electrode (47) and a dielectric substrate (48) of the second signal electrode (all arranged in succession on the second support electrode (43)) as well as with a second switch device (49); the outlet of the said device (49) may be coupled with the second signal electrode (47); the record-erasure inlet of the second switch device (49) may be connected with the column bus; the record-erasure control inlet of the second switch device (49) may be connected with the line bus; the second support electrode (43) may be coupled with the ungrounded outlet of the support voltage unit (8), and all the layers in each cell (1) of the light modulator (14) may be made transparent (Fig.25).

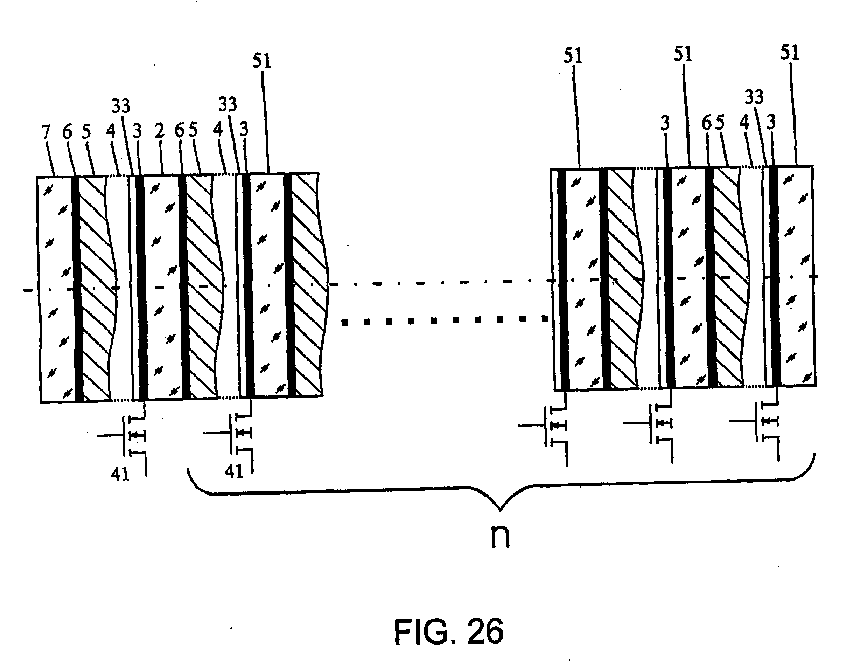

In order to increase many fold the sensitivity of the light modulator (14) to voltages applied to signal electrodes, each cell (1) of the light modulator (14) with a deformable gel layer (5) formed on the support electrode (6) of each cell (1) may be provided with an n-number of alternating dielectric substrates (51), an n-number of signal electrodes (3), an n-number of support electrodes (6), an n-number of protective dielectric layers (33), an n-number of deformable gel layers (5) and an n-number of deformable layers (4); all the additional layers may be made transparent; each substrate (51) may be supplied with a signal electrode (3), a protective dielectric layer (33), a deformable layer (4), a deformable gel layer (5) and a support electrode (6) applied to the adjacent dielectric substrate (51) (all placed in series on one side of the dielectric substrate (51)); a support electrode (6) may be formed on the dielectric substrate of the signal electrode (2); besides, each cell (1) of the light modulator (14) has been provided with an n-number of switch devices (41) whose outlets have been connected with an n-number of additional signal electrodes (3), the record-erasure inlets have been connected with the column bus and the record-erasure control inlets have been connected with the line bus (Fig.26);

With such a design of cells (1) of the light modulator (14), equal voltages supplied by the column buffer (40) are transferred to the n-number of signal electrodes (3) in each cell (1). These voltages induce the formation of identical reliefs at the n-number of interfaces between the deformable layers (4, 5). Accordingly, phase modulations of the readout light passing through such cells will be n-times as great as phase modulations of the light that has passed through the cell (1) having only one interface and the same geometric size of the deformable layers (4, 5) at equal voltage at the signal electrode (3), i.e., the sensitivity of the light modulator (14) to signal voltages has increased *n*-fold.

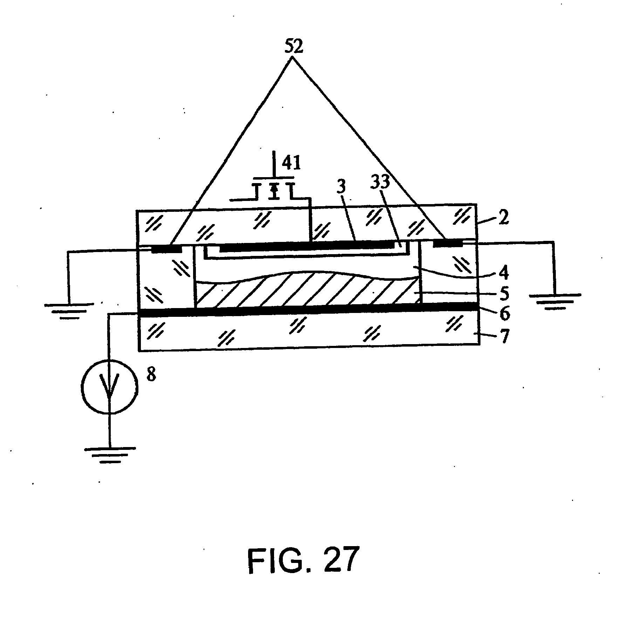

In order to enhance the inhomogeneity of the electric field at the interface between the deformable layers (4, 5) and thus increase the depth of the relief or be able to form reliefs of required shapes, each cell (1) of the light modulator (14) may be supplemented with an additional ground electrode (52) surrounding the signal electrode (3) on all sides (Fig. 27).

This measure is also necessary for neutralising the mutual interactions of adjacent signal electrodes (3) in the case when the dielectric substrates (2) of the signal electrodes in all cells (1) are made as a common signal substrate (Fig. 28). In the absence of additional ground electrodes (52), the light modulator (14) would be invalid, since application of equal voltage pulses to the signal electrodes (3) of several adjacent cells (1) would equalize the electric potential between them at the expense of minor electric currents flowing through the surface of the common signal substrate (2). (In practical terms, this implies that the time needed for this process to be completed depends on the dielectric characteristics of the materials used for the preparation of the common signal substrate (2) and is commensurate with the signal recording time). The relief formed underneath these cells (1) will be very shallow due to incompressibility of the deformable gel layer (5). In order to exclude the reciprocal effects of adjacent signal electrodes (3), it is necessary to raster the recorded image by creating a constant zero potential between the signal electrodes with the aid of additional ground electrodes (52). In Fig. 28, additional ground electrodes of all cells represent a common ground electrode (53).

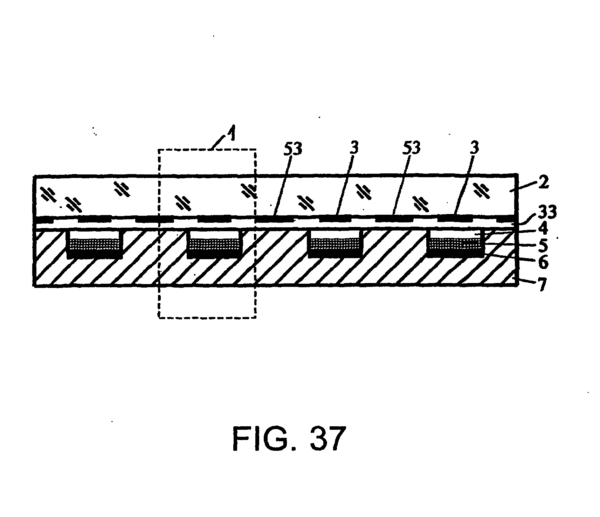

The schematic diagrams of all the four cells of the light modulator (14) utilising a common signal substrate (Fig. 28) and a common dielectric substrate (7) of the support electrodes of all cells are shown in Fig. 37.

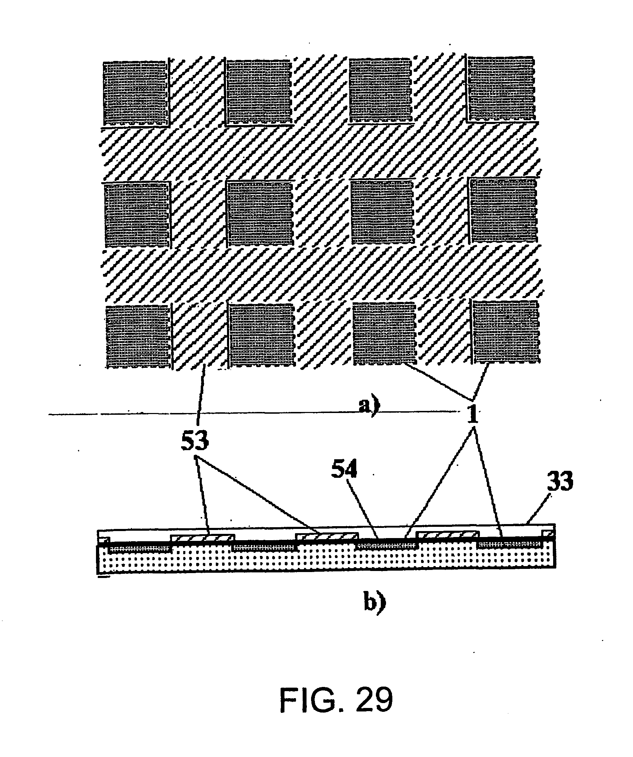

In order to increase the recording density on the deformable gel layer (5), the additional ground electrodes (52) of all cells (1) of the matrix of the light modulator (14), the dielectric substrates (2) of the signal electrodes of all cells (1) in which have been made as a common signal substrate, may be manufactured as a common ground electrode (53) with an additional dielectric layer (54) whose thickness is much smaller (5-10 times and more) than the width of the signal electrodes (3) and of the said electrode (53) placed between the signal electrodes (3) of all cells (1) and the said electrode (53) (Fig.29).

If an additional dielectric layer (54) (Fig. 28) is not supplied, the distance between the adjacent signal electrodes (3) will be equal to the sum of the width of the common ground electrode (53) and the widths of the two spacings between the both edges of the said electrode (53) and the adjacent signal electrodes (3). The minimum distance between the adjacent signal electrodes (3) is roughly equal to the triple width of one signal electrode (or to a spacing between the signal and the common ground electrodes) and is due to the limited capabilities of modern photolithographic techniques; with a decrease in the spacing between the signal electrodes (3) and the common ground electrode (53) to a certain critical level (Fig. 28); the edges of the said electrodes (3 and 53) stick together in several points, as a result of which the workability of the light modulator (14) decreases drastically. In order to reduce the said minimum distance, the signal electrodes (3) and the common ground electrode (53) can be placed in different planes on the both sides of the additional dielectric layer (54). As the thickness of the said layer (54) is much smaller (5-10 times and more) than the widths of the signal electrodes (3) and of the common ground electrode (53), the surface potential of the additional dielectric layer (54) present in the plane of the signal electrodes (3) between them will always approximate zero irrespective of the voltages applied to the signal electrodes (3). However, the localisation of the said electrodes (3) and the common ground electrode (53) in different planes makes it possible to reduce the lateral distance between them down to zero. As a result, the threshold resolution of the light modulator (14) increases twofold (while the minimum distance between the adjacent signal electrodes (3) decreases threefold). Such an increase in the threshold resolution makes it possible to improve the quality of the images projected on the screen (17).

In order to ensure dynamic control of the image contrast, the light modulator (14) may be provided with an N-number of support voltage units (8) and the support electrodes (6) of all cells (1) may be arranged into a matrix consisting of $N+1$ support conducting elements, each representing a uniform conducting layer which plays the role of a common support electrode for several (ranging from 2 to 1,000,000) cells (1) and is connected with a support voltage unit (8); one outlet of the said unit (8) is grounded, the other outlet is connected with only one support conducting element, and the control inlet is connected with the controller (34) of the light modulator (14).

In this embodiment of a light modulator (14), the voltage applied to each support voltage unit (8) can be varied independently of other support voltage units (8) but proportionally to the medium illumination intensity in some part of the surface of the output optical signal receptor (17). Medium illumination intensity is calculated by the controller (34) and depends on the structure of input electrical signals. For example, if the medium illumination intensity in some part of the surface of the output optical signal receptor (17) (e.g., the screen) is low (as calculated by the controller (34)), the voltage applied to the corresponding support voltage unit (8) will be greater than that applied to the adjacent support voltage units so that dark images will become more luminous. Contrariwise, excessively luminous elements will be reproduced at lower voltages at the outlets of the support voltage units (8) connected with the support conducting elements of the appropriate cells (1) of the light modulator (14) with a deformable gel layer.

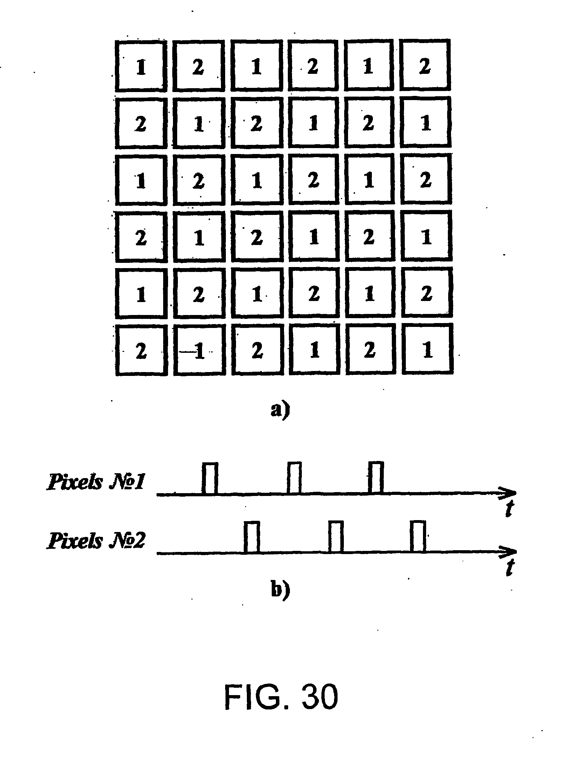

In order to increase the density of the information recorded on the surface of the deformable gel layer (5) of the light modulator (14) with a deformable gel layer and a rectangular cell matrix, the information may be recorded from the source of a video signal in the following way. Each image frame is recorded into the cells (1) of the light modulator (14) as two half-frames; for recording of the first half-frame the first group of cells (1) is switched on in chessboard order, while the second group of cells (1) are grounded; for recording of the second half-frame the second group of cells (1) is arranged in chessboard order and the first group of cells (1) is grounded, etc. In Fig.30a, which gives a schematic view of the matrix of cells (1) of the light modulator (14), the first group of cells (1) are arranged in chessboard order and marked with *1+, while the second group of cells (1) are marked with *2+. The control pulses responsible for the recording of the first and second half-frames into the first and second groups of the said cells (1) are illustrated in Fig. 30b.

Besides, this approach permits one to increase the rate of record-erasure of video information within the light modulator (14). As stated hereinbefore, electric charges run off onto the surface of the deformable gel layer (5) under the action of a certain support voltage, $U_{support}$. When an electric pulse is applied to a signal electrode (3), these charges will flow along the surface of the deformable gel layer in the direction of the signal electrode (3). After the signal electrode (3) voltage is switched off, the charges will distribute smoothly across the surface of the gel. The characteristic time of relaxation of these surface charges markedly exceeds the time needed for the record-erasure of the relief. When pulses are applied to the same signal electrode (3) in succession, the charges will be accumulated under the signal electrode (3) which may disturb the grey-scale characteristics of the light modulator (14) in the given spot of the image. To prevent the inleakage of electric charges, the duration of pulses applied to the signal electrodes (3) should be several times less than the repetition period of the said pulses. In the proposed mode of information recording from a source of video signals, the pulses corresponding to the same dot of the projected image are supplied to two (but not one) adjacent signal electrodes (3) in an alternating mode. As a result, the charges accumulated on the surface of the deformable gel layer (5) will move back and forth so that the repetition period of the pulses can be made shorter than in the case when the pulses are transferred to the same signal electrode (3).

In order to improve the quality of the images projected on the surface of the output optical signal receptor (17) (e.g., on the screen), it is necessary to minimise the mutual interactions between signal electrodes (3) in adjacent cells (1). Thus, in the case of one-dimensional structure of the signal electrodes (3) of the light modulator (14) embodied in the prior art, this has been achieved through alternation of parallel signal and ground linear electrodes. The spacing between two adjacent signal electrodes is large enough to exclude the overlapping of the protrusions formed on the surface of the deformable gel layer by each of the said electrodes. The presence of an identical zero potential on the ground electrodes also prevents equalisation of electric potentials between signal electrodes at the expense of minor electric currents flowing across the surface of the dielectric substrates of signal electrodes localised in adjacent.

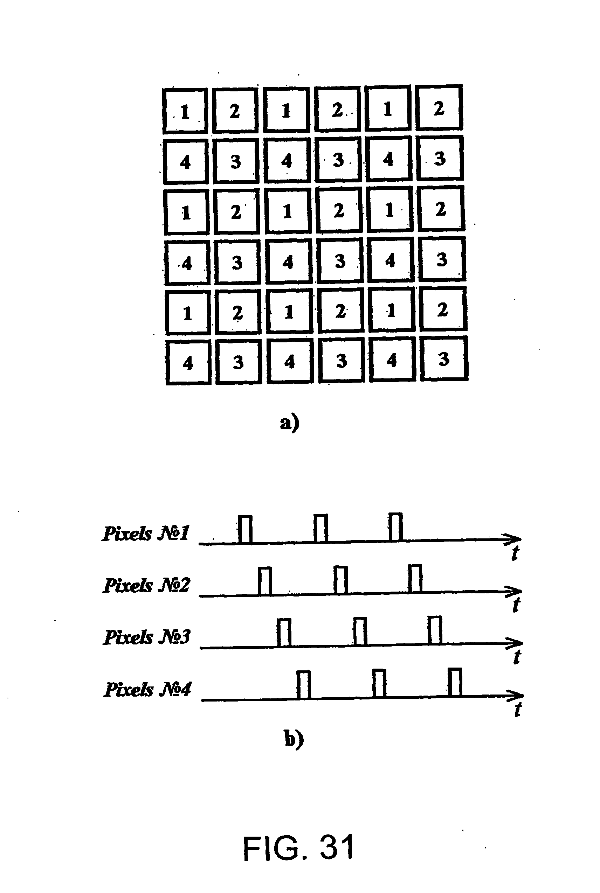

The construction of the light modulator (14) ensures efficient elimination of mutual interactions between signal electrodes (3) owing to the rectangular structure of its matrix of cells (1). The information may be recorded from the source of standard video signals in the following mode. Each image frame is recorded into cells (1) of the light modulator (14) in four tacts so that one-fourth of all signal electrodes (3) of the said modulator (14) are switched on in each tact and the rest three-fourths are grounded; the signal electrodes (3) in each group are arranged in lines and columns with one electrode placed between any two adjacent electrodes. For example, the matrix of cells (1) of the light modulator (14) depicted in Fig. 31a consists of four groups of cells (1) (numbered 1, 2, 3 and 4, respectively) arranged as stated hereinbefore. The control pulses responsible for the four-tact recording of video information into the cells (1) of all the four groups are shown in Fig. 31 b. In this operation mode, each signal electrode (3) in each tact appears to be surrounded with eight ground electrodes on all sides.

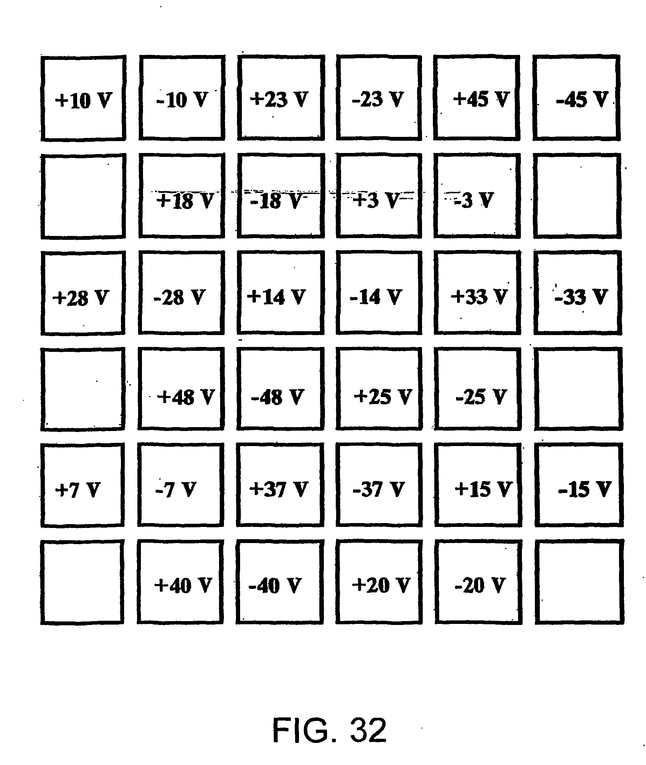

The following mode of recording video information may be employed in order to increase twofold the sensitivity of the light modulator (14). The matrix of cells (1) of the said modulator (14) has a rectangular structure so that the voltages of electric signals, $U_{elect.i}$, are applied to the signal electrodes (3) of the cells (1) arranged in chessboard order. The signal voltages applied to the signal electrodes of the remaining cells (1) (which are also arranged in chessboard order) are not zero (not grounded) but of the same absolute magnitude and of different polarity as compared with those applied to the first group of cells (1); all the cells (1) in which signal electrode (3) voltages have equal absolute values, should be placed close to one another. Fig. 32 gives a schematic view of a matrix of cells (1) of a light modulator (14) where the cells (1) containing signal electrodes (3) are arranged in chessboard order. In each of the said cells (1), the voltage applied to the signal electrode has a positive value; on the right side of each signal cell there is a cell whose signal electrode has voltage of the same absolute magnitude but of different polarity.

With this mode of information recording, the amplitude of a relief formed under each signal electrode (3) will be twice as great as in the case where half of the signal electrodes arranged in chessboard order are grounded.

In order to improve the quality of the gel layers, the following method may be used for preparing polyorganosiloxane-based deformable gel layers designed for use in reliefographic devices. This method utilises tetraethoxysilane and tin diethyldicaprylate as a 10-30% solution of $\alpha,\omega$-dihydroxypolydimethylsiloxane having the general formula of:

$$HO-Si(CH_3)_2O[-SiO(CH_3)_2-]_nSi(CH_3)_2-OH$$

and a molar mass of $(1-2)10^4$ g/mol in polydimethylsiloxane having the formula:

$$(CH_3)_3SIO[-SIO(CH_3)_2-]nSi(CH_3)_3$$

and a molar mass of $(0.6-1)\cdot10^3$ g/mol, at the 1:0.8 -1:1.5 and 1:2 -1:5 $\alpha,\omega$-dihydroxypoly-dimethylsiloxane / tin diethyl-dicaprylate and $\alpha,\omega$-dihydroxypolydimethylsiloxane / tetraethoxysilane molar ratios, respectively; the reaction mixture is agitated for not less than 20 minutes and poured onto a transparent horizontal (lower) dielectric substrate (2 or 7) coated with a conducting layer (3 or 6) with subsequent application of a second substrate (57) at a definite distance from the first substrate followed by solidification of the reaction mixture and separation of the second substrate (57) from the surface of the deformable gel layer (5) (Fig. 33);

the lower substrate (2 or 7) is precoated with a substance which increases the adhesion of the deformable gel layer (5) to the lower substrate; the distance between the points to which portions of the reaction mixture have been poured and the amount of the reaction mixture in each portion (56) are varied depending on the required depth and geometric shape of the deformable gel layer (5)(Fig. 33b);

the upper substrate (57) is precoated with a substance which decreases the adhesion of the deformable gel layer (5) to the upper substrate (57);

the pouring of the reaction mixture is not performed until the viscosity of a separate portion of the said mixture measured under identical atmospheric conditions (temperature, humidity, pressure) with the aid of a viscosimeter increases not less than 5-fold in comparison with the viscosity of the original solution of $\alpha,\omega$-dihydroxypolymethylsiloxane in poly-dimethylsiloxane;

the separation of the upper substrate (57) from the surface of the deformable gel layer (5) is not performed until the time of development of the relief determined with the aid of a reliefographic device for measuring rheological characteristics of materials (see e.g. USSR Author's certificate No. 1229646 entitled 'A device for measuring rheological characteristics of materials' to Gavrilov V.N. et al.) and under identical atmospheric conditions (temperature, humidity, pressure), for a deformable gel layer prepared from the reaction mixture poured onto a separate substrate, will be less than $3\tau$, where $\tau$ is the time of development of a relief for a given deformable gel layer (normally, a few days after the preparation of the reaction mixture) measured prior to experiment for a deformable gel layer prepared from a reaction mixture with the same concentration of all components;

the upper substrate is separated from the deformable gel layer by fixation of the latter in a horizontal position with subsequent application of uniform forces to the edge of the upper substrate in a direction perpendicular to the deformable gel layer.

The essence of the method consists in the following. The first step entails the preparation of a 10-30% solution of $\alpha,\omega$-dihydroxypolydimethylsiloxane (molecular mass = $(1-2)\cdot10^4$ g/mol) in polydimethylsiloxane (molecular mass = $(0.6-1)\cdot10^3$ g/mol). Then, tetraethoxysilane is added to the mixture as a cross-linking reagent at the $\alpha,\omega$-dihydroxypoly-dimethylsiloxane / tetraethoxysilane molar ratio of 1:2 - 1:5; tin diethyldicaprylate is added as a catalyst at the $\alpha,\omega$-dihydroxypolydimethylsiloxane / tin diethyldicaprylate molar ratio of 1:0.8 - 1:1.5. The resulting mixture is agitated for 20-40 minutes with a special device (electromechanical stirrer). Gel formation begins immediately after addition of the catalyst and the crosslinking reagent; their reaction with $\alpha,\omega$-dihydroxypolydimethylsiloxane results in the crosslinking of $\alpha,\omega$-dihydroxypoly-dimethylsiloxane molecules at terminal hydroxy groups.

At the beginning, the crosslinking occurs in those portions of the reaction mixture that are spatially separated from one another. At this stage, the reaction mixture represents a fluid whose viscosity increases gradually. After some time (which varies from tens of minutes to several hours depending on the concentration of reaction components), crosslinked $\alpha,\omega$-dihydroxypolydimethylsiloxane molecules begin to be formed across the whole volume of the reaction mixture. This state is known as a *gel point+ where a mixture ceases to be a fluid because its viscosity approaches infinity, as a result of which the said mixture acquires elastic properties. Within the next 1-3 days, the density of the network formed by the crosslinked molecules increases and so does its elasticity. If in the process of crosslinking (i.e., prior to the onset of the gel point) the fluid mixture is given the required shape, the crosslinked gel will also have this shape.

The pouring of the reaction mixture is performed in the following way. At first, the solution of a substance increasing the adhesion of the deformable gel layer to the lower substrate is poured onto a separate clean plate fixed on a strictly horizontal surface. Several seconds after the solvent evaporation, a thin film begins to be formed which increases the adhesion of the deformable gel layer to the underlying substrate.

Then the lower substrate is coated with the stirred-up mixture consisting of the polymer, the solvent, the catalyst and the crosslinking reagent. The mixture is covered with a second glass substrate at a predetermined distance between the substrates (the latter can be attained through the insertion of rigid spacers (55) between the substrates as illustrated in Fig. 33).

Experiments have shown that if the upper substrate is made of glass and is not pretreated with any reagents, in 10-30% of cases its separation will result in partial adhesion of the gel to the upper substrate which inevitably spoils the surface of the gel and makes it unsuitable for use in reliefographic devices. In the proposed method, the upper substrate is precoated with a substance which diminishes the adhesion of the deformable gel layer to the upper substrate.

The shape of the deformable gel layer is a crucial factor which determines its quality. In many reliefographic devices, deformable gel layers should have an oval (close to rectangular) shape within the limits of a certain working area on the lower substrate. A drift of the gel beyond this area and considerable deformation of its shape are inadmissible but difficult to avoid, if the reaction mixture is poured out immediately after addition of the catalyst and the cross-linking reagent when the viscosity of the fluid mixture is still too low . Even minor tilting of the lower substrate prior to the onset of the gel point may cause a drift of the gel beyond the limits of the working area (for example, the approximate linear dimensions of the gel layer and the working area are 50 x 25 mm$^2$ and 40 x 20 mm$^2$, respectively). In the prototype method, the pouring is begun 10-15 minutes prior to the onset of the gel point. In this case, the drift is insignificant due to high viscosity of the reaction mixture and is completed within 10-15 minutes (but not several hours). However, as stated hereinbefore, in this case, too, it is difficult to determine the exact time for pouring the mixture before the onset of the gel point, since in each concrete case special experiment is necessary in order to prepare the gel from a mixture with the same concentration of components and under identical atmospheric conditions (temperature, humidity, pressure). Therefore, in the proposed method the pouring of the reaction mixture is not performed until the viscosity of a separate portion of the reaction mixture measured by the conventional procedure (viscosimeter) and under identical atmospheric conditions (temperature, humidity, pressure) increases not less than 5-fold in comparison with the viscosity of the original solution of $\alpha,\omega$-dihydroxypolydimethylsiloxane in polydimethylsiloxane, which is sufficient to minimise the drift of the reaction mixture placed between two substrates prior to the onset of the gel point. As for the gel point, it can be reached at various times after the onset of pouring and depends on the concentration of reaction components, temperature, humidity and atmospheric pressure (normally, from 20-30 minutes to several hours after preparation of the reaction mixture).

And, finally, in order to confer on the gel a random (but not circular) shape, in the proposed method the reaction mixture is poured out by portions of strictly defined volume (e.g., with the aid of a micropipette) to definite points on the lower substrate surface. The volume of the reaction mixture in each portion and the distance between the points to which the reaction mixture is poured, depend on the shape of the deformable gel layer (after covering with the upper substrate, separate drops begin to flow together to form a uniform layer).

Within the next 1-3 days, the polymeric net becomes more compact; the elasticity of the medium increases, correspondingly, as a result of which final solidification of the gel layer takes place. Then, the upper and lower substrates are separated from each other, and the surface of the deformable gel layer (5), which mimics in every detail the surface of the upper substrate, remains to be bound to the lower substrate. The prototype method does not specify the criteria used to estimate the degree of solidification of the deformable gel layer (5) but some experimental data currently available suggest that if the upper substrate is separated too early, partial adhesion of certain fragments of the said layer (5) to the upper substrate may occur which irreversibly worsens the properties of the gel layer. In the proposed method, the degree of solidification of the deformable gel layer (5) is determined under strictly defined conditions (T=20°C, P=$10^5$ Pa) with the aid of a special reliefographic device for measuring rheological characteristics of materials produced as thin films having a free surface. See e.g. USSR Author's certificate No. 1229646 entitled 'A device for measuring rheological characteristics of materials' to Gavrilov V.N. et al. In these measurements, a deformable gel layer is prepared from the same components by pouring a small portion of the reaction mixture onto the surface of a separate substrate without covering with a second substrate (so-called *free pouring+). The viscosity and elasticity of the said portion will change in approximately the same way as in the case of the reaction mixture used for preparing deformable gel layers (5) and placed between two substrates. The time for development of a relief, $\tau$, as a result of application of a step-like inhomogeneous electric field to the free surface of the deformable gel layer (5) seems to be the most convenient criterion for estimating the degree of solidification of the said layer (5). This parameter ($\tau$), which can be easily measured with the aid of a reliefographic device mentioned above, depends not only on the time elapsed from the moment of pouring of the reaction mixture but also on the polymer concentration in the reaction mixture, i.e., the higher the concentration, the faster is the development of the relief provided that all other conditions are identical. In the proposed method, $\tau$ is measured previously for a deformable gel layer (5) prepared from a reaction mixture with the same concentration of all components. The separation of the upper and lower substrates is not performed until the time of development of a relief for the deformable gel layer (5) prepared from the said mixture by its free pouring onto a separate substrate (determined with the aid of a reliefographic device for measuring rheological characteristics of materials and under identical atmospheric conditions (temperature, humidity, pressure), will be less than $3\tau$.

Experimental data suggest that deformable gel layers (5) are especially well separated from the upper substrate on the approximately 24th hour after their preparation. In 95-100% of cases, the surface of the said layer (5) is fully separated from the upper substrate provided that all other conditions specified are observed.

Besides, effective separation of deformable gel layers (5) from upper substrates depends on the method used for their separation. However, if the upper substrate is separated by applying a torsional force relative to the lower substrate, the deformable gel layer (5) will most likely be destroyed. In the proposed method, the separation of the said substrates is performed by fixation of the lower substrate in a horizontal position and application of a uniform force to the edge of one of the sides of the upper substrate in a direction perpendicular to the deformable gel layer. According to the available experimental data, in 95-100% of cases the surface of the deformable gel layer (5) is fully separated from the upper substrate provided that all other conditions are observed.

In order to protect the surface of the deformable gel layer (5) from dust and oxidation with air oxygen and moisture, not later than 3-5 days after the pouring of the reaction mixture the deformable gel layer (5) may be exposed to the atmosphere of an inert gas and is encapsulated.

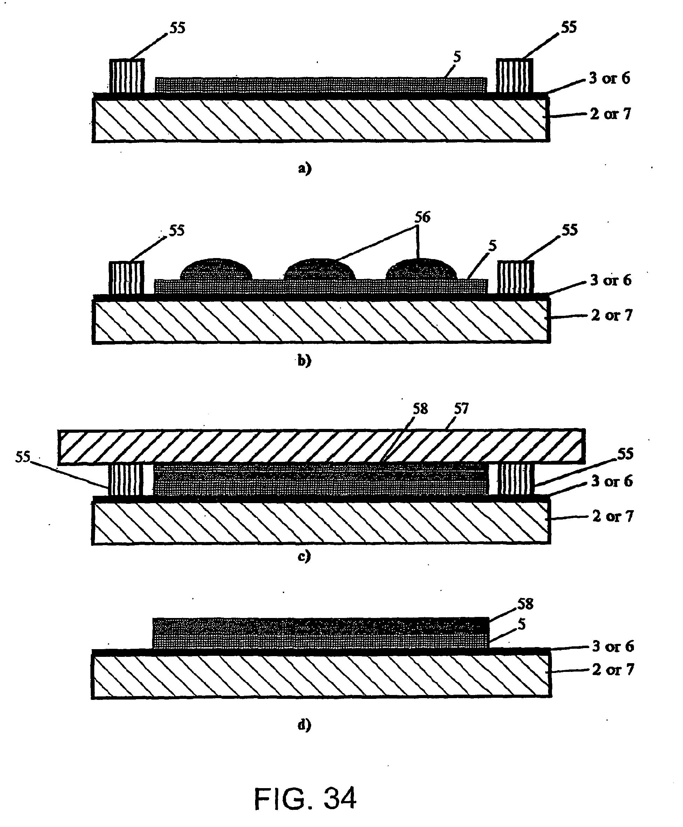

According to current knowledge, the operation of light modulators (14) with deformable gel layers (5) is usually associated with charge inleakage due to the presence of gel-contaminating particles (e.g., low-molecular-weight ionised admixtures), polarisation, electron injection from the support electrode, etc. The presence of electric charges on the surface of deformable gel layers (5) increases their sensitivity to voltages applied to the signal electrodes (3). However, accumulation of electric charges is a slow process in comparison with the mechanical formation and erasure of reliefs. In order to increase the operation rate of the light modulator (14) with a charged surface of the deformable gel layer (5), it is preferred to coat the said layer (5) with an additional conducting layer (58) prepared as described above. The said layer (58) is prepared in exactly the same way as the first, non-conducting layer, the sole difference being that not more than three molar per cent of $\alpha,\omega$-dihydroxypoly-dimethylsiloxane molecules with terminal groups containing Li, Zn, Na or other metals are added to polydimethylsiloxane or $\alpha,\omega$-dihydroxypolydimethylsiloxane prior to the preparation of the conducting gel layer. The process of application of an additional conducting gel layer (58) is depicted in Fig. 34.

The support electrode (6) of the lower substrate may be electrically conjugated with the additional conducting gel layer (58) after separation of the said layer from the upper substrate (57) in order to prevent the inleakage of electric charges into the said layer (58). As a result, the electric charges will flow into the support electrode (6) and will not accumulate in the said layer (58).

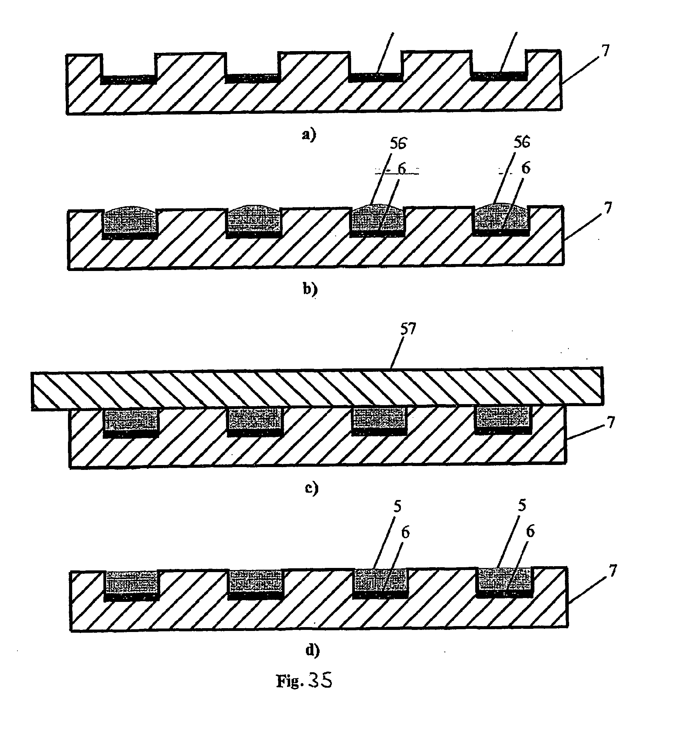

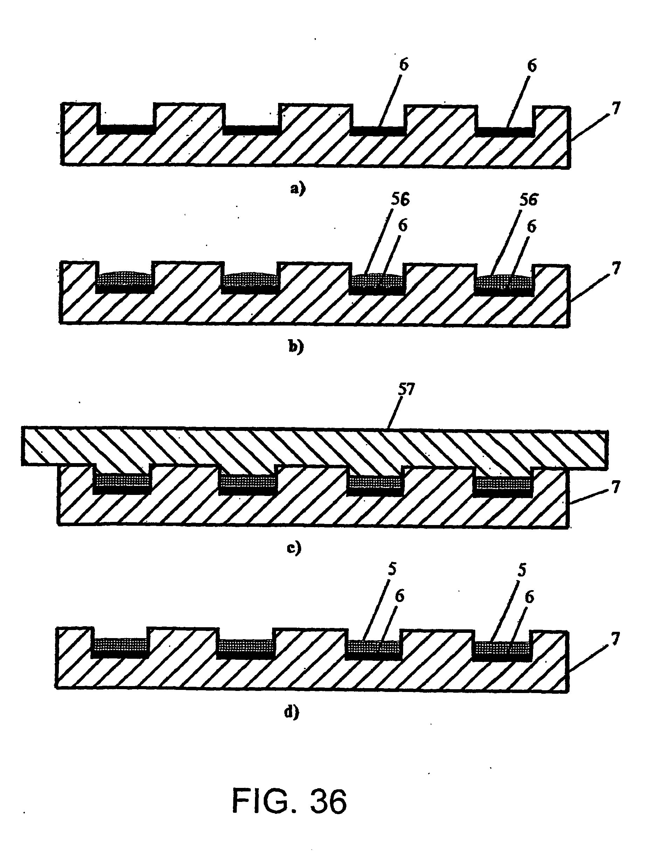

According to the available theoretical and experimental data, some parts of the relief underneath adjacent signal electrodes (3) may interact with one another due to the overlapping of the protrusions formed by the said electrodes on the relief surface (3). A possible explanation of this fact is that the relief induced by an electric potential generated on one of the said electrodes (3) is not localised strictly underneath this electrode but occupies some part of the deformable gel layer (5) surface whose width is several times greater than the width of a signal electrode (3). The overlapping of the reliefs underneath the said electrodes (3) causes non-linear distortions in the output optical characteristics of the light modulator (14). To eliminate these distortions, the deformable gel layer may be coated onto the dielectric substrate (7) of the support electrode made embossed with a row of grooves (Figs. 35,36) in order to exclude mutual interactions between the deformable gel layers (5) in adjacent cells. The upper substrate (57) is made either planar (Fig. 35) so that the free surface of the said layer (5) in each cell (1) coincides with the surface of the protruding parts on the lower substrate, or embossed (fig. 36); in the latter case the deformable gel layer (5) in each cell is *sunk+ into the grooves of the lower substrate (7).

In order to diminish the size of the single-colour transformable optical system, the lower (2 or 7) and upper (57) substrates may be made with a cylindrical or spherical surface featuring the same radius of curvature or as a curved surface of any other shape. Some alternative versions of a light modulator (14) with a deformable gel layer have a shape depicted in Figs. 7, 11 and 15.

The surface of the upper substrate (57) used for the covering of the reaction mixture may be made embossed. First, this is done in order to *sink+ the gel into the grooves (Fig. 36) and thus simplify the formation of the deformable layer (4). Fig. 37 shows four different cells (1) of a light modulator (14) in which the deformable gel layer (5) has been formed by the method depicted in Fig. 36. In Fig. 37, the dielectric substrate (2) of the signal electrode has been made common for all cells (1) of the light modulator (14) and is in close contact with the protrusions of the dielectric substrate (7) which is also common for all cells. The air gap between the protective dielectric layer (33) of the dielectric substrate (2) and the surface of the deformable gel layer (5) represents the deformable layer (4).

Second, the upper substrate (57) can be made embossed in order to confer the required contours (e.g., a lens (Fig. 38), a serrate structure (Fig. 39), etc.) to the surface of the deformable gel layer (5).

Each channel in the three-colour transformable optical system operates in exactly the same way as the single-colour transformable optical system described. After passage through the composite projection objective (15) and the second diaphragm (16) of each channel, the three colour light fluxes are summated into a full-colour image projected on the surface of the output optical signal receptor (17) with the aid of reflecting mirrors (60) (Fig. 40).

A specific feature of the light modulator (14) utilised in the said system is that the support voltages, $U_{support}$, at the outlets of the support voltage units (8) should be different for all the three light modulators (14), since phase modulations, $\Psi(x)$, of a light wave that has passed through the relief surface of the deformable gel layer (5), depends on the wavelength:

$$\Psi(x) = K(2\pi/\lambda)n\zeta(x) \sim \zeta(x) / \lambda ,$$

where $\zeta(x)$ is the profile of the relief formed on the surface of the deformable gel layer (5), n is the refraction coefficient of the gel, $K$ is the specific coefficient for the given system and $\lambda$ is the wavelength. Normal operation of the said system requires that phase modulations, $\Psi(x)$, be equal at equal voltages of the electric signals $U_{sign.i}$, for all the three wavelengths. As has been stated above, the depth of a relief under the $i$-th signal electrode (3) is proportional to $A_i \sim U_{support} \cdot [ U_{sign.i} + U_{bias}]$ (e.g., in the case of simultaneous operation of all signal electrodes, $\zeta(x) \sim A \cos(\beta x)$, and $A_i = A$ ). Thus, in order to make the ratio, $\zeta(x) / \lambda$ independent of the wavelength, $\lambda$, it is necessary that the support voltage in all the three channels, $U_{support(1,2,3)}$, should be proportional to $\lambda$.

In another embodiment, the three-colour transformable optical system has essentially the same characteristics as the embodiment described above, but the design of the system of mirrors (61) and the second diaphragm (16) is different.

The system of mirrors (61) utilises dichroic (62) (instead of reflecting) mirrors and features such a construction that would ensure the convergence of light fluxes of different colours within the three-colour transformable optical system (but not on the surface of the output optical signal receptor (17)) so that the three colour beams reflected from the last dichroic mirror are directly transferred to the output optical signal receptor (17) as a single flux (Fig. 41).

The second diaphragm (16) has been made as a system of light filters. The transverse section of light fluxes of different orders of diffraction and the distance between them on the surface of the second diaphragm depend on the wavelength. With certain parameters of a three-colour transformable optical system, the zero order of the light of one wavelength can partly overlap with the first order of the light of a different wavelength. The second diaphragm (16), which is normally non-transparent to light fluxes of any wavelength, is useless in this case, because it stops light fluxes of both zero and first orders of diffraction. Therefore, the second diaphragm may be made as a system of light filters capable to stop colour fluxes of zero orders of diffraction but pass light fluxes of higher orders of diffraction. In Fig. 42, the second diaphragm is depicted as a system of parallel linear light filters which is also compatible with the system shown in Fig. 43.

Similar to the system described above, the support voltages, $U_{support(1,2,3)}$, at the outlets of the support voltage units (8) should be different for all the three light modulators (14) and proportional to the wavelength, $\lambda$.

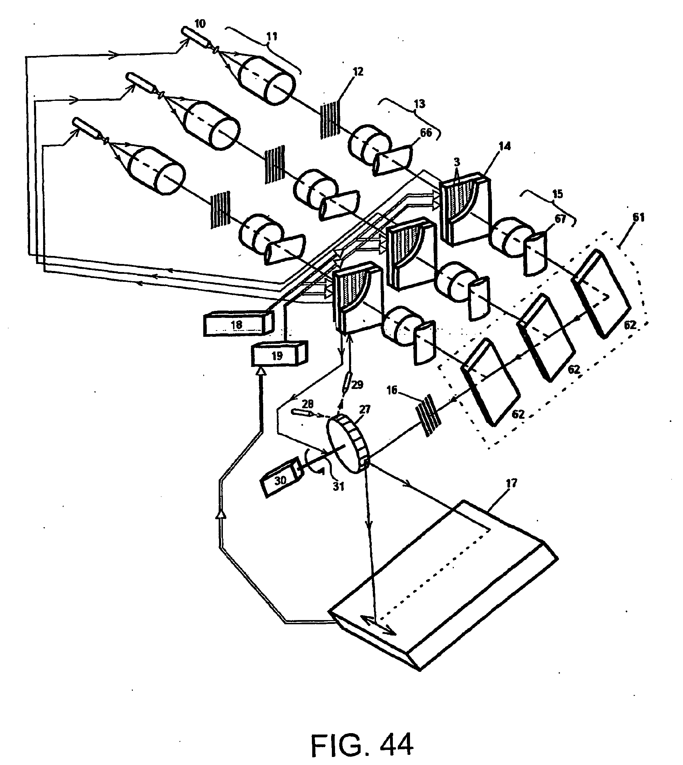

Another embodiment of the three-colour optical system is designed for displaying information line by line. Each of its channels operates in the same mode as the single-colour transformable optical system above. Moreover, its construction permits the summation of light beams of different colours in two modes, viz., with the aid of simple and dichroic mirrors. Colour summation with the aid of a system (59) of reflecting mirrors (60) and a system (61) of dichroic mirrors (62) is illustrated in Figs. 43 and 44, respectively.

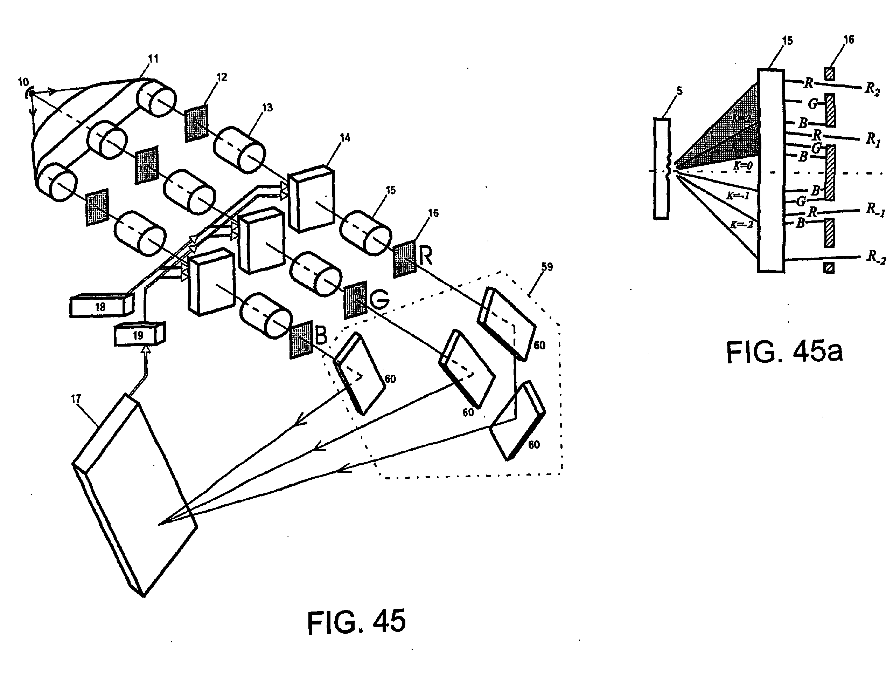

In another embodiment, the three-colour transformable optical system utilises a common light source (10) (instead of three independent light sources of different wavelengths) for all the three independent information display channels. The common condenser (11) placed behind the common light source (10) splits the light beam into three separate fluxes and sends them to the first diaphragm (12) and the composite illuminant objective (13) of each independent information display channel (Fig. 45). The light modulator (14) with a deformable gel layer in each of the said channels modulates light of a definite wavelength just as in the case of the single-colour systems described above. In order to isolate a light beam of a definite wavelength from the light flux that has passed through the light modulator (14), two second diaphragms (16) have been added to the three-colour transformable optical system utilising one thermal light source (10); thus, each of the said channels has been provided with a second diaphragm (16) of its own.

In this case, the formation of colour images is achieved by the spatial-frequency method. The passage of the light flux through the relief surface of the deformable gel layer (5) results in the formation of various diffraction orders; the angles of deflection from the optical axis within the same diffraction order are different for light beams of various wavelengths. The design of the second diaphragm (16) in each independent information display channel permits one to single out spectral ranges of red, green or blue colours within each diffraction order. The mode of operation of the second diaphragm (16), which passes red light fluxes ($R_{\forall 1}$, $R_{\forall 2}$) of the first ($K=\forall 1$) and second ($K=\forall 2$) orders of diffraction but stops green ($G_{\forall 1}$, $G_{\forall 2}$) and blue ($B_{\forall 1}$, $B_{\forall 2}$) light fluxes as well as light fluxes of zero order of diffraction ($K=0$), is illustrated in Fig.45 (upper right corner).

Light fluxes can be re-summated either directly on the screen (17) with the aid of a system (59) of reflecting mirrors (60) (Fig. 45) or with the aid of dichroic mirrors (i.e., within the three-colour transformable optical system).

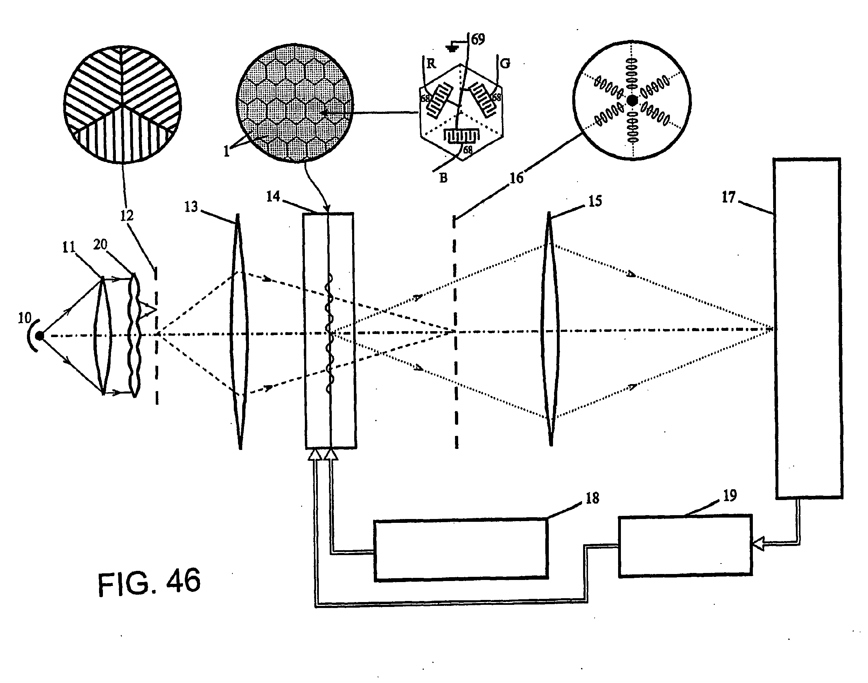

In order to diminish the size of the three-colour transformable optical system, one (instead of three) information display channel may be used where a one- or multicomponent lens raster (20) whose focal plane coincides with that of the first diaphragm (12) has been placed between the condenser (11) and the first diaphragm (12); the light source (10) is of thermal type; the signal electrodes (3) in all the cells (1) of the light modulator (14) have been made in the form of three independent comb-like structures (68) placed at different angles to one another and connected with the outlets of the corresponding switch device (41); the record-erasure control inlets of all switch devices (41) have been connected with the line bus and the record-erasure inlets have been connected with the column bus; each cell (1) of the said modulator (14) has been provided with an additional ground electrode (69) which forms interlaced structures with the three comb-like structures (68) of the signal electrode, and the first (12) and second (16) diaphragms have been made as opaque plates containing three groups of slits; all the slits in a certain group of the second diaphragm (16) are parallel to the corresponding slits of the first diaphragm (12) and to the electrodes of the corresponding comb-like structures (68) of all cells (1) of the said modulator (14) and feature such a construction that would ensure the passage of light of only one of the three basic colours (i.e., red, green or blue) after its diffraction from the relief surface of the deformable gel layer (5) underneath the interlaced structures; the latter have identical orientation in all cells (1) of the light modulator (14) with a deformable gel layer for each colour (Fig. 46).

Colour reproduction in the said system is effected in the following way. In each cell (1) of the light modulator (14), the phase-relief gratings whose function consists in modulating light of different wavelengths are situated in different zones of the deformable gel layer (5) at an angle to one another due to the specific design of the signal electrode in each cell (1) of the said modulator (14). For example, a cell (1) may be given the shape of a regular hexagon which comprises three independent interlaced comb-like structures (Fig. 46) with identical or different spatial periods. A characteristic feature of the second diaphragm (16) is the presence of three groups of slits, each passing the light of one wavelength after its diffraction from the corresponding phase-relief grating (Fig. 46).

The summation of light fluxes is performed either with the aid of reflecting mirrors (i.e., directly on the screen) or with the aid of dichroic mirrors (i.e., within the three-colour transformable optical system).

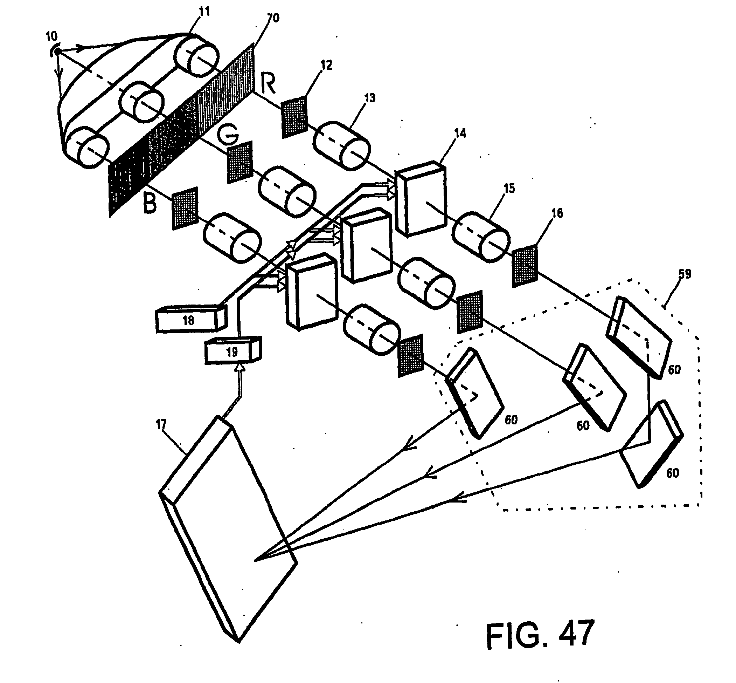

The system may be provided with an additional three-section light filter (70) in order to separate red, green and blue light from the non-monochromatic light flux emerging from the common thermal source (10). Then, the colour fluxes are passed through three light modulators (14) with deformable gel layers to be further summated into a full-colour image on the surface of the output optical signal receptor (17) (e.g., on the screen)(Fig. 47).

The summation of light fluxes can be performed either with the aid reflecting mirrors (i.e., directly on the screen) or with the aid of dichroic mirrors (i.e., within a three-colour transformable optical system).

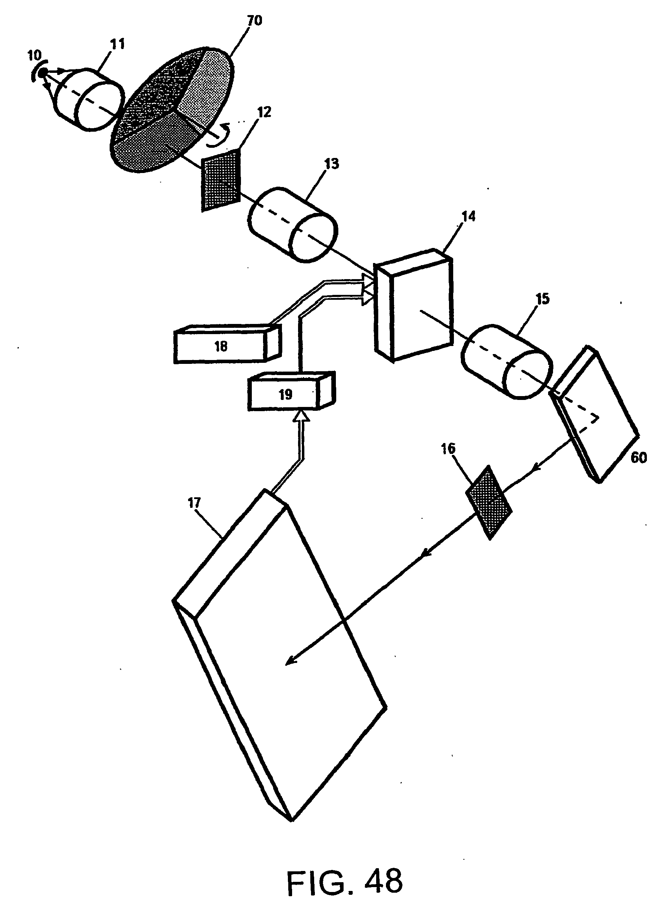

Preferably, the three-section rotating light filter (70) separates red, blue and green fluxes from the non-monochromatic light flux generated by the common thermal source (10) - see Fig. 48. These fluxes are further passed through a light modulator (14) with a deformable gel layer in where they are successively modulated and reproduced on the surface of the output optical signal receptor (17) (e.g., on the screen).

Similar to the three-channel three-colour transformable optical systems described above, in another embodiment, phase modulations, $\Psi/(x)$, of the light wave that has passed through the relief surface of the deformable gel layer (5) should be identical at equal signal voltages, $U_{sign.i}$, for all the three wavelengths. Therefore, the support voltage unit (8) should feature such a construction that would ensure the output support voltage, $U_{support}$, of different magnitudes (in proportion to $\lambda$) during the passage of light fluxes of different colours through the light modulator (14);

In order to increase the maximum switching frequency of the signal electrodes (3) in a three-colour transformable optical system, the matrix of cells (1) may be made with a rectangular structure; all the cells have been divided into two equal groups arranged in chessboard order, and the three basic colours (red, green and blue) of each image frame are recorded consecutively into the first and then into the second group of cells and then again into the first group ; every time the cells to which the signals are not transferred, are grounded (Fig.30).

The maximum switching frequency of the signal electrodes (2) can thus be increased by eliminating the inleakage of surface electric charges. This process has been described in sufficiently great detail above. The elimination of inleaking surface charges has been made possible due to the alternate application of voltages capable to modulate light fluxes of different wavelengths to the adjacent cells (1) of the light modulator (14) with a deformable gel layer (5). If an electric charge is accumulated on the surface of a deformable gel layer (5) under the signal electrode (3) during the application of control voltage which modulates light of one wavelength, this charge will tend to run off underneath the signal electrode (3) of the adjacent cell, while the control voltage will be modulating light of another wavelength. An alternate switching-unswitching of adjacent cells (1) leads to a situation when the electric charge will be distributing smoothly across the surface of the deformable gel layer (5) which, in turn, will make it possible to increase the maximum switching frequency of the signal electrodes, since surface charge inleakage in the optical systems can be eliminated exclusively through the increasing of the on-off time ratio of the sequential pulses applied to signal electrodes (3).

All the embodiments of the optical system described above allow two modes of relief visualisation, viz., by the dark and light field methods.

One way of implementing and using a single-colour transformable optical system in accordance with the invention is as follows. The dielectric substrates of the signal and support electrodes (2 and 7) in each cell (1) can be made of glass; the signal (3) and support (6) electrodes can be made of chromium.

Video images can be transmitted with the aid of a matrix of cells (1) (1024 x 768 cells). With the size of one cell of 30 x 30 $\mu$m (which corresponds to the recording density of 33 dots per mm), the size of the working area on the surface of the deformable gel layer (5) can be 30.7 x 23.0 mm$^2$. The depth of the deformable gel layer (5) can be taken equal to 15 - 30 $\mu$m; an air gap 2 - 5 $\mu$m wide can be used as a second deformable layer (4); the widths of the signal (3) and support (6) electrodes can be approximately equal to 0.1 - 0.5 $\mu$m.

A gap filled with an inert gas can be used as a second deformable layer instead of an air gap.

The bias voltage, $U_{bias}$, can be taken equal to 0-5 V; signal voltages, $U_{sign.i}$, can be varied within the range of 5-35 V; the support voltage, $U_{support}$ , can be equal to 100 - 150 V.

Lasers or arc-discharge lamps can be used as a light source (10).

With a matrix structure of all cells (1) of the light modulator (14), the signal electrode (3) in each cell (1) can have a square, rectangular, hexagonal, circular, oval or any other shape with a characteristic length to width ratio of the signal electrode ranging from 1:1 to 1:1.5. At greater values of the said ratio, a dot projected onto the surface of the output optical signal receptor can take an oblong shape.

The length and width of the signal electrode (3) cannot be less than 1.5 times smaller than the size of one cell (1) of the light modulator (14); the distance from the interface between the deformable layers (4, 5) to the signal electrode (3) can be less than 1/10 of the length and width of the said electrode (3); the difference between the relative dielectric permitivities of the deformable layers (4, 5) should be not less than 0.1, and the duration of pulses, $U_{sign.i}$, supplied to the signal electrode (3) from the outlet of the switch device (41) can vary from 1 to 90% of the repetition period.

A modulator constructed as above will satisfy the requirements that:

$$0.01d_1 < d_2 < d_1$$
$$d_2 > \lambda / (20 \mid \eta_1 - \eta_2 \mid)$$

$$| \eta_1 - \eta_2 | > 0.1$$
$$t_\rho > 0.01 \, \tau_m$$
$$0.1 d_1 < L < 10 \, d_1$$

in which $d_2$ is the distance between the signal electrode and the interface between the deformable layers; $d_1$ is the distance between the first electrode and the interface between the deformable layers; $\lambda$ is the wavelength of light with which the modulator is to be used; $\eta_1$ is the refractive coefficient of one of the deformable layers; $\eta_2$ is the refractive coefficient of the other of the deformable layers; $t_\rho$ is the duration of voltage pulses to be applied to the signal electrodes; $\tau_m$ is the time constant of mechanical relaxation of the relief formed at the interface between the layers; and L is the minimum dimension of a single signal electrode in a direction parallel to the layers or, in the case of a plurality of cells, the minimum spatial period between electrodes in adjacent cells.

In order to diminish the adhesion of the deformable gel layer (5) to the upper substrate (2 or 7), the latter can be coated with a metal (e.g., nickel or chromium). In this case, the number of gel layers fully separated from the upper substrate (57) may amount to 95%. The planar surface of the metal should not incline by more than 0.1 $\mu$m at the 50 mm length; the size of the local defects on the metal surface (protrusions, holes) should not exceed one tenth of the distance between two adjacent cells of the light modulator.

Crosslinking of the polymeric net in a deformable gel layer (5) is normally completed within 1-3 days after the pouring of the reaction mixture. The process occurs in the presence of water; the moisture present in the atmospheric air is sufficient for the reaction to take place. See e.g. Severny V.V. et al., (1976) 'A mechanism of 'cold' vulcanisation of low molecular weight polyorganosiloxane rubbers', Vysokomolekulyarnye Soedineniya, Vol. A18, No 6, pp 1276-1281. Therefore, within 3-5 days after separation of the upper substrate (57), the deformable gel layer (5) must be exposed to air at not less than 20% humidity.

According to the available experimental data, the rate of crosslinking of the reaction mixture is temperature-dependent, i.e., the reaction rate decreases with a drop in temperature. The normal course of a chemical reaction requires that throughout the preparation procedure the temperature in the premises where the deformable gel layer (5) is prepared and stored after separation should be maintained constant in the range of (+10 - +70°C) with the precision of $\forall$ 5°C. If the first condition is not observed, the rate of gel crosslinking can be either too fast or too slow.

And, finally, the quality of the deformable gel layer (5) strongly depends on the cleanness of the air in the premises where all the manipulations connected with the preparation of the reaction mixture, its pouring onto the lower substrate and separation of the upper substrate (57) are performed. Experiments have shown that 95% of all deformable gel layers prepared in this way are wholly satisfactory provided that the conditions connected with their preparation the cleanness of premises and other requirements are observed.

The preparation of the reaction mixture, its pouring onto the lower substrate and separation of the upper substrate (57) should be performed in the premises where the number of dust particles (0.2 $\mu$m and more in size) should not exceed 20 per 1 litre of air.

The elements of an adaptive amplitude filter for absorption of Fourier-transformation images of noise (22) (Fig. 9) are made individually for each sample of a single-colour transformable optical system. This is achieved, in particular, by preliminary photographing of the said images onto a transparent plate placed into the plane of the second diaphragm (16); the photograph is developed and placed exactly into the same plane so that the dark areas on the photoplate will correspond to the areas where the dispersed light has bypassed the elements of the second diaphragm (16).

A pulse-type laser based on metal vapours can serve as an externally triggered pulse-type light source (10).

A mirror drum can be used as a scanning mirror (27).

As in the case of a light modulator (14) designed for a single-colour transformable optical system, the length and width of the signal electrode (3) of the said modulator (14) designed for optical focusing systems, should be not less than 1.5 times smaller than the transverse size of one cell (1) of the said modulator (14); the distance from the interface between the deformable layers (4, 5) to the signal electrode (3) should be not less than 1/10 of the length and width of the signal electrode (3) and the difference between the relative dielectric permitivities of the deformable layers (4, 5) should be not less than 0.1.

The protective dielectric layer (33) coated onto the signal electrode (3) can be made of fused optical quartz, silicon nitride ($Si_3N_4$) or any other dielectric material whose breakdown voltage is greater than the maximum voltage applied to the signal electrodes (3) provided that the width of the protective dielectric layer (33) is not less than 10 times smaller than the width of the signal electrode (3) and the distance between the signal electrodes (3).

Other integral elements of the light modulator (14), such as line and column buffers (39, 40), line and column buses, a separator (38) and a grey-scale corrector (37), can be assembled from standard components. Likewise, switch elements (41) of all cells of the said modulator (14) can be also assembled from standard components (e.g., MOSFET transistors with induced channels).

If all the cells (1) of a light modulator (14) have a linear structure, the minimum width of the signal (3) electrode or the additional ground electrode (52), or a spacing between the electrodes (which can be formed on the lower and upper substrates by photolithography) is ~ 1 $\mu$m, being restricted by light diffraction at the interface between the dark and light fields of the photomask. For practical purposes, such as transmission of video images, the width of the electrodes and the spacing between them can be made equal to 7.6 $\mu$m. The resolution on the surface of the deformable gel layer of the light modulator can thus be equal to 1000 (7.6 x 4) = 33 lp/mm.

If the total number of signal electrodes is 1024, the width of the working area on the surface of the deformable gel layer (5) in the said version of a single-colour transformable optical system can be equal to 1024 x 7.6 x 4 = 31130 $\mu$m = 31.13 mm.

Other parameters of the light modulator (14) and the values of $U_{bias}$, $U_{sign.i}$ and $U_{support}$ can be the same as indicated above.

The additional dielectric layer (54) can be made of silicon nitride ($Si_3N_4$); the signal electrodes (3) and the common ground electrode (53) can be made of aluminium or molybdenum with chromium or vanadium as an underlayer.

With the indicated widths of the electrodes and the spacings between them, the width of the additional dielectric layer (54) can be taken equal to 0.1-0.3 $\mu$m, while the width of the common ground electrode (53), as equal to fractions of hundredths of micron.

A preferred method is as follows. The reaction mixture is prepared from a 15% solution of $\alpha,\omega$-dihydroxypoly-dimethylsiloxane commercially available as *SKTN-A+ (Entsiklopedia Polimerov (1972)), Moscow, Sovetskaya Entsiklopedia Publishers Vol. 1 (molar mass = 11,000 g/mol) in polydimethylsiloxane (molar mass = 800 g/mol). The weights (or volumes) of the reaction components can be calculated from the known molar masses and densities of the reaction components relative to the number of the gel layers to be prepared, e.g., 15 g of *SKTN-A+ and 85 g of the solvent (polydimethylsiloxane) are normally used. If the $\alpha,\omega$-dihydroxypolydimethylsiloxane : tetraethoxysilane molar ratio is 1: 2.5, 0.76 ml (0.71 g) of tetraethoxysilane is added to the mixture, while the $\alpha,\omega$-dihydroxypolydimethylsiloxane : tin diethyldicaprylate molar ratio is 1:1.1, tin diethyldicaprylate can be used in the amount of 0.59 ml (0.69 g). Immediately after preparation, the reaction mixture is agitated with an electromechanical stirrer for 30-40 minutes.

The pouring is performed 60 minutes after termination of the stirring and continues not longer than 5 minutes. The gel point is usually reached 110-115 minutes after the preparation of the reaction mixture. In order to increase the adhesion of the gel layer to the lower substrate, polycarboarylenesiloxane of the general formula:

$$\left[ \begin{array}{c} O_{0,5x} \qquad\qquad\qquad OH_{2-x} \\ | \qquad\qquad\qquad\qquad | \\ -CH_3 - Si - C_2H_4 - C_6H_4 - C_2H_4 - Si - CH_3 - \\ | \qquad\qquad\qquad\qquad | \\ OH_{2-x} \qquad\qquad\qquad O_{0,5x} \end{array} \right]_n$$

where x = 0-2, with an average (w/w) molecular mass of $(73-80)\cdot10^3$, is used (see Golovatenko R.T. et al. (1990) Proceedings of the 7th All Union Conference on Chemistry, Production Technology and Practical Applications of Organosilicon Compounds (Parts 1 and 2, communications 212 and 472) Moscow). Prior to coating of the reaction mixture onto the lower substrate (2 or 7), polycarboarylenesiloxane is dissolved in acetone or methylethylketone. Several seconds after coating, the solvent is evaporated and a thin film of polycarboarylenesiloxane remains on the lower substrate.

It is important that the concentration of polycarboarylenesiloxane in the solvent be optimal to ensure sufficiently strong adhesion of the deformable gel layer (5) to the lower substrate (2 or 7) without worsening the optical characteristics of the said layer (5). The effect of polycarboarylenesiloxane is manifested in phase noises, which deteriorate the image quality on the surface of the output optical signal receptor (17) (e.g., on the screen or a photosensitive carrier). The thicker the layer of polycarboarylenesiloxane, the stronger is the impact of phase noises. Therefore, in order to improve the optical characteristics of the deformable gel layer (5) prepared by this method, the said layer should be made as thin as possible, i.e., the concentration of polycarboarylenesiloxane in the solvent should be at minimum. However, very low concentrations of the solvent can diminish the adhesion of the deformable gel layer (5) to the lower substrate (2 or 7). For this reason, in the proposed method the concentration of polycarboarylenesiloxane in the solvent should be optimum. The results of experiments aimed at the preparation of deformable gel layers (5) by the proposed methods are summarised in Table 1, wherein the information about the substances used for treatment of the lower substrate (2 or 7) is given in the first column and their concentrations in the solvent are indicated in the second column. The third column gives the yields (expressed on a percent basis) of the gel layers of acceptable quality, K, equal to the relative number of layers in the experimental batch that were fully retained on the lower substrate after separation of the lower and upper substrates. The fourth column gives the coefficient, T, which features the optical characteristics of the deformable gel layer (5) and is equal to the relative intensity of phase noises (with respect to background illumination intensity) for the cases where the relief is visualised by the dark field method. Phase noises were measured by using a conventional procedure which employs a photoelectronic multiplier (PEM) placed into the plane of the image, and an oscillograph.

**Table 1.**

| Compound | | Conc. in solvent | K, % | T, % |
|---|---|---|---|---|
| Polycarboarylenesiloxane | in | 8,0 | 100 | 3-4 |
| methylethylketone | | 2,0 | 100 | 2-2,5 |
| | | 0,5 | 100 | 1-1,5 |
| | | 0,25 | 100 | 0,3-0,5 |
| | | 0,1 | 100 | 0,1-0,2 |
| | | 0,05 | 100 | 0,05-0,1 |
| | | 0,03 | 95-100 | <0,05 |
| | | 0,01 | 90-95 | <0,05 |
| | | 0,005 | 70-80 | <0,05 |
| | | 0,5 | 100 | 0,8-1 |
| Polycarboarylenesiloxane | in | 0,25 | 100 | 0,4-0,5 |
| acetone | | 0,1 | 100 | 0,15- |
| | | 0,05 | 100 | 0,25 |
| | | 0,03 | 95-100 | 0,05-0,1 |
| | | 0,01 | 90-95 | <0,05 |
| | | 0,005 | 70-80 | <0,05 |

These data suggest that the optimum concentration of polycarboarylenesiloxane in acetone is (0.03-0.05)%.

In order to diminish the adhesion of the deformable gel layer (5) to the upper substrate (57), the latter can be coated with a metal, e.g. chromium.

In order to obtain a nearly rectangular (with rounded-off ends) shape of the deformable gel layer (40 x 30 mm$^2$) of 25 $\mu$m thickness, the reaction mixture can be poured (with the help of a micropipette) to three points on the lower substrate (these points should be arranged along the same line) at a 10 mm distance from one another (symmetrically to the coated area). The volume of the reaction mixture in two outer portions is 11 $\mu$l, that in the medium portion is 8 $\mu$l.

Single- and three-colour transformable optical systems based on light modulators (14) with deformable gel layers according to the invention can be used for e.g.:

information recording on photosensitive carriers (e.g. photofinish devices) with parallel recording with a laser or a thermal light beam (up to 10,000 dots per line);

information display (e.g., as TV projectors) for individual and public demonstrations with the use of light fluxes (up to 20 kilolumen and more) emitted by thermal or laser sources;

image recognition at image changeover rates above 50 kHz;

coding and decoding in security systems;

long-distance transferring of information (including telephone, TV and other types of electronic communication);

light commutation utilising light-fibre optics.

The light modulator with a deformable gel layer holds especially great promise as an optically controlled microlens with variable focal length. The construction of a matrix of lenses arranged in accordance with a certain law in various systems of automated control of multichannel optical correction of coherent and noncoherent light fluxes is also possible. Of particular interest is the application of the said modulator for correcting radiation wave fronts.

Summarising some of the combinations disclosed, in some of the preferred embodiments there is provided a single-colour transformable optical system comprising the following components arranged in succession along the same optical axis: a light source (10), a condenser (11), the first diaphragm (12), a composite illuminant objective (13), a transparent light modulator (14) with a deformable gel layer, a composite projection objective (15), a second diaphragm (16) placed before or behind the composite projection objective as well as a source of input electrical signals (18) and an output optical signal receptor (17) whose sensitivity is sufficient for monitoring changes in spatial-frequency and edge effect characteristics as well as in grey-scale, time-frequency and colorimetric characteristics of modulated light fluxes (or at least in one thereof); the light modulator (14) with a deformable gel layer comprises one or several cells (1), a support voltage unit (8) and a bias voltage unit (9); each cell (1) of the said modulator (14) contains one signal (3) and one support (6) electrode, two deformable dielectric layers (4, 5) of different dielectric permitivities (at least one thereof (5) is gel-like) placed in random sequence between the signal and support electrodes formed on the surface of the corresponding dielectric substrate of the signal and support electrode (2 or 7); one outlet of the support voltage unit is connected with the support electrodes of all cells, while the other outlet is grounded; one outlet of the bias voltage unit is also grounded; the voltages applied to the signal and support electrodes in all cells of the light modulator with a deformable gel layer can be constant or alternating so that at any instant of time the polarity of voltage applied to the signal electrode is opposite to the polarity of voltage applied to the support electrode; the surfaces of the first and second diaphragms are optically conjugated; the interface between the deformable layers in each cell of the said modulator is optically conjugated with the surface of the output optical signal receptor, and the surface of the second diaphragm represents the surface of a spatial Fourier-transformation image of the interface between the deformable layers.

The deformable gel layer (5) for all cells (1) of the light modulator (14) is prepared by addition of tetraethoxysilane and tin diethyldicaprylate to a 10-30% solution of $\alpha,\omega$-dihydroxypolydimethylsiloxane having the general formula of:

$$HO\text{-}Si(CH_3)_2O[\text{-}SiO(CH_3)_2\text{-}]_nSi(CH_3)_2\text{-}OH$$

and a molar mass of $(1\text{-}2)\cdot10^4$ g/mol in polydimethylsiloxane having the formula of:

$$(CH_3)_3SiO[\text{-}SiO(CH_3)_2\text{-}]_nSi(CH_3)_3$$

and a molar mass of $(0.6\text{-}1)\cdot10^3$ g/mol, at the 1:0.8-1:1.5 and 1:2-1:5 $\alpha,\omega$-dihydroxy-polydimethylsiloxane / tin diethyldicaprylate and $\alpha,\omega$-dihydroxypolydimethylsiloxane / tetraethoxysilane molar ratios, respectively; the reaction mixture is agitated for a suitable period and poured onto a transparent horizontal (lower) dielectric substrate (2 or 7) with a signal (3) or support (6) electrode formed on its surface with subsequent application of a second substrate (57) at a definite distance from the first substrate followed by solidification of the deformable gel layer (5) and separation of the second substrate (57) from the surface of the deformable gel layer (5); the lower substrate is precoated with a substance which increases the adhesion of the deformable gel layer (5) to the lower substrate; the distance between the points to which portions of the reaction mixture (56) have been poured and the amount of the reaction mixture (56) in each portion are varied depending on the required depth and geometric shape of the deformable gel layer (5) .

Preferably, the light modulator (14) with a deformable gel layer comprises additionally a controller (34), a synchroniser (35), an input electric signal converter (36), a grey-scale corrector (37), a separator (38), a line buffer (39), a column buffer (40) as well as line and column buses; all the cells (1) of the light modulator (14) have been made as a matrix; the inlet of the synchroniser (35) is connected with the source of input electrical signals (18) and the outlet is connected with the 1st inlet of the controller (34); the 2nd inlet of the said controller (34) is connected with the source of input electrical signals (18) and its outlets are connected with the control inlet of the line buffer (39) and with the 1st inlet of the input electrical signal converter (36); the 2nd inlet of the said converter is connected with the source of input electrical signals (18), and the outlet of the said converter (36) is connected with the information inlet of the grey-scale corrector (37); the line buses are connected with the outlets of the line buffer (39); the column buses are connected with the outlets of the column buffer (40); the information inlet of the separator (38) is connected with the outlet of the grey-scale corrector (37); the synchronisation inlet of the separator (38) is connected with the outlet of the synchroniser (35); the outlets of the separator (38) are connected with the information inlets of the line (39) and column (40) buffers; the control inlet of the column buffer (40) is connected with the controller (34); the 1st and 2nd control inlets of the grey-scale corrector (37) are connected with the controller (34) and the bias voltage unit (9), respectively (Fig. 17).

Preferably, the optical system comprises additionally a feedback device (19) whose inlet is connected with the output optical signal receptor (17) and the outlet is connected with the 3rd inlet of the controller (34) of the light modulator (14) with a deformable gel layer (Fig.1).

Preferably, each cell (1) of the light modulator (14) contains additionally a protective dielectric layer (33) coated onto a signal electrode (3) and a switch device (41) whose outlet is connected with the signal electrode (3); the record-erasure control inlet is connected with the line bus, and the record-erasure inlet is connected with the column bus.

Preferably, prior to the preparation of the deformable gel layer (5), the upper substrate (57) is precoated with a substance which decreases the adhesion of the deformable gel layer (5) to the said substrate (57).

Preferably, the pouring of the reaction mixture is not performed until the viscosity of a separate portion of the said mixture measured with the aid of a viscosimeter under identical atmospheric conditions (temperature, humidity, pressure) increases to about 5-fold in comparison with the viscosity of the original solution of $\alpha,\omega$-dihydroxypolymethylsiloxane in polydimethylsiloxane.

Preferably the separation of the upper substrate (57) from the surface of the deformable gel layer (5) is not performed until the time of development of a relief determined with the aid of a reliefographic device for measuring rheological characteristics of materials and under identical atmospheric conditions (temperature, humidity, pressure), for a deformable gel layer prepared from the said reaction mixture by free pouring onto a separate substrate, will be less than $3\tau$, where $\tau$ is the time of development of a relief for a given deformable gel layer after stability has been achieved (normally, a few days after the preparation of the reaction mixture) measured for a reaction mixture with the same concentration of all components.

Preferably, the upper substrate (57) is separated from the lower substrate (2 or 7) by fixation of the latter in a horizontal position with subsequent application of uniform forces to the edge of the upper substrate (57) in a direction perpendicular to the surfaces of the deformable gel layer (5).

In some preferred embodiments the system has a single- or a multicomponent lens raster (20) whose focal plane coincides with that of the first diaphragm, placed between the condenser (11) and the first diaphragm (12).

In some preferred embodiments, the interface between the deformable layers (4, 5) of the light modulator (14) has been shaped as a curved cylindrical, spherical or any other surface, while one or both dielectric substrates (2, 7) to which electrodes (3, 6) are applied, has(have) been made as single- or multicomponent objectives .

In some preferred embodiments, the optical axis of the light source (10) and the condenser (11) is at an angle to the main optical axis, and the first diaphragm (12) has been made in the form of reflecting elements.

In some preferred embodiments, some elements of an adaptive amplitude filter for absorption of Fourier-transformation images of noise (22) have been placed into the plane of the second diaphragm (12) in the spacings between its elements.

In some preferred embodiments, one of the electrodes (4 or 5) in each cell (1) of the light modulator (14) has been made as a reflecting electrode; so that the reflecting surface formed by one of the said electrodes (4 or 5) in all cells (1) of the light modulator (14) is beyond the deformed interface on the route of the incident light passing through the said modulator (14); the optical axis of the light source (10) and the condenser (11) is at angle to the main optical axis; the first (12) and second (16) diaphragms are combined to form a common spatial-frequency raster of reflecting elements (23) so that the incident light from the condenser (11) placed at an angle to the main optical axis is fully reflected, first in the direction of the light modulator (14), along the main optical axis, and then in the opposite direction, i.e., towards the system of reflecting elements (23); the shape of the said elements (23), their tilting relative to the main optical axis and the distance between the raster elements (23) have been selected so that the surface of the said raster (23) is optically self-conjugated and represents the surface of a spatial Fourier-transformation image of the interface between the deformable layers (4, 5), while the surface of the interface between the deformable layers (4, 5) has been optically conjugated with the surface of the output optical signal receptor (17).

In some preferred embodiments, the integral elements of all cells (1) of the light modulator (14) have been made with a curved cylindrical, spherical or any other surface.

In some preferred embodiments, the reflecting elements of a common spatial-frequency raster (23) have been made with a curvature so that their overall design forms a concave surface able to focus the incident light.

In some preferred embodiments, the common spatial-frequency raster of reflecting elements (23) has been made as a set of total internal reflection prisms (24) and an absorbing plate (25) has been placed with a small spacing behind and parallel to the hypotenusal face of each prism (24).

In some preferred embodiments, the elements of the adaptive amplitude filter for absorption of Fourier-transformation images of noises (22) have been placed into the plane of the common spatial-frequency raster in the spacings between its elements.

In some preferred embodiments, the light modulator (14) with a deformable gel layer has been made with a curved cylindrical surface; the matrix of cells (1) of the said modulator (14) has been specially designed for line-by-line input of information so that the signal electrodes (3) in all cells (1) of the said modulator (14) are linear and parallel to one another; the common spatial-frequency raster of the reflecting elements (23) has been made in the form of parallel bars; the composite projection objective (15) has been designed to comprise at least one cylindrical lens; an additional cylindrical objective (26) has been placed between the condenser and the common spatial-frequency raster of reflecting elements (23); the generatrices of the curved surface of the light modulator (14) and of the cylindrical lens of the composite projection objective (15) as well as the linear signal electrodes (3) of the said modulator (14) have been made parallel to one another and to the bars of the common spatial-frequency raster (23) and perpendicular to the generatrix of the additional cylindrical objective (26).

In some preferred embodiments, the output optical signal receptor (17) of the said system has been designed as a screen (17) optically conjugated with the human eye. Furthermore, the system has been supplied with a scanning mirror device (27) placed between the composite projection objective (15) and the screen (17), a radiating element (28) and a photosensor (29) adjacent to the scanning mirror device (27) so that the incident light from the radiating element (28) is reflected from the said device (27) and sent to the photosensor (29) once in every scanning cycle; the light source (10) is of pulse type, is triggered externally and is connected with the controller (34); the photosensor (29) is connected with the synchroniser (35) of the light modulator (14) with a deformable gel layer; the electric motor (30) of the scanning mirror device (27) is connected with the controller (34); the rotation axis (31) of the scanning mirror device (27) is perpendicular to the generatrices of the curved surface of the light modulator (14) and to the generatrices of the cylindrical lens of the composite projection objective (15) as well as to the linear signal electrodes (3) of the said modulator (14).

In some preferred embodiments, the support electrodes (6) in all cells (1) of the light modulator (14) have been made as a common support electrode, while the deformable gel layers (5) of all cells (1) have been made as a single deformable gel layer;

In some preferred embodiments, the system contains one or several additional light modulators (14) each with a deformable gel layer.

In some preferred embodiments, a composite projection objective (15) has been placed in front of the second diaphragm (16).

In some preferred embodiments, the support electrodes (6) in all cells (1) of the light modulator (14) have been made as a common support electrode and the deformable gel layers (5) in all cells (1) have been made as a single deformable gel layer.

In some preferred embodiments, the support electrodes (6) in all cells (1) of the light modulator (14) have been made as a common support electrode and the deformable gel layers (5) in all cells (1) have been made as a single deformable gel layer.

In one embodiment, an optical focusing system comprises the following components arranged in succession along the same optical axis: a light source (10), a condenser (11) and a lens (32). The system contains additionally a source of input electrical signals (18) and a transparent light modulator (14) with a deformable gel layer placed on the optical axis behind the lens (32) and consisting of a cell (1) with a deformable gel layer (5) and a support voltage unit (8); the cell of the said modulator (14) contains a dielectric substrate of the signal electrode (2), a signal electrode (3), a protective dielectric layer (33), two deformable layers (4, 5) of different dielectric permitivities (at least one thereof (5) is gel-like), a support electrode (6) and a dielectric substrate (7) of the support electrode (all arranged in succession on the same optical axis); the signal electrode (3) is connected with the source of input electrical signals (18) and the support electrode (6) is connected with the support voltage unit (8); the voltages applied to the signal (3) and support (6) electrodes can be constant or alternating and at any instant of time the polarity of voltage applied to the support electrode (6) will be opposite to the polarity of voltage applied to the signal electrode (3).

In some preferred embodiments, there is provided a method of control of the relief shape at the interface between two deformable layers in the light modulator (14) with a deformable gel layer within an optical system consisting of the application of constant or alternating voltage to signal (3) or support (6) electrodes, in which the voltages applied to the signal electrodes (3) of all cells (1) are different so that the distribution of the electric potential in the planes of the said electrodes (3) and at the interface between the deformable layers (4, 5) is not rastered.

In some preferred embodiments, there is provided a light modulator with a deformable gel layer comprising one or several cells (1), a support voltage unit (8) and a bias voltage unit (9); each cell (1) of the light modulator (14) containing one signal (3) and one support (6) electrode as well as two deformable dielectric layers (4, 5) of different dielectric permitivities (at least one thereof (5) is gel-like) which are placed at random sequence between the signal (3) and support (6) electrodes formed on the surface of the corresponding dielectric substrates of the signal and support electrodes (2 and 7); one outlet of the support voltage unit (8) is connected with the support electrodes (6) of all cells and the other outlet is grounded ; one outlet of the bias voltage unit (9) is also grounded; the voltages applied to the signal (3) and support (6) electrodes of all cells (1) of the light modulator (14) with a deformable gel layer can be constant or alternating and at any given instant of time the polarity of voltage applied to the signal electrodes (3) is opposite to the polarity of voltage applied to the support electrodes (6).

In some preferred embodiments, the reaction mixture for gel formation is agitated for not less than 20 minutes and poured onto a transparent horizontal (lower) dielectric substrate (2 or 7) with a signal (3) or support (6) electrode formed on its surface with subsequent application of a second substrate (57) at a definite distance from the first substrate followed by solidification of the deformable gel layer (5) and separation of the second substrate (57) from the surface of the deformable gel layer (5); the lower substrate is precoated with a substance which increases the adhesion of the deformable gel layer (5) to the lower substrate; and the distance between the points to which portions of the reaction mixture (56) have been poured and the amount of the reaction mixture (56) in each portion are varied depending on the required depth and geometric shape of the deformable gel layer (5) (Fig.33).

In some preferred embodiments, a light modulator (14) with a deformable gel layer comprises additionally a controller (34), a synchroniser (35), an input electric signal converter (36), a grey-scale corrector (37), a separator (38), a line buffer (39), a column buffer (40) as well as line and column buses; all the cells (1) of the light modulator (14) have been made as a matrix; the inlet of the synchroniser (35) is connected with the source of input electrical signals (18) and the outlet is connected with the 1st inlet of the controller (34); the 2nd inlet of the said controller (34) is connected with the source of input electrical signals (18) and its outlets are connected with the control inlet of the line buffer (39) and with the 1st inlet of the input electrical signal converter (36); the 2nd inlet of the said converter is connected with the source of input electrical signals (18), and the outlet of the said converter (36) is connected with the information inlet of the grey-scale corrector (37); the line buses are connected with the outlets of the line buffer (39); the column buses are connected with the outlets of the column buffer (40); the information inlet of the separator (38) is connected with the outlet of the grey-scale corrector (37); the synchronisation inlet of the separator (38) is connected with the outlet of the synchroniser (35); the outlets of the separator (38) are connected with the information inlets of the line (39) and column (40) buffers; the control inlet of the column buffer (40) is connected with the controller (34); the 1st and 2nd control inlets of the grey-scale corrector (37) are connected with the controller (34) and the bias voltage unit (9), respectively (Fig.17).

In some embodiments, each cell (1) of the light modulator (14) contains additionally a protective dielectric layer (33) coated onto a signal electrode (3) and a switch device (41) whose outlet is connected with the signal electrode (3); the record-erasure control inlet is connected with the line bus, and the record-erasure inlet is connected with the column bus.

In some preferred embodiments, in the light modulator the signal electrode (3) in each cell (1) has been made in the form of bands, or concentric rings, or a matrix of elements, or as elements of any other structure, each element being connected with the outlet of its own switch device (41) wherein the record-erasure control inlets are connected with the line bus and the record-erasure inlets are connected with the column bus.

In some preferred embodiments, in each cell (1) of the light modulator (14) the deformable gel layer (5) has been coated onto the support electrode (6); each cell (1) contains additionally a second support electrode (43) formed on the free surface of the dielectric substrate (2) of the first signal electrode as well as a second deformable gel layer (44), a second deformable layer (45), a second protective dielectric layer (46), a second signal electrode (47) and a dielectric substrate (48) of the second signal electrode (all arranged in succession on the second support electrode (43)) as well as a second switch device (49); the outlet of the said device (49) is connected with the second signal electrode (47), the record-erasure inlet of the second switch device (49) is connected with the column bus, the record-erasure control inlet of the said device (49) is connected with the line bus; the second support electrode (43) is connected with the ungrounded outlet of the support voltage unit (8), and all the layers in each cell (1) of the light modulator (14) have been made transparent.

In some preferred embodiments, in each cell (1) of the light modulator (14) the deformable gel layer (5) has been coated onto the support electrode (6); each cell (1) contains additionally a second signal electrode (47) formed on the free surface of the dielectric substrate (2) of the first signal electrode as well as a second protective dielectric layer (46), a second deformable layer (45), a second deformable gel layer (44), a second support electrode (43) and a dielectric substrate (50) of the second support electrode (all arranged in succession on the second signal electrode (47)) as well as a second switch device (49); the outlet of the said device (49) is connected with the second signal electrode (47), the record-erasure inlet of the second switch device (49) is connected with the column bus, the record-erasure control inlet of the said device (49) is connected with the line bus; the second support electrode (43) is connected with the ungrounded outlet of the support voltage unit (8), and all the layers in each cell (1) of the light modulator (14) have been made transparent.

In some preferred embodiments, in each cell (1) of the light modulator (14) the deformable gel layer (5) has been coated onto the support electrode (6); each cell (1) contains additionally a second support electrode (43) formed on the free surface of the dielectric substrate (7) of the first support electrode (6) as well as a second deformable gel layer (44), a second deformable layer (45), a second protective dielectric layer (46), a second signal electrode (47) and a dielectric substrate (48) of the second signal electrode (all arranged in succession on the second support electrode (43)) as well as a second switch device (49); the outlet of the said device (49) is connected with the second signal electrode (47), the record-erasure inlet of the second switch device (49) is connected with the column bus, the record-erasure control inlet of the said device (49) is connected with the line bus; the second support electrode (43) is connected with the ungrounded outlet of the support voltage unit (8), and all the layers in each cell (1) of the light modulator (14) have been made transparent;

In some preferred embodiments, each cell (1) contains additionally an n-number of alternating dielectric substrates (51), an n-number of signal electrodes (3), an n-number of support electrodes (6), an n-number of protective dielectric layers (33), an n-number of deformable gel layers (5) and an n-number of deformable layers (4); all the additional layers have been made transparent; each substrate (51) has been coated additionally with a signal electrode (3), a protective dielectric layer (33), a deformable layer (4), a deformable gel layer (5) and a support electrode (6) formed on the surface of the next substrate (51) (all arranged successively on one side of the dielectric substrate (51)) as well as an additional support electrode (6) formed on the surface of the dielectric substrate of the signal electrode (2); besides, each cell (1) of the light modulator (14) has been provided with an n-number of switch devices (41) whose outlets are connected with an n-number of additional signal electrodes (3), the record-erasure inlets are connected with the column bus and the record-erasure control inlets are connected with the line bus.

In some preferred embodiments, each cell (1) of the light modulator (14) contains an additional ground electrode (52) surrounding the signal electrode (3) on all sides .

In some preferred embodiments the dielectric substrates (2) of the signal electrodes of all cells (1) have been made as a common signal substrate; the additional ground electrodes (52) in all cells (1) of the matrix have been made as a common ground electrode (53), and an additional dielectric layer (54) whose depth is much smaller (say 5-10 times and less) than the widths of the signal electrodes (3) and the common ground electrode (53) have been placed between the signal electrodes (3) of all cells (1) and the common ground electrode (53).

In some preferred embodiments, the modulator contains additionally an N-number of support voltage units (8) and the support electrodes (6) of all cells (1) are arranged into a matrix consisting of an N+1-number of support conducting elements, each representing a uniform conducting layer which plays the role of a common support electrode for several cells (1) and is connected with the corresponding support voltage unit (8); one outlet of the said unit (8) is grounded, the other outlet is connected with only one support conducting element and the control inlet is connected with the controller (34) of the light modulator (14).

In some preferred embodiments, there is provided a method for recording information from the source of video signals into a light modulator with a deformable gel layer, in which the input electrical signal represents a video signal; the matrix of cells (1) has a rectangular structure; all the cells (1) have been divided into two equal groups arranged in chessboard order (Fig.30a), and each image frame is recorded into the cells (1) of the light modulator (14) as two half-frames; for recording of the first half-frame, the first group of cells (1) is switched on, while the second group of cells is grounded and vice versa: for recording of the second half-frame, the second group of cells (1) is switched on and the first group of cells (1) is grounded (Fig.30b);

In an alternative arrangement, the input electrical signal represents a video signal; the matrix of cells (1) has a rectangular structure; all the cells (1) have been divided into four equal groups wherein the signal electrodes (3) are arranged into lines and columns with one electrode placed between any two adjacent electrodes (Fig. 31a) and each image frame is recorded into cells (1) of the light modulator (14) in four tacts so that one- fourth of all signal electrodes (3) of the said modulator (14) are switched on in each tact and the rest three-fourths are grounded;

In some preferred embodiments, the matrix of cells (1) has a rectangular structure; all the cells (1) have been divided into two equal groups arranged in chessboard order and each image frame is recorded into cells (1) of the light modulator (14) by applying signal voltages to the signal electrodes (3) of the first group of cells (1), while the voltages applied to the signal electrodes of the second group of cells have the same absolute values but different polarities in comparison with the voltages applied to the corresponding electrodes of the first group of cells (1); the cells (1) whose signal electrodes (3) have equal absolute values of voltages should be placed close to each other (Fig.32);

In some preferred embodiments, in a method of making a modulator not later than 3-5 days after coating the deformable gel layer (5) is exposed to the atmosphere of an inert gas and is encapsulated;

In one method of making the modulator, after the separation of the upper substrate (57) the deformable gel layer is coated with an additional conducting gel layer (58) whose conductivity is not less than ten times greater than that of the said layer (5) and whose depth is not less than ten times smaller than that of the said layer (5); the additional conducting gel layer is prepared by addition of tetraethoxysilane and tin diethyldicaprylate to a 10-30% solution of $\alpha,\omega$-dihydroxypolydimethylsiloxane having the general formula of:

$$HO\text{-}Si(CH_3)_2O[\text{-}SiO(CH_3)_2\text{-}]_nSi(CH_3)_2\text{-}OH$$

and a molar mass of $(1\text{-}2)\cdot10^4$ g/mol in polydimethylsiloxane having the formula of:

$$(CH_3)_3SiO[\text{-}SiO(CH_3)_2\text{-}]_nSi(CH_3)_3$$

and a molar mass of $(0.6\text{-}1)\cdot10^3$ g/mol, at the 1:0.8-1:1.5 and 1:2-1:5 $\alpha,\omega$-dihydroxypoly-dimethylsiloxane / tin diethyl-dicaprylate and $\alpha,\omega$-dihydroxypolydimethylsiloxane / tetraethoxysilane molar ratios, respectively.

In one method, after separation of the upper substrate (57) from the additional conducting gel layer (58), the support electrode (6) under the deformable gel layer (5) is electrically conjugated with the said layer (58);

In some preferred embodiments of making a modulator, after stirring the reaction mixture is poured onto the dielectric substrate (7) of the support electrode with a support electrode (6) formed on its surface, the dielectric support (7) being made as a relief defining individual cells.

In some preferred embodiments of making a modulator, the lower (2 or 7) and upper (57) substrates have been made with a cylindrical or spherical surface featuring the same radius of curvature.

In some preferred embodiments of making a modulator, the surface of the upper substrate (57) used for the covering of the reaction mixture has been made embossed (Figs. 36, 38, 39);

In some preferred embodiments, there is provided a three-colour transformable optical system comprising three identical independent information display channels, each containing a light source (10), a condenser (11), the first diaphragm (12), a composite illuminant objective (13), a transparent light modulator (14) with a deformable gel layer, a composite projection objective (15) and a second diaphragm (16) (all arranged in succession along the same optical axis) as well as a system (59) of reflecting mirrors (60) placed behind the second diaphragms (16), a source of input electrical signals (18) and an output optical signal receptor (17) whose sensitivity is sufficient for monitoring changes in spatial-frequency and edge effect characteristics as well as in grey-scale, time-frequency and colorimetric characteristics of modulated light fluxes (or at least in one thereof); the reflecting mirrors (60) are arranged in such a way that the three colour fluxes that have passed through the second diaphragms (16) in each channel are summated into a full-colour image on the surface of the output optical signal receptor (17); in addition, every light modulator (14) with a deformable gel layer comprises one or several cells (1), a support voltage unit (8) and a bias voltage unit (9); each cell (1) of the said modulator (14) contains one signal (3) and one support (6) electrode as well as two deformable dielectric layers (4, 5) of different dielectric permitivities (at least one thereof (5) is gel-like) and placed at random sequence between the signal (3) and support (6) electrodes formed on the surface of the corresponding dielectric substrate (2 or 7); one outlet of the support voltage unit (8) is connected with the support electrodes (6) of all cells (1), while the other outlet is grounded; one outlet of the bias voltage unit (9) is also grounded; the voltages applied to the signal (3) and support (6) electrodes in each cell (1) of the light modulator (14) with a deformable gel layer can be constant or alternating so that at any instant of time the polarity of voltage applied to the signal electrodes (3) is opposite to the polarity of voltage applied to the support electrodes (6); the surfaces of the first (12) and second (16) diaphragms in each independent information display channel are optically conjugated; the interface between the deformable layers (4, 5) in each cell (1) of the light modulator (14) is optically conjugated with the surface of the output optical signal receptor (17), and the surface of the second diaphragm (16) represents the surface of a spatial Fourier image of the interface between the deformable layers (4, 5).

The light modulator (14) comprises additionally a controller (34), a synchroniser (35), an input electric signal converter (36), a grey-scale corrector (37), a separator (38), a line buffer (39), a column buffer (40) as well as line and column buses; all the cells (1) of the light modulator (14) have been made as a matrix; the inlet of the synchroniser (35) is connected with the source of input electrical signals (18) and the outlet is connected with the 1st inlet of the controller (34); the 2nd inlet of the said controller (34) is connected with the source of input electrical signals (18), and the outlets of the said controller (34) are connected with the control inlet of the line buffer (39) and the 1st inlet of the input electrical signal converter (36); the 2nd inlet of the said converter (36) is connected with the source of input electrical signals (18) and the outlet of the said converter (36) is connected with the information inlet of the grey-scale corrector (37); the line buses are connected with the outlets of the line buffer (39); the column buses are connected with the outlets of the column buffer (40); the informational inlet of the separator (38) is connected with the outlet of the grey-scale corrector (37); the synchronisation inlet of the separator (38) is connected with the outlet of the synchroniser (35); the outlets of the separator (38) are connected with the information inlets of the line (39) and column (40) buffers; the control inlet of the column buffer (40) is connected with the controller (34), and the 1st and 2nd control inlets of the grey-scale corrector (37) are connected with the controller (34) and the bias voltage unit (9), respectively (Fig.17).

The three-colour transformable optical system comprises additionally a feedback device (19) whose inlet is connected with the output optical signal receptor (17) and the outlet of the said device is connected with the 3rd inlet of the controller (34) of the light modulator (14) with a deformable gel layer. Each cell (1) of the light modulator (14) contains additionally a protective dielectric layer (33) coated onto a signal electrode (3) and a switch device (41) whose outlet is connected with the signal electrode (3); the record-erasure control inlet is connected with the line bus, and the record-erasure inlet is connected with the column bus.

In some preferred embodiments, there is provided a three-colour transformable optical system containing three identical independent information display channels, each comprising the following components arranged in succession along the same optical axis: a light source (10), a condenser (11), the first diaphragm (12), a composite illuminant objective (13), a transparent light modulator (14) with a deformable gel layer and a composite projection objective (15) as well as a system (61) of dichroic mirrors (62) placed behind the composite projection objectives (15), a second diaphragm (16), a source of input electrical signals (18) and an output optical signal receptor (17) whose sensitivity is sufficient for monitoring changes in spatial-frequency and edge effect characteristics as well as in grey-scale, time-frequency and colorimetric characteristics of modulated light fluxes (or at least in one thereof); the dichroic mirrors (62) are arranged in such a way that the three colour light fluxes that have passed through the composite projection objectives (15) in each channel are summated into a full-colour image on the surface of the output optical signal receptor (17); besides, every light modulator (14) with a deformable gel layer comprises one or several cells (1), a support voltage unit (8) and a bias voltage unit (9); each cell (1) of the said modulator (14) contains one signal (3) and one support (6) electrode as well as two deformable dielectric layers (4, 5) of different dielectric permitivities (at least one thereof (5) is gel-like) and placed at random sequence between the signal (3) and support (6) electrodes formed on the surface of the corresponding dielectric substrate (2 or 7) one outlet of the support voltage unit (8) is connected with the support electrodes (6) of all cells (1), while the other outlet is grounded; one outlet of the bias voltage unit (9) is also grounded; the voltages applied to the signal (3) and support (6) electrodes in each cell (1) of the light modulator (14) with a deformable gel layer can be constant or alternating so that at any instant of time the polarity of voltage applied to the signal electrodes (3) is opposite to the polarity of voltage applied to the support electrodes (6); the surfaces of the first (12) and second (16) diaphragms in each independent information display channel are optically conjugated; the interface between the deformable layers (4, 5) in each cell (1) of the light modulator (14) is optically conjugated with the surface of the output optical signal receptor (17), and the surface of the second diaphragm (16) represents the surface of a spatial Fourier image of the interface between the deformable layers (4, 5).

The second diaphragm (16) has been made as a system of three-colour light filters that stop zero orders of diffraction of all the three basic colours but are transparent to higher orders of diffraction of the same colours.

The light modulator (14) in such an arrangement comprises additionally a controller (34), a synchroniser (35), an input electric signal converter (36), a grey-scale corrector (37), a separator (38), a line buffer (39), a column buffer (40) as well as line and column buses; all the cells (1) of the light modulator (14) have been made as a matrix; the inlet of the synchroniser (35) is connected with the source of input electrical signals (18) and the outlet is connected with the 1st inlet of the controller (34); the 2nd inlet of the said controller (34) is connected with the source of input electrical signals (18), and the outlets of the said controller (34) are connected with the control inlet of the line buffer (39) and the 1st inlet of the input electrical signal converter (36); the 2nd inlet of the said converter (36) is connected with the source of input electrical signals (18) and the outlet of the said converter (36) is connected with the information inlet of the grey-scale corrector (37); the line buses are connected with the outlets of the line buffer (39); the column buses are connected with the outlets of the column buffer (40); the informational inlet of the separator (38) is connected with the outlet of the grey-scale corrector (37); the synchronisation inlet of the separator (38) is connected with the outlet of the synchroniser (35); the outlets of the separator (38) are connected with the information inlets of the line (39) and column (40) buffers; the control inlet of the column buffer (40) is connected with the controller (34), and the 1st and 2nd control inlets of the grey-scale corrector (37) are connected with the controller (34) and the bias voltage unit (9), respectively;

Furthermore, the three-colour transformable optical system comprises additionally a feedback device (19) whose inlet is connected with the output optical signal receptor (17) and the outlet of the said device is connected with the 3rd inlet of the controller (34) of the light modulator (14) with a deformable gel layer (Fig.40).

In such an arrangement, preferably each cell (1) of the light modulator (14) contains additionally a protective dielectric layer (33) coated onto a signal electrode (3) and a switch device (41) whose outlet is connected with the signal electrode (3); the record-erasure control inlet is connected with the line bus, and the record-erasure inlet is connected with the column bus (Fig. 20).

In some preferred embodiments, there is provided a three-colour transformable optical system in which the output optical signal receptor (17) has been made as a screen (17) which is optically conjugated with the human eye; the matrix of cells (1) of every light modulator (14) with a deformable gel layer has been specially designed for line-by-line input of information so that the signal electrodes (3) of all cells (1) of the said modulator (14) are linear and parallel to one another; the composite illuminant objectives (13) and the composite projection objectives (15) of all the three independent information display channels contain at least one cylindrical lens ((66) and (67), respectively); the generatrices of the cylindrical lenses (67) of the composite projection objectives (15) and the linear signal electrodes (3) of the light modulators (14) with a deformable gel layer are parallel to one another and to the bars of the first (12) and second (16) diaphragms and perpendicular to the generatrices of the cylindrical lenses (66) of the composite illuminant objectives (13); besides, the three-colour transformable optical system has been provided with a scanning mirror device (27) placed before the screen (17), a radiating element (28) and a photosensor (29) adjacent to the scanning mirror device (27) so that the incident light from the radiating element (28) is reflected from the scanning mirror device (27) and sent to the photosensor (29) once in every scanning cycle; the light source (10) in each independent information display channel is of pulse type, is triggered externally and is connected with the controller (34) of the light modulator (14) localised in the corresponding channel; the photosensor (29) is connected with the synchronisers (35) of all light modulators (14) with a deformable gel layer; the electric motor (30) of the scanning mirror device (27) is connected with the controllers (34) of all light modulators (14); the rotation axis (31) of the scanning mirror device (27) is perpendicular to the generatrices of the cylindrical lenses (67) of the composite projection objectives (15) and to the linear signal electrodes of the light modulators.

In some preferred embodiments, there is provided a three-colour transformable optical system which utilises a common thermal light source (10) for all the three information display channels and a common condenser (11) placed on the same optical axis behind the thermal light source (10); the second diaphragm (16) in each information display channel features such a construction that permits one to single out the spectral ranges of red, green or blue colours within each diffraction order and the condenser (11), which is also common for all the three channels, collects the light flux emerging from the light source (10), splits it into three independent fluxes and sends them to the first diaphragms (12) and composite illuminant objectives (13) of each independent information display channel.

Another three-colour transformable optical system utilises one (instead of three) information display channel wherein a one- or multicomponent lens raster (20) whose focal plane coincides with that of the first diaphragm (12) has been placed between the condenser (11) and the first diaphragm (12); the light source (10) is of thermal type; the signal electrode in each cell (1) of the light modulator (14) has been made in the form of three independent comb-like structures (68) placed at different angles to one another and connected with the outlet of the corresponding switch device (41); the record-erasure control inlets of all switch devices (41) are connected with the line bus, and the record-erasure outlets are connected with the column bus; each cell (1) of the light modulator (14) has been provided with an additional ground electrode (69) which forms interlaced structures with the three comb-like structures (68) of the signal electrode; the first (12) and second (18) diaphragms have been made as opaque plates containing three groups of slits; all the slits in a certain group of the second diaphragm (16) are parallel to the corresponding slits of the first diaphragm (12) and to the electrodes of the corresponding comb-like structures (68) of each cell (1) of the light modulator (14) and feature such a construction that would ensure the passage of only one of the three basic colours (red, blue and green) after its diffraction from the relief surface of the deformable gel layer (5) underneath the interlaced structures; the latter have identical orientation for each colour in all cells (1) of the light modulator (14) with a deformable gel layer.

One three-colour transformable optical contains additionally a three-section light filter (70) placed before the first diaphragms (12) of all the three independent information display channels and before or after the condenser.

In some preferred embodiments, a three-colour transformable optical system contains one information display channel; a three-sectional light filter (70) is made rotary and the support voltage unit (8) features such a construction that the value of the output support voltage depends on the wavelengths of the light fluxes of different colours passing through the light modulator (14).

In some preferred embodiments, there is provided a method for recording information in the three-colour transformable optical system, in which the matrix of cells has a rectangular structure wherein all cells (1) are divided into two equal groups arranged in chessboard order and the three basic colours (red, green, blue) of each image frame are recorded consecutively, at first into one group of cells, then into the other group and then again into the first group; every time the cells to which signals are not transferred, are grounded.

Figure 49 is an embodiment of a display panel for viewing by the naked eye. This is in the form of a light modulator having at least one cell which comprises two deformable dielectric layers (4, 5) which meet at an interface, at least one (5) of which is a relief forming gel, a first electrode (6) on one side of the layers and signal electrode (3) on the other side of the layers, there being means for providing signals to the signal electrodes to create reliefs in the cells on the gel surfaces. Between adjacent portions of the signal electrode (3) there are provided additional electrode portions (52, 53) arranged to establish constant ground potential between the adjacent signal electrode portions. The arrangement is such that a distributed light source (71) may be placed on one side of the cell so that the illuminating surface is parallel to the deformable layers and the incident light is perpendicular to the deformable layers, wherein the signal electrode in the cell comprises a plurality of laterally spaced portions and stop-diaphragm means (16) is arranged in the cell parallel to the layers, the stop-diaphragm means consisting of periodically repeated opaque parts which coincide either with the maxima $I_{max}$ or with the minima $I_{min}$ of the outgoing light intensity, and the repetition period T of the opaque parts being equal to the gel layer surface relief period.

The distance $H$ from the stop-diaphragm to the gel layer relief surface and the maximum value of the modulation coefficient

$$K_{max} = \frac{I_{max} - I_{min}}{I_{max} + I_{min}}$$

are determined from the Fresnel-Kirchhoff integral under the conditions

$$H \leqslant \frac{5 \cdot S^2}{\lambda}, \qquad S \geq 3T$$

in which S is the width of a cell;

T is the period of the relief on the interface between the deformable layers and the period of the signal electrode portions; and

$\lambda$ is the wavelength of the incident light.

The calculation of a feasible set of parameters providing the operation of the light modulator as a display panel have been done for one-dimensional harmonic relief with the use of the Fresnel integral (a particular case of the Fresnel-Kirchhoff integral) for the intensity of light $I(x,h)$ at any distance $h$ from the relief:

$$I(x,h) = \left| \frac{1}{\lambda h} \int_{-\frac{S}{2}}^{\frac{S}{2}} u_0(\xi) \cdot exp\left[ -j\frac{\pi}{\lambda h}\left(\xi^2 - x\xi\right) \right] d\xi \right|^2$$

in which $x$ and $\xi$ are the coordinates along the direction parallel to deformable layers and the stop-diaphragm,

$$u_0(\xi) = exp\left[jA(\xi)\right]$$

is the phase transfer function of the harmonic relief

$$A(\xi) = A_0 \cos\left(\frac{2\pi}{T}\xi\right),$$

in which $A_0$ is the relief depth.

That calculation suggests the following: T=100 $\mu$m, $A_0$=0.1-0.15 $\mu$m; $\lambda$=0.5 $\mu$m, possible values $H_1$ ... $H_n$ lie in the range 5-25 mm . The calculations showed that the Fresnel diffraction region comprises several (but not one, as is the case with an ordinary lens) light-focusing planes.

In the arrangement of Figure 49, all layers in each cell should be transparent, apart from the opaque parts of the stop diaphragm (16) for stopping light focused by relief protrusions. The opaque parts correspond to the maxima of light intensity, as shown. The panel is to be viewed by the naked eye on the side remote from the light source (71).

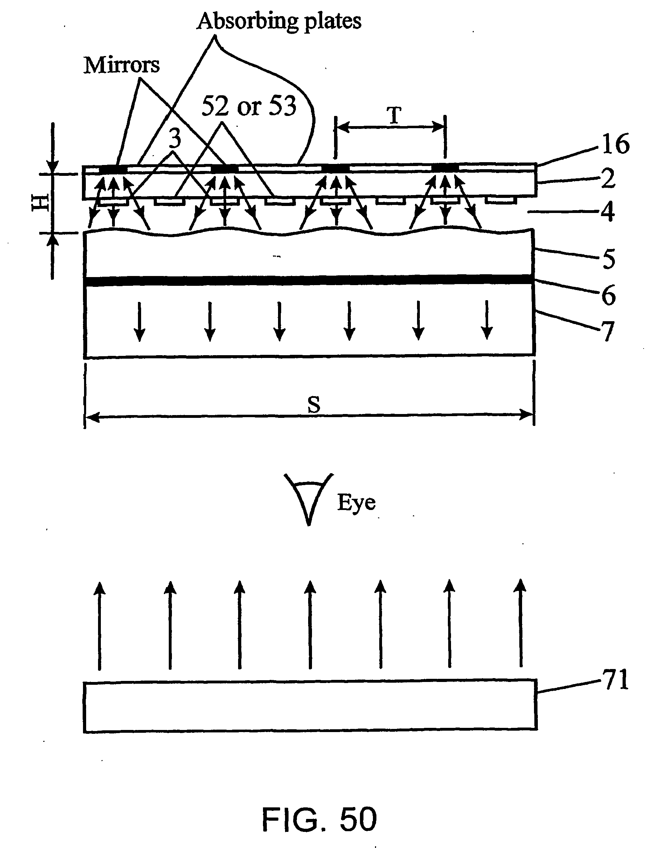

In Figure 50, the arrangement is similar but the panel is to be viewed by the naked eye from the same side as the light source (71). In this case the opaque portions of the stop diaphragm (16) are reflective and act as mirrors. The regions between these are made light absorbent.

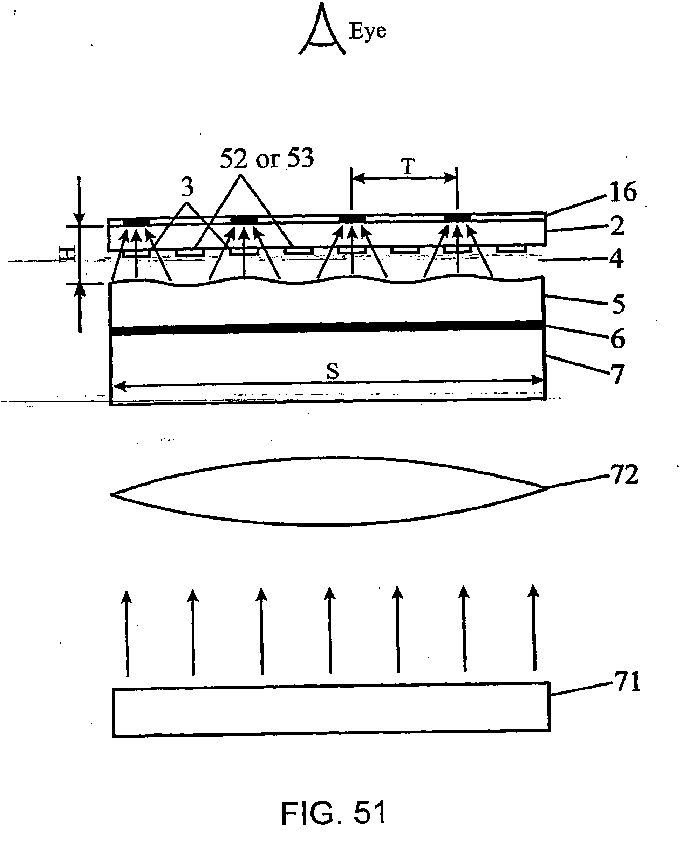

In Figure 51, which is similar to the system of Figure 49, an additional microlens (72) is provided between the light source 971) aned the deformable layers (4, 5) so as to improve the concentration of incident light on the gel layer.

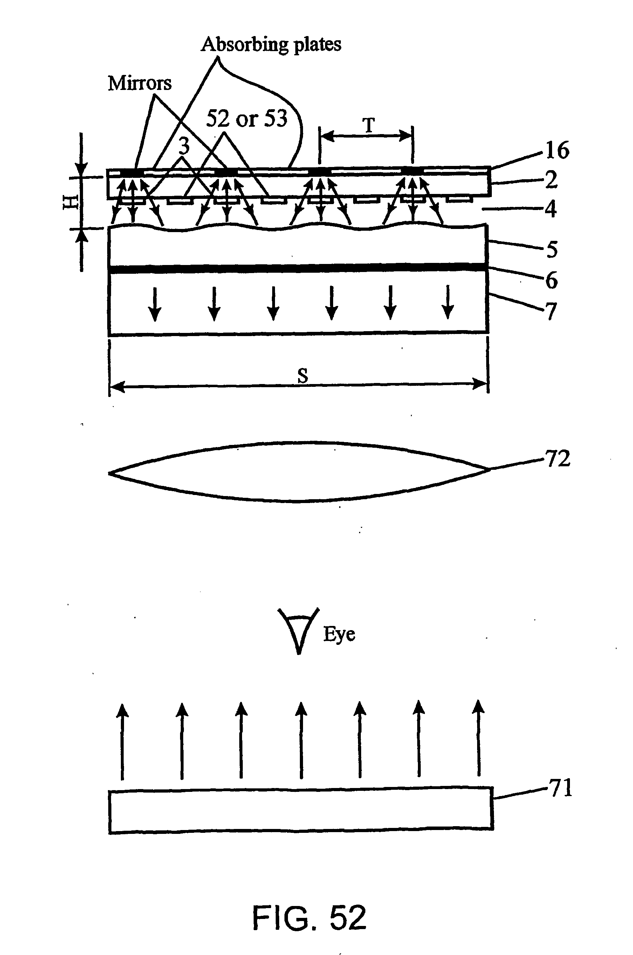

In Figure 52, a system similar to that of Figure 50 is illustrated, but with the addition of the microlens (72).

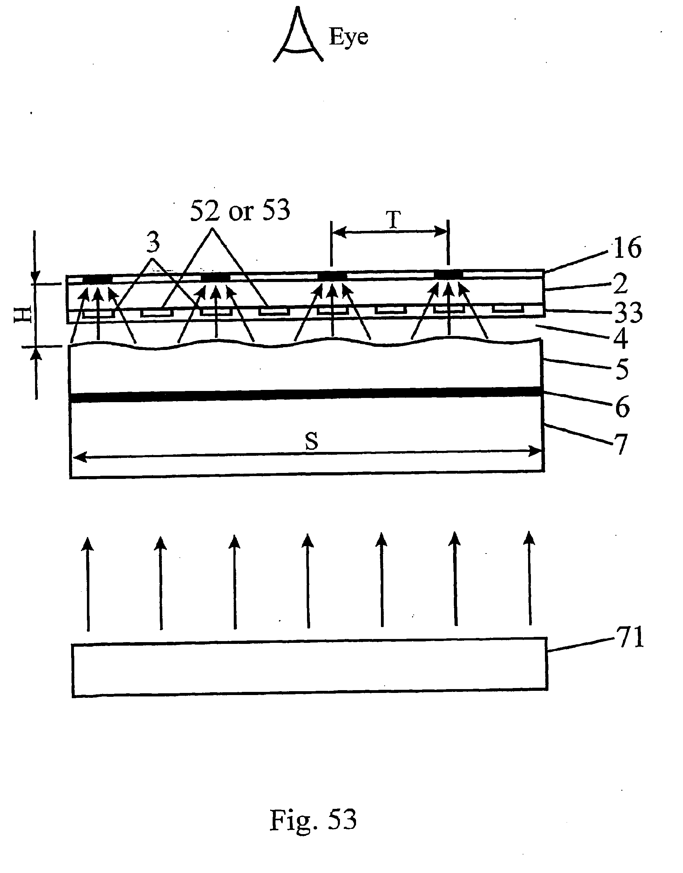

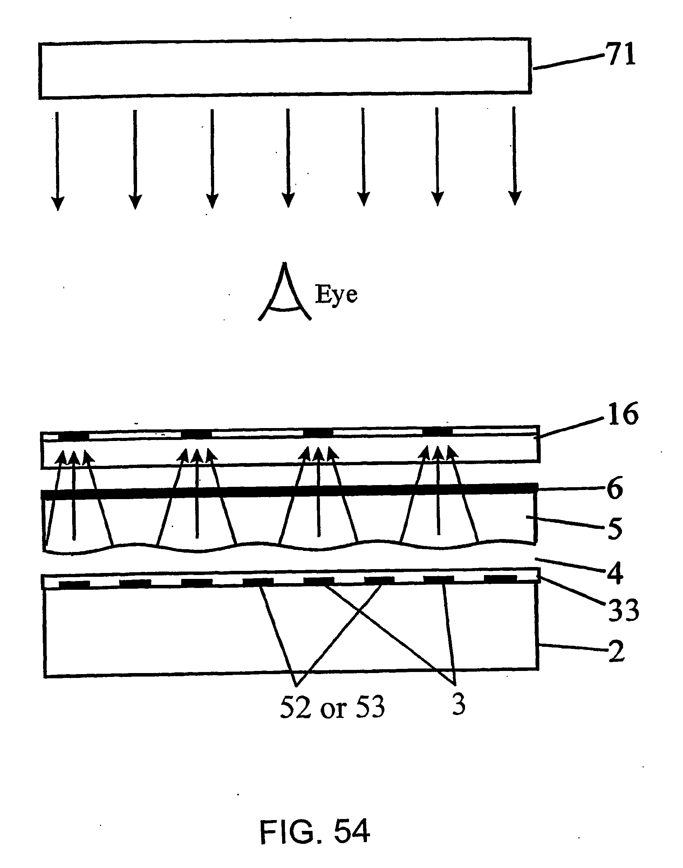

Figure 53 shows an arrangement similar to that of Figure 49, but with the addition of a transparent protective dielectric layer (33). Figure 54 show an arrangement in which a reflective and protective dielectric layer (33) is provided. In this arrangement the panel is viewed from the same side as the light source (71), which could be daylight from the sun or light from a lamp. In this arrangement, light passes through clear portions of the diaphragm (16) and is reflected back by the layer (33).

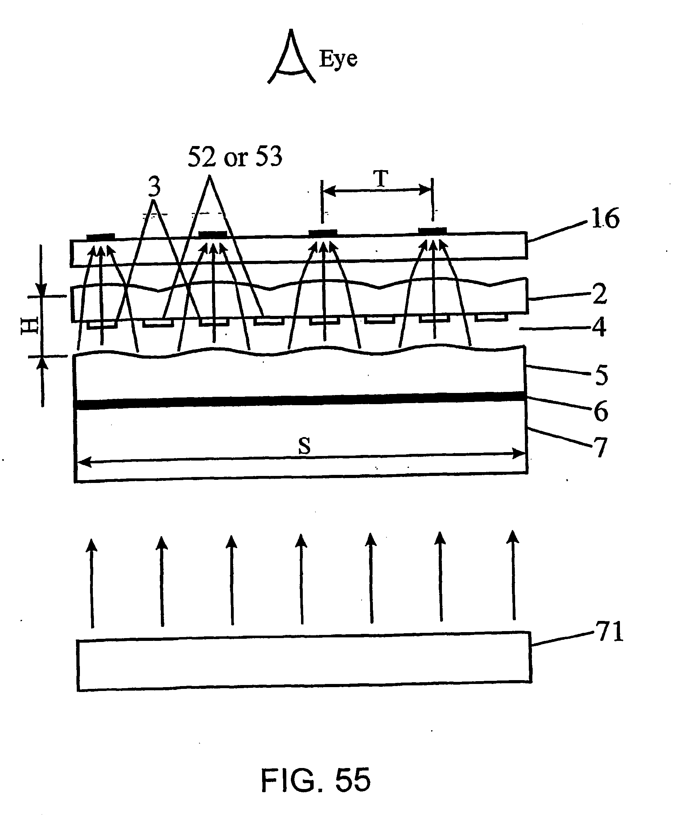

Figure 55 shows an arrangement in which the dielectric substrate (2) for the signal and additional ground electrodes is transparent and curved so as to form microlenses to focus the light from each relief protrusion to the corresponding opaque part of the diaphragm (16). There is a microlens for each protrusion.

It will be appreciated that there may be many variations of the apparatus and methods described and of the various features specified in the claims.

Furthermore, a number of the inventions may be applicable to various types of modulator such as a modulator using an gel layer with a signal electrode mounted on the layer rather than spaced form it by another layer such as air. Some inventions may be relevant to other types of modulator entirely such as liquid crystal arrangements. In those arrangements where a different modulator can be substituted, the passages defining the inventions should be taken as covering such modulators also.

**Claims**

1. An optical system including an optical element which comprises at least one cell which has two deformable dielectric layers which meet at an interface, at least one of which is a relief forming gel, a first electrode on one side of the layers and a signal electrode on the other side of the layers to which voltage pulses are to be applied in accordance with desired signals, wherein compensating means are provided so as to control the voltage difference between the first electrode and the signal electrode for a desired signal and provide the modulator with desired output characteristics, the compensating means being dynamic and comprising a feedback system which measures light output intensity for given signals.

2. An optical system as claimed in claim 1, wherein the compensating means operates by adjusting the voltage of a pulse applied in accordance with a particular signal.

3. An optical system as claimed in claim 1, wherein the compensating means operated by altering a bias voltage applied to the first electrode.

4. An optical system as claimed in claim 1, wherein the feedback system permits dynamic grey scale correction in which if the measured light intensity output for a particular signal does not match the expected intensity, then adjustments can be made dynamically to the voltage level for that particular signal level.

5. An optical system as claimed in claim 1, wherein compensation is provided for colorimetric characteristics.

6. An optical system as claimed in claim 5, wherein at different wavelengths the signal voltage is adjusted to ensure that the output intensities are the same.

7. An optical system as claimed in claim 1, wherein compensation is provided for time-frequency effects.

8. An optical system as claimed in claim 7, wherein the amplitude of the signal pulses is increased in accordance with commands from the feedback system, at frequencies where there would normally be a decline in intensity.

9. An optical system as claimed in claim 1, wherein compensation is provided for spatial-frequency effects.

10. An optical system as claimed in claim 9, wherein the amplitude of the input electrical signals is increased in accordance with commands from the feedback system, when the relief period is greater or less than a predetermined time.

11. An optical system as claimed in any preceding claim, **characterised in that** said optical element meets the following criteria:

    $0.01 d1 < d2 < d1$
    $d2 > \lambda / (20 \, | \eta1 - \eta2 |)$
    $| \eta1 - \eta2 | > 0.1$
    $t\rho > 0.01 \, \tau m$
    $0.1 d1 < L < 10 \, d1$

    in which d2 is the distance between the signal electrode (3) and the interface between the deformable layers (4, 5) ; d1 is the distance between the first electrode (6) and the interface between the deformable layers; $\lambda$ is the wavelength of light with which the optical element is used; $\eta1$ is the refractive coefficient of one of the deformable layers; $\eta2$ is the refractive coefficient of the other of the deformable layers; $t\rho$ is the duration of voltage pulses applied to the signal electrodes; $\tau m$ is the time constant of mechanical relaxation of the relief formed at the interface between the layers; and L is the minimum spatial period between electrodes in adjacent cells.

12. An optical system as claimed in any preceding claim, **characterised in that** the relief forming gel of said optical element is a polyorganosiloxane gel.

Signals emerging from the line buffer

FIG. 1

FIG. 2

FIG. 3

FIG. 4

FIG. 5

FIG. 6

EP 2 302 439 A1

FIG. 7

EP 2 302 439 A1

FIG. 8

FIG. 9

FIG. 10

EP 2 302 439 A1

FIG. 11

EP 2 302 439 A1

FIG. 12

EP 2 302 439 A1

FIG. 13

EP 2 302 439 A1

FIG. 14

EP 2 302 439 A1

FIG. 15

FIG. 16

**FIG. 17**

EP 2 302 439 A1

FIG. 18

FIG. 19

**FIG. 19** CONT'D

1
2
3
33
4
5
6
7

Record-erasure control inlet

Line bus

41

Record-erasure inlet

Column bus

8

FIG. 20

FIG. 21a

FIG. 21b

a)

b)

FIG. 22

**FIG. 23**

FIG. 24

EP 2 302 439 A1

**FIG. 25**

EP 2 302 439 A1

FIG. 26

FIG. 27

a)

b)

FIG. 28

**a)**

53

54

1

33

**b)**

# FIG. 29

a)

b)

FIG. 30

a)

b)

FIG. 31

| | | | | | |
|---|---|---|---|---|---|
| +10 V | -10 V | +23 V | -23 V | +45 V | -45 V |
| | +18 V | -18 V | +3 V | -3 V | |
| +28 V | -28 V | +14 V | -14 V | +33 V | -33 V |
| | +48 V | -48 V | +25 V | -25 V | |
| +7 V | -7 V | +37 V | -37 V | +15 V | -15 V |
| | +40 V | -40 V | +20 V | -20 V | |

FIG. 32

FIG. 33

FIG. 34

Fig. 35

a)

b)

c)

d)

Fig. 35

FIG. 36

FIG. 37

a)

b)

c)

FIG. 38

56

3 or 6

2 or 7

a)

57

3 or 6

2 or 7

b)

5

3 or 6

2 or 7

c)

# FIG. 39

FIG. 40

FIG. 41

FIG. 42

EP 2 302 439 A1

Fig. 43

FIG. 44

FIG. 45a

FIG. 45

FIG. 46

EP 2 302 439 A1

FIG. 47

FIG. 48

Eye

52 or 53

3

T

16

2

4

H

5

6

7

S

71

Fig. 49

FIG. 50

Eye

52 or 53

3

T

16

2

H

4

5

6

7

S

72

71

FIG. 51

Absorbing plates

Mirrors

52 or 53

3

T

16

2

4

H

5

6

7

S

72

Eye

71

FIG. 52

Fig. 53

FIG. 54

FIG. 55

Europäisches
Patentamt

European
Patent Office

Office européen
des brevets

# EUROPEAN SEARCH REPORT

Application Number

EP 10 01 0516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | RU 2 080 641 C1 (GUSHCHO YURIJ P) 27 May 1997 (1997-05-27) | 1-11 | INV. G02B26/02 |
| Y | * abstract; figures * ----- | 12 | G02B27/54 G02B3/14 |
| Y | ALEKHIN V A: "Characteristics of Multichannel Phase Reliefographic Light Modulators", AVTOMETRIYA, no. 1, 1990, pages 38-43, XP000997514, Allerton Press Inc, US | 12 | H04N5/74 H04N9/31 H01J29/12 |
| A | * page 44 * * page 45, paragraph 4 * ----- | 1-11 | |
| A,D | RU 2 031 624 C1 (GUSHCHO YURIJ P) 27 March 1995 (1995-03-27) * abstract; figure 1 * ----- | 1-12 | |
| A | GUSHCHO YU P ET AL: "A Large-Screen Laser Projector based on Light Modulation in a Gel-like Deformable Layer", JOURNAL OF THE MOSCOW PHYSICAL SOCIETY, vol. 7, 1997, pages 351-361, XP000997110, Allerton Press Inc, US * abstract; figures * ----- | 1-12 | |
| A | ALEKHIN V A: "Calculation of the optical Parameters of a Cylindrical Schlieren Projector", SOVIET JOURNAL OF OPTICAL TECHNOLOGY., vol. 52, no. 7, July 1985 (1985-07), pages 403-405, XP000997107, AMERICAN INSTITUTE OF PHYSICS, NEW YORK, NY., US ISSN: 0038-5514 * abstract; figure 1 * ----- -/-- | 1-12 | |

TECHNICAL FIELDS SEARCHED (IPC)

G02B
H04N
H01J
G02F

The present search report has been drawn up for all claims

| Place of search | Date of completion of the search | Examiner |
|---|---|---|
| Munich | 21 January 2011 | Ward, Seamus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**Application Number**

EP 10 01 0516

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALEKHIN V A ET AL: "Optical Characteristics of Phase-Relief Recording with Signal Recording from the Side of the Substrate", OPTICAL SPECTROSCOPY (USSR), vol. 52, no. 1, January 1982 (1982-01), pages 61-63, XP000990563, OPTICAL SOCIETY OF AMERICA., US ISSN: 0030-400X * the whole document * | 1-12 | |
| A | ALEKHIN A V ET AL: "Calculation of the Value of the Luminous Efficiency when Reproducing Relief Recordings by Schlieren Optics with Circular Irises", OPTICAL SPECTROSCOPY (USSR), vol. 43, no. 5, 1977, pages 578-581, XP000990869, OPTICAL SOCIETY OF AMERICA., US ISSN: 0030-400X * the whole document * | 1-12 | |

**TECHNICAL FIELDS SEARCHED (IPC)**

The present search report has been drawn up for all claims

| Place of search | Date of completion of the search | Examiner |
|---|---|---|
| Munich | 21 January 2011 | Ward, Seamus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 01 0516

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2011

| Patent document cited in search report | | Publication date | Patent family member(s) | Publication date |
|---|---|---|---|---|
| RU 2080641 | C1 | 27-05-1997 | NONE | |
| RU 2031624 | C1 | 27-03-1995 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4626920 A
- US 4857978 A
- US 4900136 A
- RU 2031624

- RU 2078478
- RU 2080641
- RU 9710888604

### Non-patent literature cited in the description

- Physics of Reliefography. Professor Yuri Guscho, 1999
- **GUSCHO YU. P.** Fizika Reliefografi. Nauka Publishers, 1992, 520
- Entsiklopedia Polimerov. Sovetskaya Entsiklopedia Publishers, 1972, vol. 1

- **GOLOVATENKO R.T. et al.** Proceedings of the 7th All Union Conference on Chemistry. *Production Technology and Practical Applications of Organosilicon Compounds,* 1990